# EUROPEAN PATENT APPLICATION

(11) **EP 1 795 553 A1**
(43) Date of publication of application: **13.06.2007**
(21) Application number: 05788231.8
(22) Date of filing: 29.09.2005
(51) Int. Cl.: C08J 9/02, C08J 9/06, G02B 6/00, F21V 8/00, G02F 1/13357, C08L 101/00, C08L 33/04

(54) **PROCESS FOR PRODUCING FOAM**

(30) Priority: 30.09.2004 JP 2004287977; 28.10.2004 JP 2004313890; 25.11.2004 JP 2004340884
(71) Applicant: OJI PAPER CO., LTD., Tokyo 104-0061 (JP)
(72) Inventor: TAKADA, Tomoyuki, c/o Oji Paper Co., Ltd.,, Tokyo 1358558 (JP); KOJIMA, Junya, c/o Oji Paper Co., Ltd.,, Tokyo 1358558 (JP); JINNO, Fumio, c/o Oji Paper Co., Ltd.,, Tokyo 1358558 (JP)
(74) Representative: Poulin, Gérard
(86) International application number: PCT/JP2005/018044
(87) International publication number: WO 2006/035916

(57) **Abstract**

A foam production method including an irradiating step in which an active energy beam is irradiated onto a foamable composition containing an acid generating agent, which generates an acid, or a base generating agent, which generates a base, due to an action of an active energy beam, and containing a compound which has a decomposable/foamable functional group, which decomposes and eliminates one or more kinds of volatile substances with a low boiling point by reacting with the acid or base; and a subsequent foaming step in which the foamable composition is foamed under controlled pressure in a temperature region where the volatile substances with a low boiling point are decomposed and being eliminated.

## Description

### [Technical Field]

The present invention relates to a foam where a plurality of independent cells and/or a plurality of continuous cells are formed and the production method thereof and in particular relates to a production method of microcellular foams with a cell diameter of 10 µm or less, or further, 1 µm or less which has a desired thickness, shape, and foam structure. In addition, the foam obtained by the production method of the present invention is a highly-functional microcellular foam which has not been conventionally available. That is, it relates to a material where, in addition to effects to suppress reductions in mechanical intensity of foams, effects to reduce sink/warp of fabricated products by injection molding or the like, and effects to improve dimensional stability, characteristics of foams such as thermal insulation properties, low conductivity properties, light scattering properties, light reflecting properties, screening properties, whiteness, opacity, wavelength-selective reflection properties and transmittance, lightweight properties, buoyancy, sound insulation properties, sound absorption properties, shock-absorbing properties, cushioning properties, absorbing properties, adsorptive properties, storage properties, permeability, and filterability are freely regulated.

Priority is claimed on Japanese Patent Applications No. 2004-287977, filed September 30, 2004, No. 2004-313890, filed October 28, 2004, and No. 2004-340884, filed November 25, 2004, the contents of which are incorporated herein by reference.

### [Background Art]

### Overview of foams:

Although many of the commonly used foams are formed from organic materials such as urethane foam, foamed polystyrene, and foamed polyethylene, other foams formed from inorganic materials such as porous ceramics and porous glass have also been reported. Many of the foams formed from organic materials are foamed plastics, which are based on polymeric materials, and many of them exploit their characteristics; i.e. being in the form of a liquid at the time when polymeric materials are foamed and also has a moderate viscosity (refer to "Technologies and Application Deployments of Foams and Porous Material (published by Toray Research Center, 1996)" and "Resin Foam Forming Technology" (published by Technical Information Institute Co., Ltd., 2001)).

Characteristics of foams produced by various methods include heat insulating functions, shock-absorbing and cushioning functions, lightweight and buoyant functions, and vibration-absorbing functions. These useful characteristics are utilized in a wide range of fields such as refrigerators or construction materials, food trays, thermal recording papers, packaging materials, surfboards, and audio equipment. Furthermore, when foams have interconnected cells, since the surface area thereof considerably increases, against gaseous materials or liquid materials, the adsorbing and storage functions, carrier and catalytic functions, together with permeation and filtering functions develop and are being utilized for household sponges, separation membranes for medical use, or the like.

Although most typical production methods of foamed plastics are those mixing a foaming agent in polymeric materials, a method using internal delamination, which occurs due to a stretching treatment (Japanese Unexamined Patent Application, First Publication No. Hei 11-238112), a method using phase separation, which occurs due to the difference in crosslink density among polymeric materials (Published Japanese translation No. Hei 10-504582 of PCT International Publication), or the like are also used. There are numerous reports on the methods to mix a foaming agent and they can roughly be classified into those using chemical foaming agents and those using physical foaming agents.

There are pyrolysis type and photolysis type in chemical foaming agents. Foaming agents of pyrolysis type thermally decompose and release one or more kinds of gases, for example, nitrogen, carbon dioxide, or the like. Organic compounds such as azo compounds represented by azodicarbonamide, azobisisobutylonitrile, or the like and sulfonyl hydrazides represented by p,p'-oxybisbenzenesulfonyl hydrazide or the like and inorganic compounds such as sodium bicarbonate are known as this pyrolysis type. The foaming method using a forming agent of pyrolysis type is one which mixes or dissolves the agent in polymers, which are softened in a temperature region that is equal to or below the decomposition temperature of the foaming agent, and thereafter heating the resultant mixture to a temperature region, which is equal to or above the decomposition temperature of the foaming agent and the method is widely used in practice. Foaming auxiliaries, crosslinking agents, stabilizers, or the like are also used concomitantly where necessary. Foaming agents of a photolysis type decompose due to active energy beams such as ultraviolet radiation and electron beam and release gas, for example, nitrogen or the like. Examples thereof include compounds having azido group such as p-azidobenzaldehyde and compounds having diazo group such as p-diazodiphenylamine. The foaming method using a forming agent of photolysis type is one which carries out foaming by energy-beam irradiation or by heating after irradiation. Additionally, organic compounds, which generate gas in the process of macromolecule polymerization, are also generally included in chemical foaming agents and examples of representative materials thereof include polyurethane. Polyurethane is a polymer of polyol (an oligomer having 2 or more of a -OH group, which is an alcoholic hydroxyl group) and polyisocyanate (one having 2 or more of a -NCO group, which is an isocyanate group, in the molecule) and forms a foam by generating CO₂ gas in the process of a polymerization reaction.

Examples of physical foaming agents include volatile substances with a low boiling point, for example, volatile saturated hydrocarbon substances represented by butane, pentane, or the like, together with volatile fluorohydrocarbon substances represented by fluoroethane. Many volatile substances with low boiling point which are liquid at normal temperature but volatize within a temperature region of 50 to 100°C and become gaseous are used as physical foaming agents. It is possible to form foams by impregnating these substances in polymeric materials at a temperature equal to or below the boiling temperature of the volatile substances and by heating the resultant material to a temperature equal to or above the boiling point of the physical foaming agent. In addition, it is also possible to use inert gases, which are in a gaseous state at normal pressure and temperature, for example, carbon dioxide and nitrogen as physical foaming agents. In this case, after dissolving the inert gas, which is in a gaseous state, in a polymeric material, which is controlled to a moderate pressure/temperature and which is in a melted state, by opening this system so that this mixture reaches the state of normal pressure and temperature, substances in liquid phase rapidly enter gaseous phase and expand resulting in a foam. As other foaming agents, a capsulated foaming agent, which is manufactured by making thermoplastic polymeric materials as an outer shell and sealing volatile substances with low boiling point therein, is also known.

In recent years, foams which include microcells, which are characterized by having a cell diameter of 0.1 to 10 µm and cell density of 10⁹ to 10¹⁵ cells/cm³, in other words, materials called microcellular plastics (MCP) have been proposed by N. P. Suh at the Massachusetts Institute of Technology (US Patent No. 4473665). They have gained attention as new foams having a structure which until recently has not been present, and thus intensive research on MCP has been carried out at various institutions. It has been said that due to microfoaming, effects to suppress reductions in mechanical strength due to foaming, effects to reduce sink/warp of fabricated products by injection molding or the like, and improvements in dimensional stability can be achieved.

This production method of microcellular plastics (i.e. MCP foaming method) is achieved by placing inert gas such as carbon dioxide or nitrogen as a physical foaming agent under high pressure or a supercritical state to impregnate and to saturate in plastics and thereafter, subject the resulting material to reduced pressure and heating. Since refinement of cells is accomplished by enhancing the degree of supersaturation of inert gas, which is dissolved in resin, in this MCP foaming method, a large amount of saturated impregnation is achieved by high-pressure impregnation at the time of gas impregnation and this pressure is released at the time of foaming to achieve a high degree of supersaturation. Since gas solubility generally increases as temperature decreases, for microfoaming where cell diameter is 10 µm or less, a batch method in which impregnation at normal temperature and high pressure is possible is used. In the batch method, there is a problem in that extended periods of time are required for gas impregnation until saturation is reached. For example, there is a report stating that it takes a few days in order to impregnate and to saturate carbon dioxide in polyethylene terephthalate and this poor manufacturing efficiency has been a problem. The problem seems to be solved at a glance if materials, which are readily impregnated, are used in order to reduce the impregnation time of inert gas. However, reverse to the property of being readily impregnated, those gases, which are once being impregnated, have a property of being readily released. Accordingly, even if short impregnation time is achieved, since outgassing phenomena where part of gas impregnated in a plastic under a high-pressure state is dissipated from the plastic surface in a large amount during the pressure-reducing step before foaming occurs, it becomes difficult to achieve a high degree of supersaturation, which is effective for foaming, and thus difficult to achieve cell refinement. In the batch method, a dilemma, which emanates from the basic principle, exists between cell refinement and poor manufacturing efficiency. There is also an injection method and an extrusion method available which have high manufacturing efficiency among MCP foaming methods. Since inert gas, which is in a supercritical state, is introduced to resin, which is in a melted state, in a cylinder and mixed and dissolved therein, gas impregnation time is short compared to that of a batch method and manufacturing efficiency is good since the methods are continuous. However, it is said that in these methods, it is difficult to maintain a high supersaturated state at the foaming step and to make the cell diameter in the order of a few tens of microns or less. Possible causes thereof include the amount of inert gas which can be impregnated being reduced because of high-temperature impregnation; easy generation of outgassing since foaming is carried out by going through a melted high-temperature state; and easy growth of cells due to low viscosity. From the reasons described so far, it is difficult to practically achieve foams having a thickness of 100 µm or less and cell diameter of 1 µm or less with the MCP foaming method.

The present inventors recently invented a foaming method of photoacid/base decomposition characterized in that supermicrocellular plastics (SMCP), which are microcellular foams having a cell diameter of 1 µm or less, are readily achieved and thin foams, which have a thickness of 100 µm or less, can be produced (Japanese Laid-Open Patent Application No. 2004-2812). Foamable compositions, which are foamed by active energy beam and heat, are used in this foaming method. Foamable compositions contain an acid generating agent, which generates acid, or a base generating agent, which generates base, by an action of active energy beam and further containing a decomposable/foamable compound which has a decomposable/foamable functional group which decomposes and eliminates one or more kinds of volatile substances with low boiling point by reacting with acid or base.

### (Problem 1)

In the foaming method of photoacid/base decomposition, by carrying out design of foamable compositions or control of irradiation conditions of an active energy beam and heating conditions, it seems readily possible at a glance to freely obtain foam having a desired foam structure. However, when foaming at normal pressure, there were cases where obtaining thin SMCP, which had a cell diameter of 1 µm or less and also a thickness of 100 µm or less, was difficult depending on the types of foamable compositions or where the extent of deformation due to foaming became too large and maintenance of desired foaming shape became difficult. Additionally, there were also cases where production of thick SMCP, which had a cell diameter of 1 µm or less and also a thickness of 100 µm or more, was difficult and the formation of foams on substrates and base plates; formation of foams which have a multilayer laminated structure of two or more layers; and formation of foams with complex shapes which do not have a relatively simple structure such as sheet-like, film-like, fiber-like, and rod-like shapes were difficult.

### About heterogeneous foam:

Homogeneous foams in which cell diameter or cell density is uniformly distributed have foaming characteristics of the same extent in any parts of the foam. On the other hand, in heterogeneous foams in which distributions of cell diameter and/or cell density (hereinafter may generically referred to as "cell distribution") differ depending on places, foaming characteristics also differ in response to the cell distribution. For this reason, heterogeneous foams are expected to have high functionality, which cannot be realized with homogeneous foams.

Examples of heterogeneous foams include, for example, gradient foams where cell distribution has a continuous or stepwise (discontinuous) gradient and partial foams where foamed regions and unfoamed regions are partially arranged alternately.

Heterogeneous foam is obtained by controlling the foaming conditions so that the size of cell diameter and/or degree of cell density changes depending on positions. The attempt to obtain heterogeneous foams having desired cell distribution by use of various chemical and physical foaming methods have been made conventionally.

Examples of the production methods of heterogeneous foams by a chemical foaming method include, for example, production methods described in Japanese Unexamined Patent Application, First Publication No. Hei 5-72727 and Japanese Patent Publication No. 3422384. In Japanese Unexamined Patent Application, First Publication No. Hei 5-72727, a method is disclosed in which coherent light of an argon laser is irradiated onto a polymer film impregnated with light-foamable compounds such as diazo compounds and thereby the bright section of interference fringes foams while the dark section of interference fringes remain unfoamed.

Additionally, in Japanese Patent Publication No. 3422384, a method is disclosed in which a coating layer, which contains a heat-foamable compound and photopolymerizable compound, is irradiated with ultraviolet radiation via a photomask and is heated and thereby the unirradiated part foams while the irradiated part remains unfoamed because of foaming-suppressive effect due to polymerization.

In these methods, foaming conditions are controlled by controlling exposure intensity.

In this foam production method, since the amount of impregnation of inert gas can be increased, it is possible to form numerous microcells.

Examples where heterogeneous foam is produced using this production method include production methods disclosed in Japanese Unexamined Patent Application, First Publication No. Hei 11-80408 and Japanese Laid-Open Patent Application No. 2002-363324. In Japanese Unexamined Patent Application, First Publication No. Hei 11-80408, a gradient is provided in concentration of inert-gas impregnation in the gas saturation step. In addition, in Japanese Laid-Open Patent Application No. 2002-363324, the front and back sides of the sheet impregnated with gas are heated with different temperatures in the foaming step.

### (Problem 2)

However, neither of the methods were capable of freely and flexibly controlling cell density, cell patterns, or the like.

### About light guiding body:

A light guiding body is an optical member which outputs incident light to a direction, which is different from that of the incident direction. The light guiding body is formed from a translucent molded material and is provided with a light-emitting pattern in the surface or inside thereof which causes changes in the refractive index.

As a method to obtain this light-emitting pattern, methods below are used;
(1) a method to print white dots on the surface
(2) a method to fabricate grooves and dots on the surface
(3) a method to internally disperse light-scattering particles

The light guiding body of light scattering type, which uses a method of (3) is a light guiding body whose system is to scatter incident light by inherent light-scattering particles and guide the light to the light-emitting surface. Since the surface of the light guiding body is not pattern-processed, compared to the light guiding body of a printing type, which uses the method of (1), or the light guiding body of a molding type, which uses the method of (2), a light diffusing sheet is not necessary, and thus there is a merit in reducing the number of members. Moreover, there is also a merit in lightening the light guiding body by using light-scattering particles with relatively small specific gravity.

As light-scattering particles, for example, light-scattering particles such as styrene particles described in Japanese Unexamined Patent Application, First Publication No. Hei 6-324215, silicon beads described in Japanese Unexamined Patent Application, First Publication No. Hei 10-183532, methacrylic particles described in Japanese Unexamined Patent Application, First Publication No. Hei 11-19928, and hollow beads described in Japanese Unexamined Patent Application, First Publication No. Hei 9-17221; cells formed from carbon dioxide described in Japanese Unexamined Patent Application, First Publication No. Hei 11-291374; or the like are used.

When using the light-guiding body of a light scattering type in a surface light-emitting apparatus, in order to output uniform light from the light-emitting surface, it is necessary to enhance light-scattering properties as it gets further from the light source. However, in reality, it is difficult to change particle diameter or density distribution of light-scattering particles. For this reason, the formation of the light guiding body was carried out by simply dispersing the light-scattering particles uniformly and the entire light guiding body was made into a wedge-shape so that thickness thereof increases as it gets further from the light source.

On the other hand, a light guiding body in which hollow particles are dispersed so that the hole diameter and density increases as it gets further from the light source and reducing brightness nonunifonnity has also been proposed (Japanese Unexamined Patent Application, First Publication No. Hei 6-324215).

It is necessary to seal surfaces other than the incidence plane and output plane with a reflecting plate in order to prevent light leakage of the light guiding body of light scattering type and to enhance the output efficiency thereof. Furthermore, there are also many cases where it is necessary to provide other optical members such as prisms on the output plane of light guiding bodies.

For this reason, in conventional light guiding bodies of a light scattering type, although a light diffusing sheet is not required, a plurality of optical members have been combined for use and, for example, reflecting sheets, light guide plates, prisms, or the like have been stacked to house in a box-shaped enclosure.

Light guiding bodies are mainly integrated in the edge-light type surface light-emitting apparatus. This surface light-emitting apparatus of an edge-light type is used in general illuminating devices and display devices.

For example, in a liquid-crystal display apparatus, since liquid crystals, which are display devices themselves, do not have light-emitting properties, a surface light-emitting apparatus, which is called a back light or a front light and is an edge-light type, is concomitantly used to develop displaying function. As the usage of liquid-crystal display apparatuses or the like become diverse, quality items required for light guiding bodies are also becoming strict.

In particular, since space-saving and portability of display apparatuses is regarded to be important and LED, which is used as the light source, is being downsized, thinning and lightening of light guiding bodies is strongly required. Since light guiding bodies occupy half or more of the thickness of the surface light-emitting apparatus, the contribution to thinning of the apparatus is great. In addition, for the improvement of displaying quality and power saving, improvements in light utilization efficiency are also required.

However, in the case of light guiding bodies where light-scattering particles are simply dispersed uniformly, it is necessary to form the entire light guiding body into a wedge-shape as described above. Although specifically speaking, the forming is carried out by injection molding, since the filling rate and transfer accuracy to a die deteriorates (due to limits in resin fluidity) as light guiding bodies get thinner, it was difficult to fabricate light guiding bodies with a thickness of 1 mm or less.

On the other hand, it is considered that in the light guiding body in which hollow particles are dispersed so that hole diameter and density increase as it gets further from the light source as that disclosed in Patent document 6, it is also possible to make the light guiding body into a flat-sheet shape and thinning thereof becomes easy. However, a specific dispersion method to achieve such hole diameter and density is not described in the document and in reality, there was no method to produce such light guiding bodies. (Problem 3)

In any of the methods described above, there was a limit in thinning of light guiding bodies of a light-scattering type. Moreover, when the light guiding body of a light-scattering type is configured so as to house a reflecting sheet, light guide plate, prism, or the like by laying one on another in a box-shaped enclosure, mere housing results in generation of gaps between each of the optical members and light leakage could not be suppressed completely. For this reason, there was also a limit in improving light utilization efficiency. In addition, since the light guiding body is configured using numerous members, there was also a problem of productivity.

### [Disclosure of the Invention]

### [Problems to be Solved by the Invention]

The first object to which the present invention is trying to provide a solution is to make foaming control and shape control of microcellular foams easy in the foaming method involving photoacid/base decomposition. In particular, in the microcellular foams having cell diameter of 10 µm or less and further, in those having cell diameter of 1 µm or less, the object is to readily and stably achieve foam-structure control and shape control of microcellular foams having a desired thickness, shape, and foam structure.

The second object of the present invention is, in view of the abovementioned circumstances, to provide a production method of heterogeneous foams in which cell diameters thereof are confined within a minute range while high cell density regions are also achieved and moreover, a wide range of patterns of cell distribution such as 3-dimensional cell distribution can arbitrarily and readily obtained.

The third object of the present invention is, in view of the abovementioned circumstances, to provide a light guiding body in which both thinning thereof and improvements in light utilization efficiency and productivity due to integration and constituting-member saving are achieved, a production method thereof, and a surface light-emitting apparatus, displaying device, and illuminating device which use such light guiding bodies.

### [Means for Solving the Problem]

In order to solve the above problems, the present invention adopts configurations (1) to (9) below.
(1) A foam production method which includes an irradiating step in which an active energy beam is irradiated onto a foamable composition containing an acid generating agent which generates an acid or a base generating agent which generates a base due to an action of an active energy beam, and containing a compound which has a decomposable/foamable functional group, which decomposes and eliminates one or more kinds of volatile substances with a low boiling point by reacting with the acid or base, and a subsequent foaming step in which the foamable composition is foamed under controlled pressure in a temperature region where the volatile substances with a low boiling point are decomposed and eliminated.
(2) The foam production method according to the above configuration (1) characterized by having a forming step, in which the foamable composition is formed, at the same time as the foaming step or therebefore at an arbitrary time point.
(3) The foam production method according to the above configuration (2) which has the forming step before the irradiating step.
(4) The foam production method according to the above configuration (2) which has the forming step between the irradiating step and foaming step.
(5) The foam production method according to the above configuration (2) characterized in that the foaming step and forming step are carried out at the same time.
(6) A foam production method characterized in that the method includes a foaming step in which an active energy beam is irradiated onto a foamable composition containing an acid generating agent, which generates an acid, or a base generating agent, which generates a base, due to action of an active energy beam, and containing a compound which has a decomposable/foamable functional group, which decomposes and eliminates one or more kinds of volatile substances with a low boiling point by reacting with the acid or base in a temperature region where the volatile substances with a low boiling point are decomposed and being eliminated and in which the foamable composition is foamed under controlled pressure at the same time.
(7) The foam production method according to any of the above configurations (1) to (6) characterized by having a cooling step after the foaming step while controlling the pressure.
(8) A heterogeneous foam production method characterized in that in the foam production method according to the configuration (3), any one or more of the constituents below exhibit predetermined heterogeneous distribution: (a) radiation energy imparted to a compact which is molded in a preforming step, (b) thermal energy imparted to the compact in a foam forming step, (c) concentration of decomposable/foamable functional group in the compact, and (d) concentration of an acid generating agent or a base generating agent in the compact.
(9) A light guiding body using a heterogeneous foam defined in the above configuration (8).

### [Effects of the Invention]

According to the present invention, in the microcellular foams having a cell diameter of 10 µm or less and even in those having a cell diameter of 1 µm or less, there is an advantage in that control of foam structure and shape in microcellular foams, which have a desired thickness, shape, and foam structure, can be readily and stably achieved. In addition, according to the highly-functional microcellular foams, which are obtained due to the present invention and are not conventionally available, materials can readily be produced in which, in addition to effects to suppress reductions in mechanical strength of foams, effects to reduce sink/warp of fabricated products by injection molding or the like, and effects to improve dimensional stability, characteristics of foams such as light reflection/scattering characteristics, dielectric characteristics, and insulating characteristics are flexibly controlled. Thus, according to the present invention, there is an advantage in that great contributions are made in various fields such as packaging materials or construction materials, medical materials, materials for electrical apparatus, electronic information materials, and automobile materials. Moreover, in accordance with cell distribution, in each of the above usage, it is possible to provide highly-functional microcellular foams in which distributions of foaming characteristics are generated. Furthermore, there is also an advantage in that light guiding bodies used in liquid-crystal display apparatuses can be produced in a simple producing step.

### [Brief Description of the Drawings]

Fig. 1 is an explanatory drawing of a pressure controlling method (without a gap controlling function) using a plate.
Fig. 2 is an explanatory drawing of a pressure controlling method (without a gap controlling function) using a die.
Fig. 3 is an explanatory drawing of a pressure controlling method (with a gap controlling function) using a plate.
Fig. 4 is an explanatory drawing of a pressure controlling method (with a gap controlling function) using a die.
Fig. 5 is a cross sectional picture of a foam of Example 1.
Fig. 6 is a cross sectional picture of a foam of Example 2.
Fig. 7 is an explanatory drawing of a pressure controlling method (with a cooling function) using a die.
Fig. 8 is a cross sectional picture of a foam of Comparative Example 1.
Fig. 9A is a perspective view schematically showing alternate foaming.
Fig. 9B is a graph showing the relationship between left-right position and cell diameter in the cross section of Fig. 9A.
Fig. 10A is a perspective view schematically showing alternate foaming.
Fig. 10B is a graph showing the relationship between left-right position and cell diameter in the cross section of Fig. 10A.
Fig. 11A is a perspective view schematically showing continuous gradient foaming.
Fig. 11B is a graph showing the relationship between left-right position and cell diameter in the cross section of Fig. 11A.
Fig. 12A is a perspective view schematically showing continuous gradient foaming.
Fig. 12B is a graph showing the relationship between left-right position and cell diameter in the cross section of Fig. 12A.
Fig. 13A is a perspective view schematically showing stepwise gradient foaming.
Fig. 13B is a graph showing the relationship between left-right position and cell diameter in the cross section of Fig. 13A.
Fig. 14A is a perspective view schematically showing stepwise gradient foaming.
Fig. 14B is a graph showing the relationship between left-right position and cell density in the cross section of Fig. 14A.
Fig. 15 is an explanatory drawing of a method to prepare a gradient foam using differences in the amount of radiation energy reached due to penetration depth.
Fig. 16 is an explanatory drawing of a method to prepare a partial foam using a photomask.
Fig. 17 is an explanatory drawing of a method to prepare a gradient foam using a photomask.
Fig. 18 is an explanatory drawing of a method to prepare a gradient foam using an adjustment of irradiation time due to a slide of photomask.
Fig. 19 is a schematic diagram of a gradient foam using differences between top and bottom surfaces in heating temperature.
Fig. 20 is a schematic diagram of a partial foam using a printer for thermal recording.
Fig. 21 is a schematic diagram of a gradient foam using a printer for thermal recording.
Fig. 22 is a schematic diagram of a gradient foam using a plurality of foamable compositions with a different formulation.
Fig. 23 is a schematic diagram of a partial foam using a plurality of foamable compositions with a different formulation.
Fig. 24 is a picture of a foam obtained in Example 7-1.
Fig. 25 is a picture showing a foam structure in a part subjected to ultraviolet irradiation in the foam obtained in Example 7-1.
Fig. 26 is a picture of a foam obtained in Example 7-2.
Fig. 27 is a picture of a foam obtained in Example 7-3.
Fig. 28 is a picture showing a foam structure at points a to e in the foam obtained in Example 7-3.
Fig. 29 is a graph showing a cell diameter and cell-occupying area ratio at points a to e in the foam obtained in Example 7-3.
Fig. 30 is a perspective view showing the first embodiment of a light guiding body of the present invention.
Fig. 31 is one example of a production method of the first embodiment of the light guiding body of the present invention.
Fig. 32 is another example of the production method of the first embodiment of the light guiding body of the present invention.
Fig. 33 is a perspective view showing the second embodiment of the light guiding body of the present invention.
Fig. 34 is a perspective view showing the third embodiment of the light guiding body of the present invention.
Fig. 35 is one example of a production method of the third embodiment of the light guiding body of the present invention.
Fig. 36 is a perspective view showing the fourth embodiment of the light guiding body of the present invention.
Fig. 37 is a perspective view showing the fifth embodiment of the light guiding body of the present invention.
Fig. 38 is a perspective view showing the sixth embodiment of the light guiding body of the present invention.
Fig. 39 is a perspective view showing the seventh embodiment of the light guiding body of the present invention.
Fig. 40 is a perspective view showing the eighth embodiment (surface light-emitting apparatus) of the light guiding body of the present invention.
Fig. 41 is an explanatory drawing of a production method of the eighth embodiment (surface light-emitting apparatus) of the light guiding body of the present invention.
Fig. 42 is an explanatory drawing of the production method of the eighth embodiment (surface light-emitting apparatus) of the light guiding body of the present invention.
Fig. 43 is a perspective view showing the ninth embodiment (surface light-emitting apparatus) of the light guiding body of the present invention.
Fig. 44 is an explanatory drawing of a production method of the ninth embodiment (surface light-emitting apparatus) of the light guiding body of the present invention.
Fig. 45 is an explanatory drawing of the production method of the ninth embodiment (surface light-emitting apparatus) of the light guiding body of the present invention.
Fig. 46 is a perspective view showing the tenth embodiment (surface light-emitting apparatus) of the light guiding body of the present invention.
Fig. 47 is an explanatory drawing of a production method of the tenth embodiment (surface light-emitting apparatus) of the light guiding body of the present invention.
Fig. 48 is an explanatory drawing of the production method of the tenth embodiment (surface light-emitting apparatus) of the light guiding body of the present invention.
Fig. 49 is an explanatory drawing showing a production process of an Example of the light guiding body of the present invention.

### [Brief Description of the Reference Symbols]

- P1: Foamable composition (plate shaped)
- P2: Plate for pressure control (without a gap adjusting function)
- P3: Top force of a die for pressure control
- P4: Bottom force of the die for pressure control (without a gap adjusting function)
- P5: Plate for pressure control (with a gap adjusting function)
- P6: Bottom force of the die for pressure control (with a gap adjusting function)
- P7: Functional part for gap adjustment
- P8: Cooling water introducing section
- P9: Cooling water discharging section
- 1: Compact
- 2: Photomask
- 3: Opening
- M: Matrix
- B: Cell
- 10: Light guiding section
- 13: Low-foamed region
- 14: High-foamed region
- 15: Intermediate-foamed region

### [Best Modes for Carrying Out the Invention]

The production method of the present invention includes a step to irradiate an active energy beam onto a foamable composition and a step to foam the foamable composition by controlling pressure in the temperature region where volatile substances with a low boiling point are decomposed and eliminated from the foamable composition. By controlling pressure when volatile substances with a low boiling point are decomposed and being eliminated from the foamable composition to foam, it becomes possible to readily control foam structure and shape of foams.

In the present invention, as a relationship between the step of irradiating an active energy beam and step of foaming the foamable composition under controlled pressure, there are cases where the foaming step comes after the irradiating step and cases where irradiation is carried out simultaneously in the foaming step. The present invention can include a forming step in order to stably obtain microcellular foams, which have desired thickness, shape, and foaming structure. The forming step can be classified into a preforming step and a foam forming step. The preforming step includes a forming step provided before and/or after the step to irradiate active energy beam and a step to form during the irradiation, and is a step to form a foamable composition, which is a resin before being foamed. The foam forming step is a step to form while foaming by controlling pressure in a temperature region where volatile substances with a low boiling point are decomposed and eliminated, or a step to form resin, which is already being foamed.

In the foaming step, since the rate of reaction, in which volatile substances with a low boiling point are decomposed and eliminated, increases as the temperature imposed on foamable composition increases, cell refinement becomes easy. However, when glass transition temperature of foamed resin is low and if pressure is released after the foaming step while temperature is still high, there are cases where microcells cannot be maintained due to the growth and integration of each cells resulting in the rapid enlargement of cell diameter or cases where foams with desired shape cannot be obtained due to the increase of deformation magnification because of foaming. In such cases, it is more preferable to include a step for cooling while controlling pressure after the pressure-controlled foaming step. Examples of cooling methods include a method to cool due to water-cooling by making a structure in which cooled water can be run, in a pressing machine at sites where pressure and heat are applied and in a forming die thereof, and an electrically-forced cooling method using Peltier devices.

Steps included in the foam production method of the present invention are not limited to these and various steps other than those mentioned above can be added at a desired point where appropriate. For example, steps such as a drawing step, washing step, drying step, and relaxing step may be introduced where appropriate. The production method of the present invention is composed of combinations of these steps and it may also be possible to discontinuously or continuously combine each of the steps or to make at least two or more steps as a simultaneous step. Either a batch method or a continuous method may be adopted. Moreover, in the foam production method of the present invention, since it is possible to generate an intensity distribution of active energy, intensity distribution of thermal energy, concentration distribution of foamable composition, or the like, control of cell distribution according to cell diameter and/or cell density will be arbitrarily variable and foams having various cell distribution patterns can also be achieved. Although specific examples of each of the step are described below, the present invention is not limited to them.

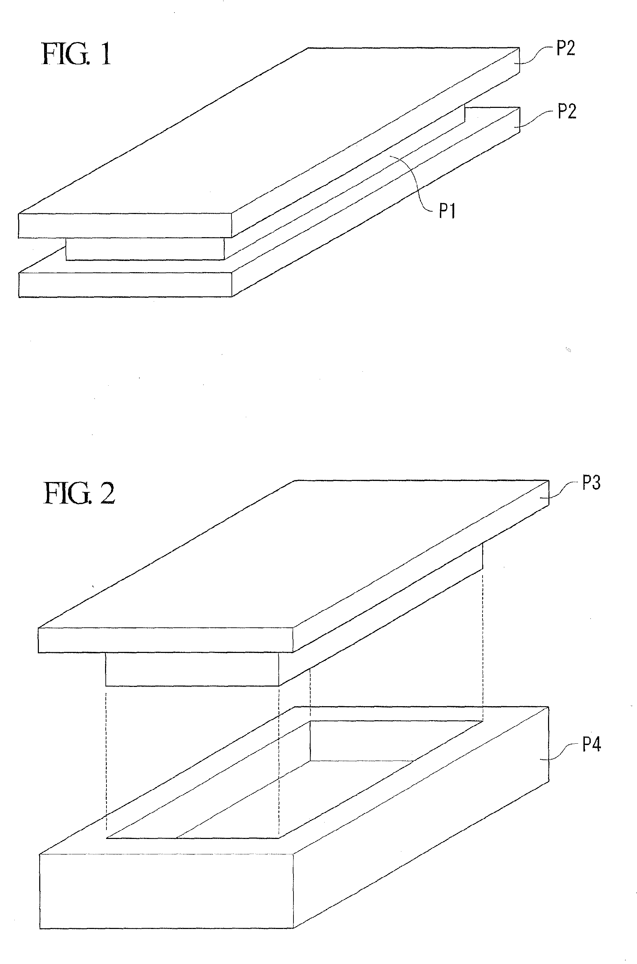

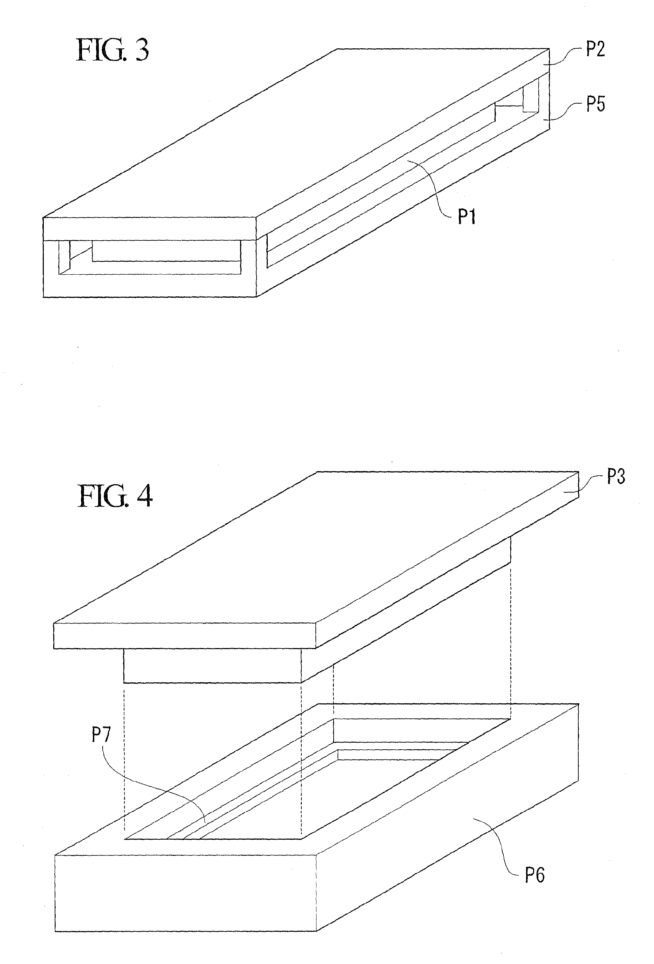

First of all, a step to foam a foamable composition by controlling pressure in a temperature region where volatile substances are decomposed and eliminated from the foamable composition will be described. Examples of pressure controlling methods include a partial opposing-surface pressure controlling method where pressure is controlled by applying pressure only from two opposing surfaces using 2 pieces of plates as shown in Fig. 1 and the entire-surface pressure controlling method where pressure is applied from entire surface using a die as shown in Fig. 2. In addition, among the pressure controlling methods, there are types where pressure can be varied in response to a force without having a gap controlling function as in Figs 1 and 2, types which have a gap controlling function as in Figs 3 and 4, or the like. Examples of entire-surface pressure controlling methods include a pressure controlling method by injecting fluids such as gases, liquids, and melts in a closed mold, pressure controlling method by foam self-expanding force and pressure of generated gas due to the foaming of foamable compositions, pressure controlling method by the thermal expansion force of molds and/or mold contents, or the like.

The preferable range of applied pressure is 0.1 MPa to 20 MPa and particularly preferably 0.5 MPa to 10 MPa.

In order to achieve a temperature region where volatile substances with a low boiling point are decomposed and eliminated, it is possible to heat by use of a heater or when heat is used in the previous step, afterheat therefrom can be used. The temperature region where volatile substances with a low boiling point are decomposed and eliminated from foamable compositions refer to a temperature region having a range, which is higher than the minimum temperature where the volatile substances with a low boiling point are decomposed and eliminated, and which is lower than the decomposition temperature of resins after the volatile substances with a low boiling point are decomposed and being eliminated (that is, foamed resins) or lower than the temperature where various physical properties such as strength of foamed resins are not impaired. This temperature region varies depending on the types of foamable compositions. For example, in the case of acrylic foamable compositions, the minimum temperature for decomposition/elimination is approximately 75 to 85°C and decomposition temperature of foamed resin is approximately 180 to 200°C whereas in the case of styrene-based foamable compositions, the minimum temperature for decomposition/elimination is approximately 65 to 80°C and the decomposition temperature of the foamed resin is approximately 160 to 180°C. It seems at a glance that for cell refinement, a higher temperature during foaming is preferable since the rate of decomposition/elimination of volatile substances with a low boiling point increases and the degree of supersaturation is likely to increase. However, as the temperature increases, resin viscosity reduces and cells are likely to grow, integrate, and become enormous. Accordingly, there exists a temperature region appropriate for foaming. Although this region differs depending on the types of foamable compositions, it is 65 to 200°C, preferably 90 to 180°C, and more preferably 100 to 160°C.

Although heaters are not particularly limited, examples thereof include those which can be heated by induction heating, resistance heating, dielectric heating (and microwave heating), and infrared heating. More specific examples include infrared dryers of an electric type or a gas type which use radiant heat, roll heaters using electromagnetic induction, oil heaters using an oil medium, electric heaters, and hot-air driers using hot-air from these aforementioned devices. In the case of induction heating and infrared heating, since they adopt an internal heating method which directly heats the inside of materials, uniform heating can be carried out instantly compared to the external heating method adopted by hot-air driers. However, there is a need to appropriately select the materials of plates or dies used in the pressure control. In the case of dielectric heating, radiofrequency energy having a frequency of 1 MHz to 300 MHz (wavelength of 30 m to 1 m) is used. Radiofrequency energy having a frequency of 6 MHz to 40 MHz is used in many cases. Although microwaves having a frequency of 300 MHz to 300 GHz (wavelength of 1 m to 1 mm) are used especially in microwave heating among dielectric heating, microwave having a frequency of 2450 MHz or 915 MHz (same as that used in microwave ovens) is used in many cases. In the case of infrared heating, electromagnetic waves having a wavelength of 0.76 to 1000 µm, which is in the infrared region, are used. Although the optimal zone of the wavelength, which is selected depending on the situation, changes due to the surface temperature of heaters, the infrared absorption spectrum of materials which are subjected to heating, or the like, a waveband of preferably 1.5 to 25 µm, more preferably 2 to 15 µm can be used.

Next, the step to irradiate an active energy beam onto foamable compositions is described. Examples of an active energy beam used in the present invention include ionizing radiations such as electron beam, ultraviolet radiation, visible radiation, and gamma rays. They may hereinafter be referred to as radiations in some cases. Among them, it is preferable to use electron beam and ultraviolet radiation.

When using electron beam irradiation, in order to achieve sufficient penetrating power, an electron beam accelerator whose accelerating voltage is preferably 30 to 1000 kV, more preferably 30 to 300 kV, is used and it is preferable to control an absorbed dose in one-pass within a range of 0.5 to 20 Mrad (1 rad = 0.01 Gy). When accelerating voltage or the amount of electron beam irradiation is lower than the abovementioned range, the penetrating power of electron beam will be insufficient and cannot sufficiently be penetrated to reach the inside of a compact. In addition, when accelerating voltage or the amount of electron beam irradiation is higher than the abovementioned range, not only energy efficiency deteriorates but also the strength of the achieved compact will be insufficient, resulting in the decomposition of resin and additives contained therein and quality of the achieved foam will become unsatisfactory at times. As an electron beam accelerator, for example, any of those of electrocurtain system, scanning type, double scanning type, or the like may be used. At the time of electron beam irradiation and when the oxygen concentration of the irradiation atmosphere is high, the generation of acid or base and/or curing of curable/decomposable compounds is prevented at times. For this reason, it is preferable to replace the air of irradiation atmosphere with inert gases such as nitrogen, helium, and carbon dioxide. The oxygen concentration of the irradiation atmosphere is preferably 1000 ppm or less and in order to achieve more stable electron beam energy, it is more preferable to suppress the oxygen concentration to 500 ppm or less.

In the case of ultraviolet-ray irradiation, ultraviolet lamps, which are generally used in the fields of semiconductors/photoresists and ultraviolet-ray curing, can be used. Examples of general ultraviolet lamps include, for example, halogen lamps, halogen heater lamps, xenon short arc lamps, xenon flash lamps, extra-high pressure mercury lamps, high pressure mercury lamps, low pressure mercury lamps, medium pressure mercury lamps, deep UV lamps, metal halide lamps, rare gas fluorescent lamps, krypton arc lamps, and excimer lamps. In recent years, Y-ray lamps, which emit ultra-short wavelength rays (having a peak at 214 nm), have also been used. There are also lamps of an ozone-less type which generate little ozone among these lamps. These ultraviolet rays may be scattered light or parallel light, which is highly progressive. In order to form partial foam with good accuracy, parallel light is preferable. Additionally, various lasers such as ArF excimer lasers, KrF excimer lasers, and YAG lasers provided with a harmonics unit, which includes a nonlinear optical crystal, as well as ultraviolet light-emitting diodes, can also be used for ultraviolet-ray irradiation. Although the emission wavelength of the ultraviolet lamps, lasers, or ultraviolet light-emitting diodes is not limited as long as the foamability of foamable compositions is not deteriorated, the emission wavelength, which makes a photoacid generating agent or photobase generating agent efficiently generate acid or base, is preferable. In other words, the emission wavelength, which overlaps with the photosensitive wavelength region of the photoacid generating agent or photobase generating agent used, is preferable. Moreover, the emission wavelength which overlaps with the local-maximum absorption wavelength or the maximum absorption wavelength in the photosensitive wavelength regions of these generating agents is more preferable since generation efficiency is likely to be enhanced. The irradiation intensity of the ultraviolet radiation energy is appropriately determined depending on the foamable composition. Productivity can be enhanced when ultraviolet lamps having a high irradiation intensity and represented by various mercury lamps, metal halide lamps, or the like, are used, and their irradiation intensity (lamp output) is preferably 30 W/cm or more in the case of a long arc lamp. The total irradiated light quantity (J/cm²) of the ultraviolet radiation is an integration of irradiation time with the energy irradiation intensity and is appropriately determined depending on the foam composition and the desired cell distribution. It may also be set in accordance with the extinction coefficients of the acid generating agent and base generating agent. In terms of stable and continuous production, a range of 1.0 mJ/cm² to 20 J/cm² is preferable. When using an ultraviolet lamp, since the irradiation intensity thereof is high, the irradiation time can be shortened. When using an excimer lamp or an excimer laser, since the light is almost a single light beam although irradiation intensity thereof is weak, it is possible to achieve higher generation efficiency and foamability as long as the emission wavelength is optimized to the photosensitive wavelength of the generating agent. When the irradiated light quantity is increased, there are cases where foamability may be prevented due to heat generation depending on the ultraviolet lamp. In such cases, cooling treatment using a cold mirror or the like can be carried out.

The forming step which is included in the production method of the present invention will be described. For the forming method used in the forming step, coating molding, extrusion molding, injection molding, cast molding, press molding, or the like can be selected depending on the desired shape to be formed. The shape of resins obtained in the forming step is not particularly limited and appropriately determined depending on the intended use of foams. Examples thereof include sheet-like resins (including film-like resins), fiber-like resins, rod-like resins, and resins having other desired shapes. Sheet-like resins can be a singular resin, a sheet layer adhering onto a supporting body, or a structure where a plurality of resins are laminated.

Examples of coating molding include a method to obtain a sheet layer formed from a foamable composition on a supporting body by coating the foamable composition onto the supporting body using a coating head and thereafter, removing solvent content using a dryer if the foamable composition is a solution diluted with a solvent or the like. In this case, by separating the sheet layer from the supporting body, it is also possible to obtain a singular sheet-like resin formed from the foamable composition. Examples of coating methods include a bar coating method, air doctor coating method, blade coating method, squeeze coating method, air knife coating method, roll coating method, gravure coating method, transfer coating method, comma coating method, smoothing coating method, microgravure coating method, reverse roll coating method, multiroll coating method, dip coating method, rod coating method, kiss coating method, gate roll coating method, falling curtain coating method, slide coating method, fountain coating method and slit die coating method. Examples of the supporting bodies include papers, synthetic papers, plastic sheets, metal sheets, metal deposited sheets, and these may be used alone or they may be laminated onto one another. Examples of the plastic resin sheets include general-purpose plastic resin sheets such as polystyrene resin sheets, polyethylene, polypropylene and other polyolefin resin sheets, and polyethylene terephthalate and other polyester resin sheets, as well as engineering plastic sheets such as polyimide resin sheets, ABS resin sheets, and polycarbonate resin sheets. Examples of metals which constitute the metal sheets include aluminum and copper. Examples of the metal deposited sheets include aluminum-deposited sheets, gold-deposited sheets, and silver-deposited sheets.

Examples of extrusion molding methods include a general extrusion molding method using a screw-shaped extrusion shaft and ram extrusion molding method using a piston-shaped extrusion shaft.

Examples of injection molding methods include, in addition to usual injection molding methods, a vacuum filling molding method, injection compression molding method, high-speed vacuum filling molding method, gas absorption/melt molding method, die hot-cold heat cycle molding method, low-pressure/low-speed filling molding method, injection press molding method, and stack-mold molding method. Example of the methods for thin wall molding and high transfer molding of minute shapes which are recent trends also include an insulated runner molding method, ultrahigh speed injection molding method which has a injection rate of 1000 to 2000 mm/sec, and an injection molding method using a supercritical fluid where inert gas such as carbon dioxide or nitrogen is dissolved in a molten resin under supercritical conditions to form without foaming.

Examples of cast molding include a method to obtain prism sheet-like molded material by casting a foamable composition in liquid form which contains an active energy beam-curable monomer in a die of prism sheet-shape and thereafter curing the composition by irradiating an active energy beam and finally removing the die. By appropriately selecting irradiation conditions such as light source and wavelength of active energy beam, it is also possible to carry out resin curing and acid/base generations from acid/base generating agents simultaneously.

As described earlier, the forming step can be classified into the preforming step where a foamable composition, which is a resin before being foamed, is formed and the foam forming step where already foamed resins are formed. In the preforming step, it is possible to use a method to directly form a foamable composition, which is a raw material, into the final shape of foams or shapes close to them and it is also possible to use a method to form in multiple stages by preliminarily forming into relatively simple shapes such as sheet-like, rod-like, pellet-like, and powder-like and thereafter forming them into the final shape or shapes close to them. In either method, the aforementioned molding methods can appropriately be used.

The foam forming steps include a step to form while foaming a foamable composition by controlling pressure in the temperature region where volatile substances with a low boiling point are decomposed and eliminated, and a step to form foams after the foaming step. In the former step where molding is carried out during foaming, in-mold injection molding method and a method to carry out the irradiation of an active energy beam and control of temperature and pressure simultaneously may also be used other than the aforementioned molding methods.

Examples of the foam forming method using in-mold injection molding method include a method which involves forming of a foamable composition layer of 50 µm on an Ag-deposited sheet by coating molding, setting the sheet irradiated with an active energy beam in a predetermined position in a die, and carrying out injection molding on a resin, which is formed solely from the compound having the decomposable functional group in the foamable composition, into the die. The obtained foams will become optical members having a thin-wall foam layer and unfoamed resin layer on the Ag-deposited sheet. The foamable composition on the Ag-deposited sheet foam in a condition where heat and pressure are applied due to the temperature of molten resins injected from a cylinder. Although the die for in-mold injection molding used in the foam forming step is not particularly limited, it is preferable to use insulated dies having high thermal insulation properties rather than dies made of steel, aluminum alloys, or stainless steel which are usually used. Examples of the insulated dies include those which are called insulated dies where a low thermal conducting material is embedded in the die surface. Examples of the embedded materials include polyimide, HDPE, glass and quartz glass, phenol resin, and Zr ceramics. The reason why use of the insulated dies is preferable is as follows. Since conventional dies have high thermal conductivity, it is difficult to increase die temperature even when molten resins contact the die and the temperature region where volatile substances with a low boiling point are decomposed and being eliminated is hard to achieve. On the other hand, when the insulated dies are used, it is easy to increase die temperature because of its low thermal conductivity, and thus appropriate foaming temperature regions are readily achieved. Although cooling performance tends to deteriorate due to the use of the insulated dies, no such deteriorations result in practical problems.

Examples of methods to carry out the irradiation of active energy beam and control of temperature and pressure simultaneously in a die include one where an active energy beam is irradiated from the periphery of the die by using quartz glass in the die and in addition to the control of heat and pressure which are applied. Additionally, there are also methods such as a method where quartz glass is installed in a part of the cylinder used in injection molding and irradiating an active energy beam onto the resin in the cylinder from outside the cylinder, and perform injection molding into the die to carry out foaming and molding at the same time.

Although the molding methods described so far can appropriately be used in the step to mold foams after the foaming step, molding while carrying out foaming is more preferable than molding after the foaming step. This is because it is possible to avoid destructing the foam structure, which is formed by putting effort, and it is also possible to improve the transfer efficiency of the die face by the internal pressure due to foaming.

By forming lamination in the forming step, foams having a laminated structure, which is composed of at least two or more layers, can be obtained. Each of the layer in laminations may be a foamed layer or an unfoamed layer. It is possible to use lamination forming in order to obtain foams where cell distribution is arbitrarily changed. The lamination forming can be made by irradiating an active energy beam onto a laminated compact, which is provided so that the concentration distribution of foamable composition changes, and foam the composition by controlling pressure in the temperature region where volatile substances with a low boiling point are decomposed and eliminated. Examples of the laminated compacts where the concentration of foamable compositions changes include a material in which layers having a different mixing ratio of decomposable compound and photoacid generating agent (or photobase generating agent) are laminated, and a material in which layers composed of foamable compositions and layers composed of non-foamable compositions are laminated.

The foamable compositions of the present invention will be described below. The foamable compositions are compositions which develop their foamability when irradiated with an active energy beam and subjected to heat treatment. As such foamable compositions, compositions which have at least both the following two components are desirable. One is an acid generating agent which generates an acid or a base generating agent which generates a base due to the action of the active energy beam and another is a decomposable/foamable compound which reacts with the generated acid or base and decomposes and eliminates therefrom one or more types of volatile substances with a low boiling point.

### Acid generating agents and base generating agents

Those so-called photoacid generating agents or photobase generating agents, which are generally used in chemically amplified photoresists and cationic photopolymerization or the like, can be used for the acid generating agents or base generating agents used in foamable composition, which is used in the present invention.

Examples of the photoacid generating agents which are favorable for the present invention include PF₆-, AsF₆-, SbF₆-, and CF₃SO₃-salts of aromatic or aliphatic onium compounds, which are selected from (1) diazonium salt-based compounds, (2) ammonium salt-based compounds, (3) iodonium salt-based compounds, (4) sulfonium salt-based compounds, (5) oxonium salt-based compounds, and (6) phosphonium salt-based compounds. Although specific examples thereof are listed below, the photoacid generating agents are not limited to those shown examples.

Bis(phenylsulfonyl)diazomethane, bis(cyclohexylsulfonyl)diazomethane, bis(tert-butylsulfonyl)diazomethane, bis(p-methylphenylsulfonyl)diazomethane, bis(4-chlorophenylsulfonyl)diazomethane, bis(p-tolylsulfonyl)diazomethane, bis(4-tert-butylphenylsulfonyl)diazomethane, bis(2,4-xylylsulfonyl)diazomethane, bis(cyclohexylsulfonyl)diazomethane, benzoylphenylsulfonyl diazomethane,

trifluoromethanesulfonate, trimethylsulfonium trifluoromethanesulfonate, triphenylsulfonium trifluoromethanesulfonate, triphenylsulfonium hexafluoraantimonate, 2,4,6-trimethylphenyldiphenylsulfonium trifluoromethanesulfonate, p-tolyldiphenylsulfonium trifluoromethanesulfonate, 4-phenylthiophenyldiphenylsulfonium hexafluorophosphate, 4-phenylthiophenyldiphenylsulfonium hexafluoroantimonate, 1-(2-naphthoylmethyl)thiolanium hexafluoroantimonate, 1-(2-naphthoylmethyl)thiolanium trifluoromethanesulfonate, 4-hydroxy-1-naphthyldimethylsulfonium hexafluoroantimonate, 4-hydroxy-1-naphthyldimethylsulfonium trifluoromethanesulfonate, (2-oxo-1-cyclohexyl)(cyclohexyl)methylsulfonium trifluoromethanesulfonate, (2-oxo-1-cyclohexyl)(2-norbornyl)methylsulfonium trifluoromethanesulfonate, diphenyl-4-methylphenylsulfonium perfluoromethanesulfonate, diphenyl-4-tert-butylphenylsulfonium perfluorooctanesulfonate, diphenyl-4-methoxyphenylsulfonium perfluorobutanesulfonate,

diphenyl-4-methylphenylsulfonium tosylate, diphenyl-4-methoxyphenylsulfonium tosylate, diphenyl-4-isopropylphenylsulfonium tosylate, diphenyliodonium, diphenyliodonium tosylate, diphenyliodonium chloride, diphenyliodonium hexafluoroarsenate, diphenyliodonium hexafluorophosphate, diphenyliodonium nitrate, diphenyliodonium perchlorate, diphenyliodonium trifluoromethanesulfonate,

bis(methylphenyl)iodonium trifluoromethanesulfonate, bis(methylphenyl)iodonium tetrafluoroborate, bis(methylphenyl)iodonium hexafluorophosphate, bis(methylphenyl)iodonium hexafluoroantimonate, bis(4-tert-butylphenyl)iodonium trifluoromethanesulfonate, bis(4-tert-butylphenyl)iodonium hexafluorophosphate, bis(4-tert-butylphenyl)iodonium hexafluoroantimonate, bis(4-tert-butylphenyl)iodonium perfluorobutanesulfonate,

2-methyl-4,6-bis(trichloromethyl)-1,3,5-triazine, 2,4,6-tri(trichloromethyl)-1,3,5-triazine, 2-phenyl-4,6-ditrichloromethyl-1,3,5-triazine, 2-(p-methoxyphenyl)-4,6-ditrichloromethyl-1,3,5-triazine, 2-naphthyl-4,6-ditrichloromethyl-1,3,5-triazine, 2-biphenyl-4,6-ditrichloromethyl-1,3,5-triazine, 2-(4'-hydroxy-4-biphenyl)-4,6-ditrichloromethyl-1,3,5-triazine, 2-(4'-methyl-4-biphenyl)-4,6-ditrichloromethyl-1,3,5-triazine, 2-(p-methoxyphenylvinyl)-4,6-bis(trichloromethyl)-1,3,5-triazine, 2-(4-chlorophenyl)-4,6-bis(trichloromethyl)-1,3,5-triazine, 2-(4-methoxyphenyl)-4,6-bis(trichloromethyl)-1,3,5-triazine, 2-(4-methoxy-1-naphthyl)-4,6-bis(trichloromethyl)-1,3,5-triazine, 2-(benzo[d][1,3]dioxolan-5-yl)-4,6-bis(trichloromethyl)-1,3,5-triazine, 2-(4-methoxystyryl)-4,6-bis(trichloromethyl)-1,3,5-triazine, 2-(3,4,5-trimethoxystyryl)-4,6-bis(trichloromethyl)-1,3,5-triazine, 2-(3,4-dimethoxystyryl)-4,6-bis(trichloromethyl)-1,3,5-triazine, 2-(2,4-dimethoxystyryl)-4,6-bis(trichloromethyl)-1,3,5-triazine, 2-(2-methoxystyryl)-4,6-bis(trichloromethyl)-1,3,5-triazine, 2-(4-butoxystyryl)-4,6-bis(trichloromethyl)-1,3,5-triazine, 2-(4-pentyloxystyryl)-4,6-bis(trichloromethyl)-1,3,5-triazine,

2,6-di-tert-butyl-4-methylpyrylium trifluoromethanesulfonate, trimethyloxonium tetrafluoroborate, triethyloxonium tetrafluoroborate, N-hydroxyphthalimide trifluoromethanesulfonate, N-hydroxynaphthalimide trifluoromethanesulfonate, (α-benzoylbenzyl)p-toluenesulfonate, (β-benzoyl-β-hydroxyphenethyl)p-toluenesulfonate, 1,2,3-benzenetriyl trismethanesulfonate, (2,6-dinitrobenzyl)p-toluenesulfonate, (2-nitrobenzyl)p-toluenesulfonate, and (4-nitrobenzyl)p-toluenesulfonate. Among these, iodonium salt based compounds and sulfonium salt based compounds are preferable.

Moreover, in addition to the aforementioned onium compounds, sulfonated products which optically generate sulfonic acid due to the irradiation of an active energy beam such as 2-phenylsulfonylacetophenone, halogenides which optically generate hydrogen halides due to the irradiation of an active energy beam such as phenyl tribromomethyl sulfone and 1,1-bis(4-chlorophenyl)-2,2,2-trichloroethane, as well as ferrocenium compounds which optically generate phosphoric acid due to the irradiation of an active energy beam such as bis(cyclopentadienyl)ferrocenium hexafluorophosphate and bis(benzyl)ferrocenium hexafluorophosphate, can also be used.

Furthermore, the following imide compound derivatives which are capable of generating acid can also be used: N-(phenylsulfonyloxy)succinimide, N-(trifluoromethylsulfonyloxy)succinimide, N-(10-camphorsulfonyloxy)succinimide, N-(trifluoromethylsulfonyloxy)phthalimide, N-(trifluoromethylsulfonyloxy)-5-norbornene-2,3-dicarboxyimide, N-(trifluoromethylsulfonyloxy)naphthalimide, and N-(10-camphorsulfonyloxy)naphthalimide.

Preferable examples of the photobase generating agents in the present invention include: (1) oxime ester compounds, (2) ammonium compounds, (3) benzoin compounds, (4) dimethoxybenzyl urethane compounds, and (5) orthonitrobenzyl urethane compounds. These compounds generate amines as bases due to the irradiation of an active energy beam. Additionally, base generating agents which generate ammonia or hydroxy ions due to the action of light may also be used. These agents can be selected from, for example, N-(2-nitrobenzyloxycarbonyl)piperidine, 1,3-bis[N-(2-nitrobenzyloxycarbonyl)-4-piperidyl]propane, N,N'-bis(2-nitrobenzyloxycarbonyl)dihexylamine, and O-benzylcarbonyl-N-(1-phenylethylidene)hydroxylamine. Moreover, compounds which generate a base due to heating may also be used concomitantly with the abovementioned photobase generating agents.

In addition, in order to shift or expand the wavelength range of the active energy beam of the photoacid generating agent or photobase generating agent, a photosensitizer may be used concomitantly where appropriate. Examples of the photosensitizers for onium salt compounds include acridine yellow, benzoflavin and acridine orange.

As a method for suppressing the added amount of acid generating agent or base generating agent and/or light irradiation energy to a minimum while producing the required acid or base, an acid proliferating agent or base proliferating agent (refer to K. Ichimura et al., Chemistry Letters, 551-552 (1995), Japanese Unexamined Patent Application, First Publication No. Hei 8-248561, Japanese Laid-Open Patent Application No. 2000-330270) can be used together with the acid generating agent or base generating agent. Although acid proliferating agent is thermodynamically stable at or close to normal temperatures, they decompose due to acid and generate strong acids themselves to considerably accelerate acid catalytic reactions. By using this reaction, it is also possible to improve the generation efficiency of acid or base and thereby control the foam formation rate and/or foam structure.

### Decomposable and Foamable Compound:

A decomposable/foamable compound (hereinafter abbreviated as "decomposable compound") used in the foamable composition of the present invention decomposes and eliminates one or more types of volatile substances having a low boiling point (volatile compounds having low boiling point) by reacting with an acid or a base. In other words, a decomposable functional group, which may generate a volatile substance having a low boiling point, has to be introduced in this decomposable compound in advance. A low boiling point refers to a temperature which is lower than the temperature where a substance gasifies at the time of foaming. The boiling point of the substances having a low boiling point is normally 100°C or less and preferably be at normal temperature or less. Examples of the substances having a low boiling point include isobutene (boiling point: -7°C), carbon dioxide (boiling point: -79°C) and nitrogen (boiling point: -196°C). Examples of the decomposable functional groups which react with acid include tert-butyl groups, tert-butyloxycarbonyl groups, keto acids and keto acid ester groups, whereas examples of the decomposable functional groups which react with base include urethane groups and carbonate groups. By reacting with an acid, tert-butyl groups generate isobutene gas; tert-butyloxycarbonyl groups generate isobutene gas and carbon dioxide; keto acid sites generate carbon dioxide; and keto acid esters such as keto acid tert-butyl groups generate carbon dioxide and isobutene. By reacting with a base, urethane groups and carbonate groups generate carbon dioxide gas. As described so far, each of these gases are eliminated from the decomposable compound. Examples of usable forms of acid decomposable compounds, which decompose by reacting with acids, or of base decomposable compounds, which decompose by reacting with bases, include monomers, oligomers or polymers, and they can be classified into, for example, the groups of compounds described below.
(1) Non-curable, low molecular weight decomposable compounds
(2) Curable, monomeric decomposable compounds
(3) Polymeric decomposable compounds

As an example represented by a curable, monomeric decomposable compound, in the case of an active energy beam-curable compound, which contains a vinyl group so that a polymerization reaction occurs when irradiated with an active energy beam, uniform formation of microcells is easy and foam, which is excellent in terms of strength, can be obtained. Although specific examples of the decomposable compounds are listed below, the compounds are not limited to them.

### (1)-a Non-curable, low molecular weight decomposable compounds

### <Acid decomposable compounds>

1-tert-butoxy-2-ethoxyethane, 2-(tert-butoxycarbonyloxy)naphthalene, N-(tert-butoxycarbonyloxy)phthalimide, and 2,2-bis[p-(tert-butoxycarbonyloxy)phenyl]propane, or the like

### (1)-b Non-curable, low molecular weight decomposable compounds

### <Base decomposable compounds>

N-(9-fluorenylmethoxycarbonyl)piperidine, or the like

### (2)-a Curable monomeric decomposable compounds

### <Acid decomposable compounds>

tert-butyl acrylate, tert-butyl methacrylate, tert-butoxycarbonylmethylacrylate, 2-(tert-butoxycarbonyl)ethylacrylate, p-(tert-butoxycarbonyl)phenylacrylate, p-(tert-butoxycarbonylethyl)phenylacrylate, 1-(tert-butoxycarbonylmethyl)cyclohexylacrylate, 4-tert-butoxycarbonyl-8-vinylcarbonyloxy-tricyclo[5.2.1.02,6]decane, 2-(tert-butoxycarbonyloxy)ethylacrylate, p-(tert-butoxycarbonyloxy)phenylacrylate, p-(tert-butoxycarbonyloxy)benzylacrylate, 2-(tert-butoxycarbonylamino)ethylacrylate, 6-(tert-butoxycarbonylamino)hexylacrylate, p-(tert-butoxycarbonylamino)phenylacrylate, p-(tert-butoxycarbonylamino)benzylacrylate, p-(tert-butoxycarbonylaminomethyl)benzylacrylate, (2-tert-butoxyethyl)acrylate, (3-tert-butoxypropyl)acrylate, (1-tert-butyldioxy-1-methyl)ethylacrylate, 3,3-bis(tert-butyloxycarbonyl)propylacrylate, 4,4-bis(tert-butyloxycarbonyl)butylacrylate, p-(tert-butoxy)styrene, m-(tert-butoxy)styrene, p-(tert-butoxycarbonyloxy)styrene, m-(tert-butoxycarbonyloxy)styrene, acryloylacetate, methacryloylacetate, tert-butylacryloylacetate, tert-butylmethacryloylacetate, N-(tert-butoxycarbonyloxy) maleimide, or the like

### (2)-b Curable, monomeric decomposable compounds

### <Base decomposable compounds>

4-[(1,1-dimethyl-2-cyano)ethoxycarbonyloxy]styrene,
4-[(1,1-dimethyl-2-phenylsulfonyl)ethoxycarbonyloxy]styrene,
4-[(1,1-dimethyl-2-methoxycarbonyl)ethoxycarbonyloxy]styrene,
4-(2-cyanoethoxycarbonyloxy)styrene,
(1,1-dimethyl-2-phenylsulfonyl)ethylmethacrylate,
(1,1-dimethyl-2-cyano)ethylmethacrylate, or the like

### (3)-a Polymeric decomposable compounds

### <Acid decomposable compounds>

Poly(tert-butylacrylate), poly(tert-butylmethacrylate), poly(tert-butoxycarbonylmethylacrylate), poly[2-(tert-butoxycarbonyl)ethylacrylate], poly[p-(tert-butoxycarbonyl)phenylacrylate], poly[p-(tert-butoxycarbonylethyl)phenylacrylate], poly[1-(tert-butoxycarbonylmethyl)cyclohexylacrylate], poly(4-tert-butoxycarbonyl-8-vinylcarbonyloxy-tricyclo[5.2.1.02,6]decane), poly[2-(tert-butoxycarbonyloxy)ethylacrylate], poly[p-(tert-butoxycarbonyloxy)phenylacrylate], poly[p-(tert-butoxycarbonyloxy)benzylacrylate], poly[2-(tert-butoxycarbonylamino)ethylacrylate], poly[6-(tert-butoxycarbonylamino)hexylacrylate], poly[p-(tert-butoxycarbonylamino)phenylacrylate], poly[p-(tert-butoxycarbonylamino)benzylacrylate], poly[p-(tert-butoxycarbonylaminomethyl)benzylacrylate], poly(2-tert-butoxyethylacrylate), poly(3-tert-butoxypropylacrylate), poly[(1-tert-butyldioxy-1-methyl)ethylacrylate], poly[3,3-bis(tert-butyloxycarbonyl)propylacrylate], poly[4,4-bis(tert-butyloxycarbonyl)butylacrylate], poly[p-(tert-butoxy)styrene], poly[m-(tert-butoxy)styrene], poly[p-(tert-butoxycarbonyloxy)styrene], poly[m-(tert-butoxycarbonyloxy)styrene], polyacryloylacetate, polymethacryloylacetate, poly[tert-butylacryloylacetate], poly[tert-butylmethacryloylacetate], N-(tert-butoxycarbonyloxy)maleimide/styrene copolymers, or the like

### (3)-b Polymeric decomposable compounds

### <Base decomposable compounds>

Poly{p-[(1,1-dimethyl-2-cyano)ethoxycarbonyloxy]styrene},
poly{p-[(1,1-dimethyl-2-phenylsulfonyl)ethoxycarbonyloxy]styrene},
poly{p-[(1,1-dimethyl-2-methoxycarbonyl)ethoxycarbonyloxy]styrene},
poly[p-(2-cyanoethoxycarbonyloxy)styrene],
poly[(1,1-dimethyl-2-phenylsulfonyl)ethylmethacrylate],
poly[(1,1-dimethyl-2-cyano)ethylmethacrylate], or the like.

Organic polymer compounds such as polyethers, polyamides, polyesters, polyimides, polyvinyl alcohols and dendrimers where a decomposable functional group is introduced can be used as the acid decomposable, or base decomposable polymeric compounds. In addition, inorganic compounds such as silica where a decomposable functional group is introduced are also included in the acid decomposable, or base decomposable polymeric compounds. Among these compounds, the decomposable functional group is preferably introduced into the compounds having a functional group selected from the group consisting of a carboxyl group or hydroxyl group and amine group.

The abovementioned decomposable compounds may be used alone or two or more different types thereof may be mixed and used concomitantly. Additionally, the abovementioned decomposable compounds can also be used by mixing them with other resins. When mixed, it does not matter whether the decomposable compounds and the other resins may be compatible or incompatible. The other resins can be used where appropriate by selecting from resins which are generally used including polyester resins such as polyethyleneterephthalate and polybutyleneterephthalate, unsaturated polyester resins, polycarbonate resins, polyolefin resins such as polyethylene and polypropylene, polyolefin composite resins, polystyrene resins, polybutadiene resins, (meth)acrylic resins, acryloyl resins, ABS resins, fluororesins, polyimide resins, polyacetal resins, polysulfone resins, vinyl chloride resins, methyl cellulose, ethyl cellulose, hydroxypropyl cellulose, starch, polyvinyl alcohol, polyamide resins, phenol resins, melamine resins, urea resins, urethane resins, epoxy resins and silicone resins. In addition, gas barrier resins can also be used for the purpose of internalizing a volatile substance with a low boiling point, which decomposes from a decomposable compound and gasifies, in a compact. The gas barrier resin may be mixed, coated, or layered and is preferably coated or layered on the surface of the compact to internalize a volatile substance with a low boiling point in the compact.

Among the decomposable/foamable compounds, the curable, monomeric decomposable compounds and polymeric decomposable compounds may be used alone or they may be used by mixing them with the abovementioned resins, which are generally used. On the other hand, since the non-curable, low molecular-weight decomposable compounds cannot be molded alone, it is necessary to mix them with the abovementioned resins, which are generally used, for use.

In order to improve the water resistance of the foams of the present invention, it is also possible to use a compound which contains at least one or more types of hydrophobic functional groups and in which a decomposable/foamable functional group is introduced. Hydrophobic functional groups used in the present invention are preferably selected from the group mainly consisting of aliphatic groups; alicyclic groups, aromatic groups, halogen groups and nitrile groups. The decomposable/foamable functional groups are easily introduced into hydrophilic functional groups selected from the group mainly consisting of carboxy groups or hydroxy groups, and amine groups. Accordingly, the decomposable compounds of the present invention are preferably complex compounds composed from a decomposable unit in which the decomposable/foamable functional group is introduced into the aforementioned hydrophilic functional group, and a hydrophobic unit containing a hydrophobic functional group. More preferable complex compounds are those in which the decomposable unit and hydrophobic unit are vinyl polymers. Examples of the hydrophobic units include aliphatic (meth)acrylates such as methyl (meth)acrylate and ethyl (meth)acrylate, aromatic vinyl compounds such as styrene, methylstyrene and vinylnaphthalene, (meth)acrylonitrile compounds, vinyl acetate compounds, and vinyl chloride compounds. A typical example of the decomposable compounds is a vinyl copolymer composed from the combination of a decomposable unit in the form of tert-butyl acrylate where a tert-butyl group, which is a decomposable functional group, is introduced into acrylic acid having a carboxy group, which is a hydrophilic functional group, and a hydrophobic unit in the form of methyl acrylate having a methyl group, which is a hydrophobic functional group. Specific examples of the decomposable compounds composed from the combinations of the decomposable units/hydrophobic units are shown below.

tert-butyl acrylate/methyl methacrylate copolymer, tert-butyl methacrylate/methyl acrylate copolymer, tert-butyl methacrylate/methyl methacrylate copolymer, tert-butyl acrylate/ethyl acrylate copolymer, tert-butyl acrylate/ethyl methacrylate copolymer, tert-butyl methacrylate/ethyl acrylate copolymer, tert-butyl methacrylate/ethyl methacrylate copolymer, tert-butyl acrylate/styrene copolymer, tert-butyl acrylate/vinyl chloride copolymer, tert-butyl acrylate/acrylonitrile copolymer, p-(tert-butoxycarbonyloxy)styrene/styrene copolymer

In addition, the decomposable unit and hydrophobic unit in the decomposable compound can be used alone, or two or more types thereof can be used concomitantly. As a form of copolymerization, random copolymerization, block copolymerization, graft copolymerization or the like can be arbitrarily carried out. Moreover, the copolymerization ratio of the hydrophobic unit is preferably 5 to 95 mass% relative to the total amount of decomposable compound, and when taking the decomposability/foamability of the decomposable compound and the stability of the foam structure in the environment into consideration, the copolymerization ratio is more preferably 20 to 80 mass%.

The abovementioned decomposable compound may be used alone, or two or more different types thereof can be mixed and used concomitantly. The abovementioned decomposable compound generates a cell-forming gas as a result of decomposition and elimination of a decomposable/foamable functional group and thereafter, becomes a compound which contains at least one or more types of hydrophobic functional group.

In order to improve the water resistance of the foams of the present invention, as a foamable composition, it is also possible to use a compound which is a low hygroscopic compound having an equilibrium water absorption rate of less than 10% when measured according to the JIS K-7209D method in the environmental atmosphere at a temperature of 30°C, a relative humidity of 60%, and in which a decomposable/foamable functional group is introduced. Examples of the low hygroscopic compounds having a structure where a decomposable/foamable functional group is readily introduced include p-hydroxystyrene and m-hydroxystyrene. Accordingly, examples of the decomposable compounds include p-(tert-butoxy) styrene, m-(tert-butoxy) styrene, p-(tert-butoxycarbonyloxy) styrene, and m-(tert-butoxycarbonyloxy) styrene. These may be curable monomers or polymers where one or more types thereof are mixed.

Additionally, it is also possible to introduce a decomposable/foamable functional group into a complex compound, which is composed from a combination of a high hygroscopic compound having a water absorption rate of 10% or more and the low hygroscopic compound having a water absorption rate of less than 10%. This is with the proviso that the complex compound preferably has a water absorption rate of less than 10% due to appropriate combinations of the aforementioned compounds. For example, a copolymer (complex compound), which is composed of acrylic acid as a high hygroscopic compound and p-hydroxystyrene as a low hygroscopic compound, preferably has a copolymerization ratio of acrylic acid/p-hydroxystyrene of 90/10 to 0/100. Specific examples of the decomposable compounds include tert-butyl acrylate/p-(tert-butoxy) styrene copolymer, tert-butyl acrylate/m-(tert-butoxy) styrene copolymer, tert-butyl acrylate/p-(tert-butoxycarbonyloxy) styrene copolymer, tert-butyl acrylate/m-(tert-butoxycarbonyloxy) styrene copolymer, and tert-butyl methacrylate/p-(tert-butoxycarbonyloxy) styrene copolymer.

Moreover, it is also possible to introduce a decomposable/foamable functional group into the low hygroscopic polymer material selected from the group consisting of polyesters, polyimides, polyvinyl acetate, polyvinyl chloride, polyacrylonitrile, phenol resins and dendrimers, or the like.

The abovementioned decomposable compounds may be used alone or two or more different types thereof may be mixed to be used concomitantly. The abovementioned decomposable compound generates a cell-forming gas as a result of decomposition and elimination of a decomposable/foamable functional group and thereafter, becomes a low hygroscopic compound.

### Foamable composition

In the foamable compositions used in the present invention, it is also possible to use other unsaturated organic compounds, which are curable by an active energy beam, by combination in addition to an acid generating agent or base generating agent and a decomposable/foamable compound. Examples of such compounds used concomitantly include: (1) (meth)acrylates of aliphatic, alicyclic, and aromatic monovalent to hexavalent alcohols and polyalkylene glycols; (2) (meth)acrylates of compounds obtained by the addition of alkylene oxide to aliphatic, alicyclic, and aromatic monovalent to hexavalent alcohols; (3) esters of poly(meth)acryloyl alkyl phosphates; (4) reaction products of polybasic acids, polyols, and (meth)acrylic acid; (5) reaction products of isocyanates, polyols, and (meth)acrylic acid; (6) reaction products of epoxy compounds and (meth)acrylic acid; (7) reaction products of epoxy compounds, polyols, and (meth)acrylic acid; and (8) reaction products of melamine and (meth)acrylic acid.

Among the compounds which can be used concomitantly, when curable monomers and resins are used, the effects to improve physical properties such as strength and heat resistance of the foam as well as controlling foamability can be expected. In addition, it is possible to provide a production method, which imposes a low burden on the environment and is capable of solventless molding, by the use of curable monomers for the decomposable compound and compound, which is used concomitantly. For example, such materials are used in Japanese Unexamined Patent Application, First Publication No. Hei 9-102230.

Specific examples of the compounds used concomitantly include, methyl acrylate, ethyl acrylate, lauryl acrylate, stearyl acrylate, 2-ethylhexyl acrylate, 2-hydroxyethyl acrylate, 2-hydroxyethyl methacrylate, 2-hydroxypropyl acrylate, 2-hydroxypropyl methacrylate, 2-hydroxybutyl acrylate, 2-hydroxybutyl methacrylate, tetrahydrofurfuryl acrylate, tetrahydrofurfuryl methacrylate, caprolactone-modified tetrahydrofurfuryl acrylate, cyclohexyl acrylate, cyclohexyl methacrylate, dicyclohexyl acrylate, isobornyl acrylate, isobornyl methacrylate, benzyl acrylate, benzyl methacrylate, ethoxy diethylene glycol acrylate, methoxy triethylene glycol acrylate, methoxy propylene glycol acrylate, phenoxy polyethylene glycol acrylate, phenoxy polypropylene glycol acrylate, ethylene oxide-modified phenoxy acrylate, N,N-dimethylaminoethyl acrylate, N,N-dimethylaminoethyl methacrylate, 2-ethylhexyl carbitol acrylate, ω-carboxy polycaprolactone monoacrylate, phthalic acid monohydroxyethyl acrylate, acrylic acid dimer, 2-hydroxy-3-phenoxypropyl acrylate, acrylic acid-9,1.0-epoxidated oleyl, maleic acid ethylene glycol monoacrylate, dicyclopentenyloxy ethylene acrylate, acrylate of caprolactone adduct of 4,4-dimethyl-1,3-dioxolane, acrylate of caprolactone adduct of 3-methyl-5,5-dimethyl-1,3-dioxolane, polybutadiene acrylate, ethylene oxide-modified phenoxidated phosphoric acid acrylate, ethanediol diacrylate, ethanediol dimethacrylate, 1,3-propanediol diacrylate, 1,3-propanediol dimethacrylate, 1,4-butanediol diacrylate, 1,4-butanediol dimethacrylate, 1,6-hexanediol diacrylate, 1,6-hexanediol dimethacrylate, 1,9-nonanediol diacrylate, 1,9-nonanediol dimethacrylate, diethylene glycol diacrylate, polyethylene glycol diacrylate, polyethylene glycol dimethacrylate, polypropylene glycol diacrylate, polypropylene glycol dimethacrylate, neopentyl glycol diacrylate, 2-butyl-2-ethyl propanediol diacrylate, ethylene oxide-modified bisphenol A diacrylate, polyethylene oxide-modified bisphenol A diacrylate, polyethylene oxide-modified hydrogenated bisphenol A diacrylate, propylene oxide-modified bisphenol A diacrylate, polypropylene oxide-modified bisphenol A diacrylate, ethylene oxide-modified isocyanurate diacrylate, pentaerythritol diacrylate monostearate, 1,6-hexanediol diglycidyl ether acrylic acid adduct, polyoxyethylene epichlorohydrin-modified bisphenol A diacrylate, trimethylol propane triacrylate, ethylene oxide-modified trimethylol propane triacrylate, polyethylene oxide-modified trimethylol propane triacrylate, propylene oxide-modified trimethylol propane triacrylate, polypropylene oxide-modified trimethylol propane triacrylate, pentaerythritol triacrylate, ethylene oxide-modified isocyanurate triacrylate, ethylene oxide-modified glycerol triacrylate, polyethylene oxide-modified glycerol triacrylate, propylene oxide-modified glycerol triacrylate, polypropylene oxide-modified glycerol triacrylate, pentaerythritol tetraacrylate, ditrimethylol propane tetraacrylate, dipentaerythritol tetraacrylate, dipentaerythritol pentaacrylate, dipentaerythritol hexaacrylate, caprolactone-modified dipentaerythritol hexaacrylate, and polycaprolactone-modified dipentaerythritol hexaacrylate. However, the compounds used concomitantly are not limited to them.

Moreover, as part of or all of the aforementioned unsaturated organic compound, which is curable by an active energy beam and which is used concomitantly, active energy beam-curable resins, which have a (meth)acryloyl group on their molecular chain terminal and have a molecular weight of approximately 400 to 5000, can also be combined. As such curable resins, for example, polyurethane poly(meth)acrylate polymers such as polyurethane-modified polyether poly(meth)acrylate and polyurethane-modified polyester poly(meth)acrylate are preferably used.

Additives other than decomposable compounds can be contained in the foamable compositions used in the present invention where necessary. As additives, one or more kinds of the following may be contained: inorganic or organic compound fillers, dispersing agents such as various surfactants, polyvalent isocyanate compounds, epoxy compounds, reactive compounds such as organometallic compounds and antioxidants, silicone oils and processing aids, ultraviolet absorbents, fluorescent brighteners, anti-slip agents, antistatic agents, anti-blocking agents, anti-fogging agents, light stabilizers, lubricants, softening agents, colored dyes and other stabilizers. By using such additives, improvements in moldability, foamability, optical properties (particularly in the case of white pigment) as well as electrical and magnetic characteristics (particularly in the case of conductive particles such as carbon) can be expected.

Specific examples of the inorganic compound fillers include pigments such as titanium oxide, magnesium oxide, aluminum oxide, silicon oxide, calcium carbonate, barium sulfate, magnesium carbonate, calcium silicate, aluminum hydroxide, clay, talc, and silica, metallic soaps such as zinc stearate, dispersing agents such as various surfactants, calcium sulfate, magnesium sulfate, kaolin, clay silicate, diatomaceous earth, zinc oxide, silicon oxide, magnesium hydroxide, calcium oxide, magnesium oxide, alumina, mica, asbestos powder, glass powder, shirasu balloon, and zeolite.

Examples of the organic compound fillers include cellulose powders such as wood flour and pulp powder, and polymer beads. Examples of the polymer beads which can be used include those produced from acrylic resin, styrene resin or cellulose derivatives, polyvinyl resin, polyvinyl chloride, polyester, polyurethane, polycarbonate and crosslinking monomers. These fillers may be those mixtures of two or more types of the abovementioned fillers.

Specific examples of the ultraviolet absorbents are selected from salicylic acid-based, benzophenone-based, and benzotriazole-based ultraviolet absorbents. Examples of the salicylic acid-based ultraviolet absorbents include phenyl salicylate, p-t-butylphenyl salicylate and p-octylphenyl salicylate. Examples of the benzophenone-based ultraviolet absorbents include 2,4-dihydroxybenzophenone, 2-hydroxy-4-methoxybenzophenone, 2-hydroxy-4-octoxybenzophenone and 2,2'-dihydroxy-4-methoxybenzophenone. Examples of the benzotriazole-based ultraviolet absorbents include 2-(2'-hydroxy-5'-methylphenyl)benzotriazole and 2-(2'-5'-t-butylphenyl)benzotriazole.

Specific examples of the antioxidants include monophenol-based, bisphenol-based and polymer-type phenol-based antioxidants, sulfur-based antioxidants, and phosphorus-based antioxidants.

Typical examples of the light stabilizers include hindered amine compounds.

The softening agents can be used for the purpose of improving the moldability or workability of compacts and specific examples thereof include ester compounds, amide compounds, hydrocarbon polymers having a side chain, mineral oils, liquid paraffins and waxes.

As ester compounds, there are no particular limitations as long as they are monoesters or polyesters having a structure composed from an alcohol and carboxylic acid, and may be compounds in which the hydroxyl group and carbonyl group terminals remain within the molecule, or compounds in which they are closed in the form of an ester group. Specific examples thereof include stearyl stearate, sorbitan tristearate, epoxy soybean oil, refined castor oil, hardened castor oil, dehydrated castor oil, extremely hardened oils, trioctyl trimellitate, ethylene glycol dioctanoate, and pentaerythritol tetraoctanoate.

As amide compounds, there are no particular limitations as long as they are mono- or polyamide compounds having a structure composed from an amine and a carboxylic acid, and may be compounds in which the amino group and carbonyl group terminals remain within the molecule or compounds in which they are closed in the form of an amide group. Specific examples thereof include stearic acid amide, behenic acid amide, hexamethylene bis stearic acid amide, trimethylene bis octylic acid amide, hexamethylene bis hydroxystearic acid amide, trioctatrimellitic acid amide, distearyl urea, butylene bis stearic acid amide, xylylene bis stearic acid amide, distearyl adipic acid amide, distearyl phthalic acid amide, distearyl octadecadiacid amide, epsilon-caprolactam, and derivatives thereof.

Preferable examples of the hydrocarbon polymers having a side chain include poly-α-olefins which have a side chain of four or more carbon atoms and are usually classified as oligomers. Specific examples thereof include ethylene-propylene copolymers and their maleic acid derivatives, isobutylene polymers, butadiene, isoprene oligomers and their hydrogenates, 1-hexene polymers, polystyrene polymers and derivatives derived therefrom, hydroxypolybutadiene and their hydrogenates, and hydroxy-terminated hydrogenated polybutadiene.

The foamable compositions used in the present invention can be prepared using a general kneading machine. Examples thereof include twin rolls, three rolls, Cowles dissolvers, homomixers, sand grinders, planetary mixers, ball mills, kneaders, high-speed mixers, and homogenizers. Additionally, a supersonic dispersing device or the like can also be used.

Features of the foam structure of a foam obtained by the production method of the present invention will be described below. It is preferable to control the cell distribution so that in the obtained foam, cell diameter thereof is 10 µm or less and more preferably 1 µm or less and cell number density is within the range of 10⁹ cells/cm³ or more and more preferably 10¹¹ cells/cm³ or more. Characteristics of the obtained foam have various features in terms of optical characteristics, thermal characteristics, electrical characteristics, or the like as shown in the previous application by the present inventors (Japanese Patent Application No. 2004-209107). Moreover, in the foam of the present invention, since the control of cell distribution is arbitrarily variable, it occupies the position as a highly functional material having controlled foam properties, and thus immensely useful. Examples of foam properties include color developing properties, bulkiness, dryness, convexity, softness, air permeability, thermal insulation properties, low conductivity properties, light scattering properties, light reflecting properties, screening properties, whiteness, opacity, wavelength-selective reflection properties and transmittance, lightweight properties, buoyancy, sound insulation properties, sound absorption properties, shock-absorbing properties, cushioning properties, absorbing properties, adsorptive properties, storage properties, permeability, and filterability. This foam can be used for various purposes and, for example, used in packaging materials or construction materials, medical materials, materials for electrical apparatuses, electronic information materials, automobile materials, or the like.

### <Heterogeneous foam>

The foams obtained according to the present invention are heterogeneous foams in which distributions of cell diameter and/or cell density (hereinafter may generically be referred to as "cell distribution" as mentioned earlier) differ depending on the positions.

### (Cell diameter)

The term "cell diameter" used in the present invention means the "diameter of cells." Specifically, the cell diameter is determined by averaging the diameters of cells which have been image-analyzed from the observed images of foam cross sections. Note that the average is determined by sampling a region, which is selected from those close to the center in the field of view of cross sectional images so that 100 or more cells can be measured.

The cell diameter is preferably 10 µm or less throughout the entire distribution range and more preferably 0.005 to 10 µm. When the cell diameter is smaller than 0.005 µm, there are cases where functions unique to foams are difficult to develop. In addition, when the cell diameter is larger than 10 µm, there is a concern that the surface smoothness of the foams will be insufficient. Especially in thin foams having a thickness of 100 µm or less, since there are many cases where poor foam appearance is achieved, the cell diameter of 0.005 to 1 µm is particularly preferable.

### (Cell density)

The cell density in the present invention may be evaluated by the indications on the basis of unit volume such as volume density directly determined using Archimedes' method (density per unit volume which also includes cell volumes; g/cm³), foaming magnification (the ratio of volume density when being unfoamed relative to the volume density when being foamed; number of folds), cell number density (number of cells relative to the volume of unfoamed composition; cells/cm³), or may be evaluated by the indications on the bases of unit area such as cell-occupying area ratio (%) or surface density of cell numbers (cells/cm²) which are determined by image-analyzing the observed images of foam cross sections. In the heterogeneous foams obtained in the present invention, since cell density defers depending on positions in one identical foam, it is more preferable to evaluate cell density by the indications on the basis of unit area, which is capable of spot-wise measurement from cross sectional images, than the indications on the basis of unit volume using Archimedes' method, which requires a certain amount of homogeneous foams for the measurement.

The cell density is determined by sampling a region, which is selected from those close to the center in the field of view of cross sectional images so that 100 or more cells can be measured.

Although the cell density of foams in the present invention is not particularly limited, in order to sufficiently develop foam functions, in terms of cell number density, a preferable range is 10⁹ cells/cm³ or more. When this value is converted to unit area, for example, if the cell diameter is 1 µm, the preferable range will be 0.8% or more in terms of cell-occupying area ratio.

Examples of typical forms of heterogeneous distributions of cell diameter and/or cell density include partial foaming and gradient foaming.

### (Partial foaming)

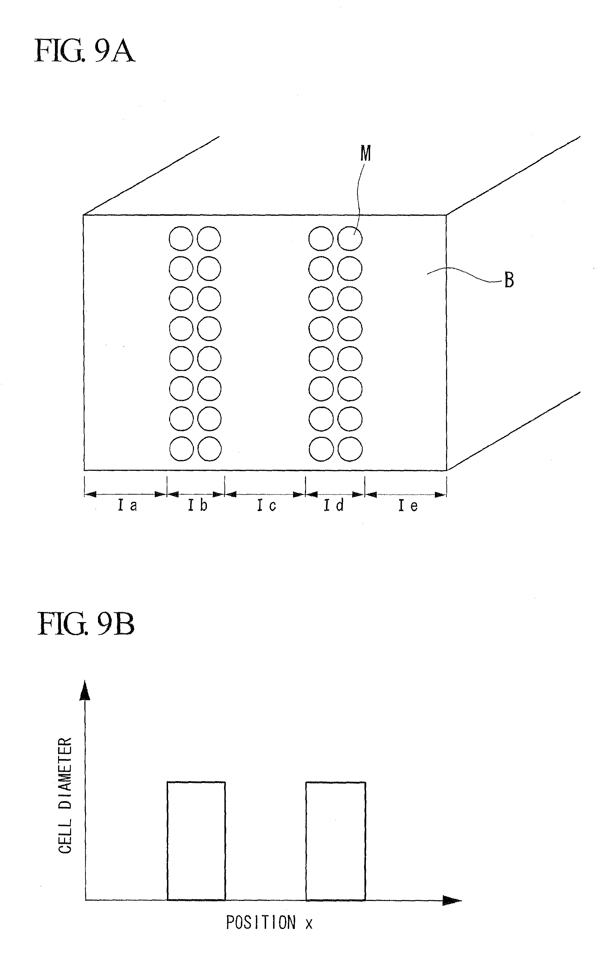

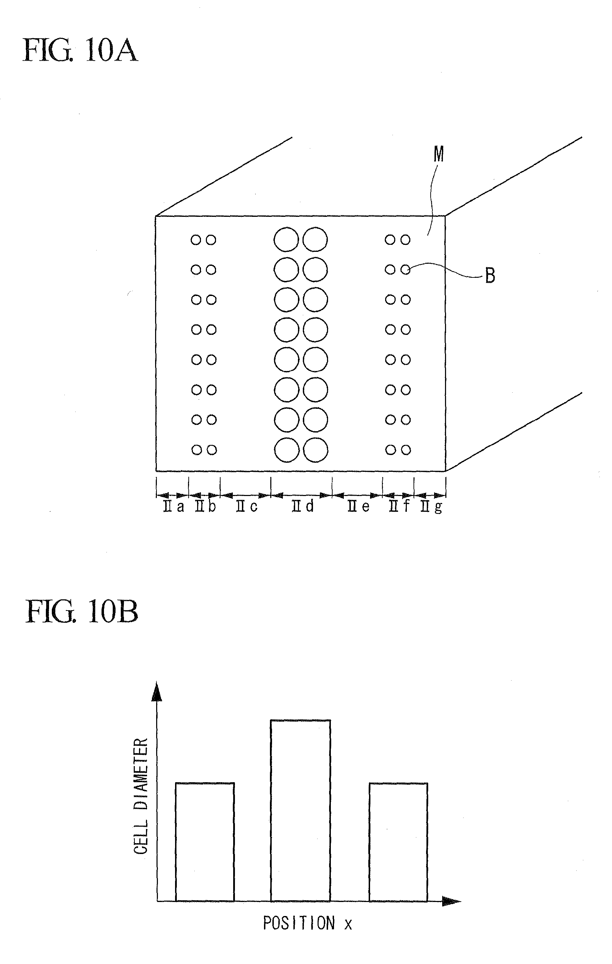

Partial foaming is a form where regions are separated into an unfoamed region and foamed region or a low-foamed region and high-foamed region (form 1). Among the partial foams, forms where unfoamed regions and foamed regions are present alternately or low-foamed regions and high-foamed regions are present alternately are also called alternate foaming (form 2). Fig. 9A shows an alternate foam where nonfoamed regions Ia, Ic, and Ie, and homogeneous foamed regions Ib and Id are partially arranged alternately. In addition, Fig. 10A shows an alternate foam where homogeneously foamed regions IIb and IIf composed from cells with a small diameter and homogeneously foamed region IId composed from cells with a large diameter are partially arranged alternately between respective nonfoamed regions IIa, IIc, IIe, and IIg. In Figs 9A and 10A, M shows matrices of compacts and B represents cells (the same applies to the figures hereinafter). In either of the foams of Fig. 9A or Fig. 10A, width of each region can be varied arbitrarily.

### (Gradient foaming)

Examples of the form of gradient foaming include a form where cell diameter or cell density changes continuously from one end to another (or a point between the two) in the foamed region (form 3) and a form where cell diameter or cell density changes stepwise from one end to another (or a point between the two) in the foamed region (form 4).

Examples of the conditions where changes are stepwise include a condition where regions are separated into two or more regions different in cell distribution like, for example, a condition separated into a low-foamed region and a high-foamed region, a condition where regions change from low-foamed regions, to intermediate-foamed regions, and then to high-foamed regions in this order, and a condition where changes are made in 4 or more steps.

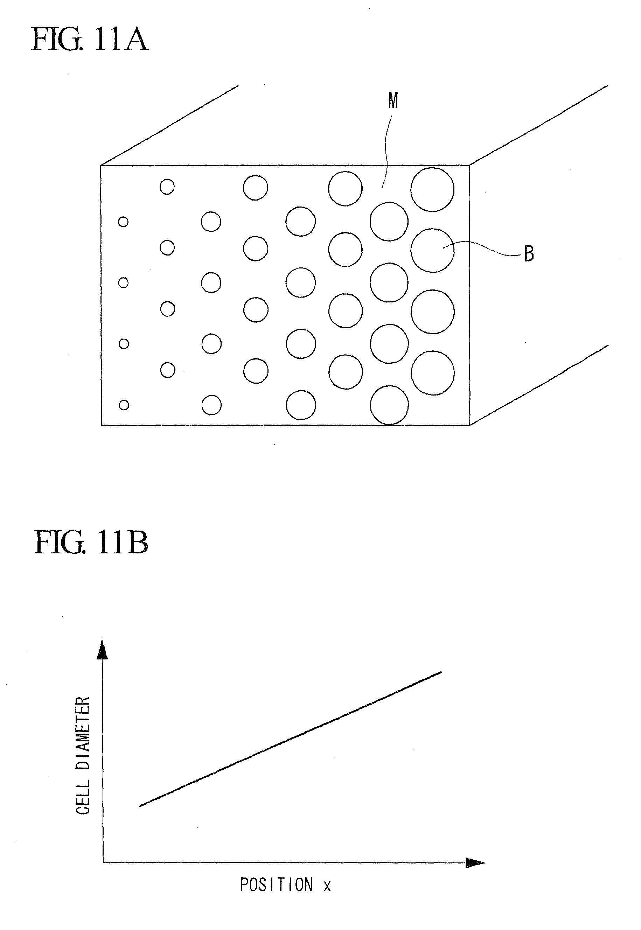

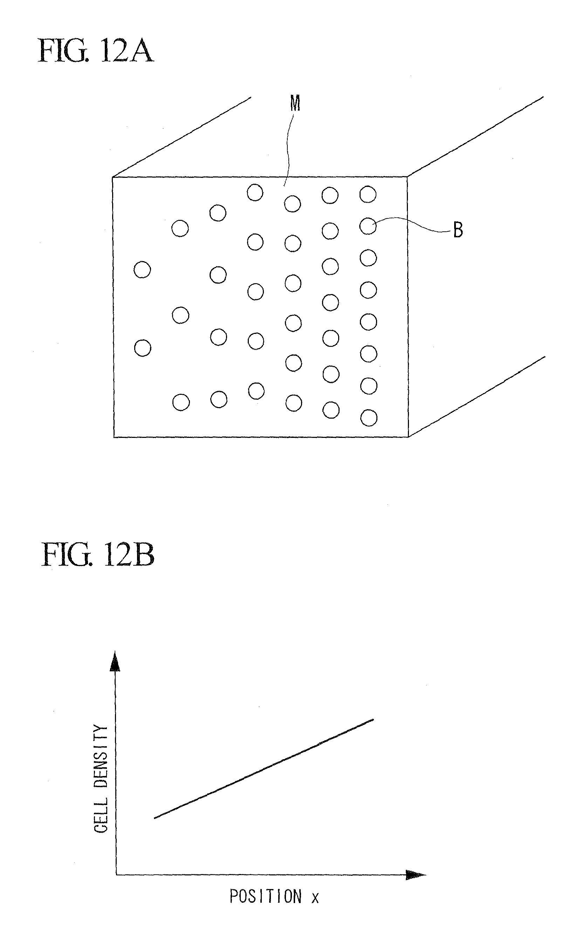

Fig. 11A shows a gradient foam where cell diameter is changing continuously in one direction. Fig. 12A shows a gradient foam where cell density is changing continuously in one direction.

In the case of such a distribution, foams are trisected into three regions in the direction where cell distribution changes continuously. The average cell diameter and average cell-occupying area ratio of a region where cell diameter or cell density is the smallest is defined as D1 and S1, respectively, the average cell diameter and average cell-occupying area ratio of a region where the value of cell diameter or cell density is the intermediate is defined as D2 and S2, respectively, and the average cell diameter and average cell-occupying area ratio of a region where cell diameter or cell density is the largest is defined as D3 and S3, respectively. When defined as such, the value D3/D 1 or S3/S1 is 1.01 or more, preferably 1.1 or more, more preferably 1.2 or more, and particularly preferably 1.5 or more.

The average value refers to a value measured by sampling a region which is selected from those close to the center in the field of view of cross sectional images so that 100 or more cells can be measured.

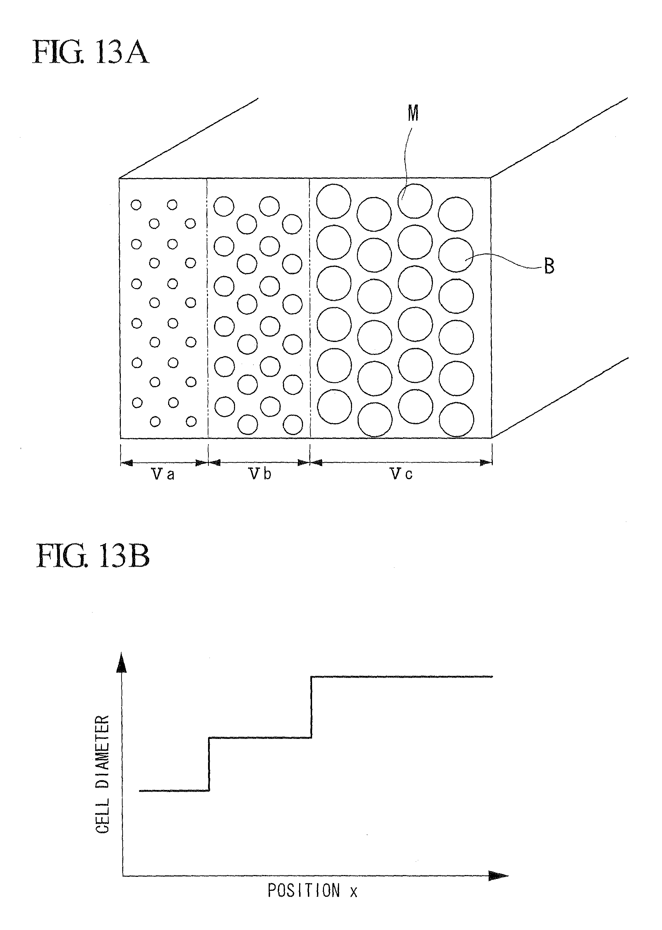

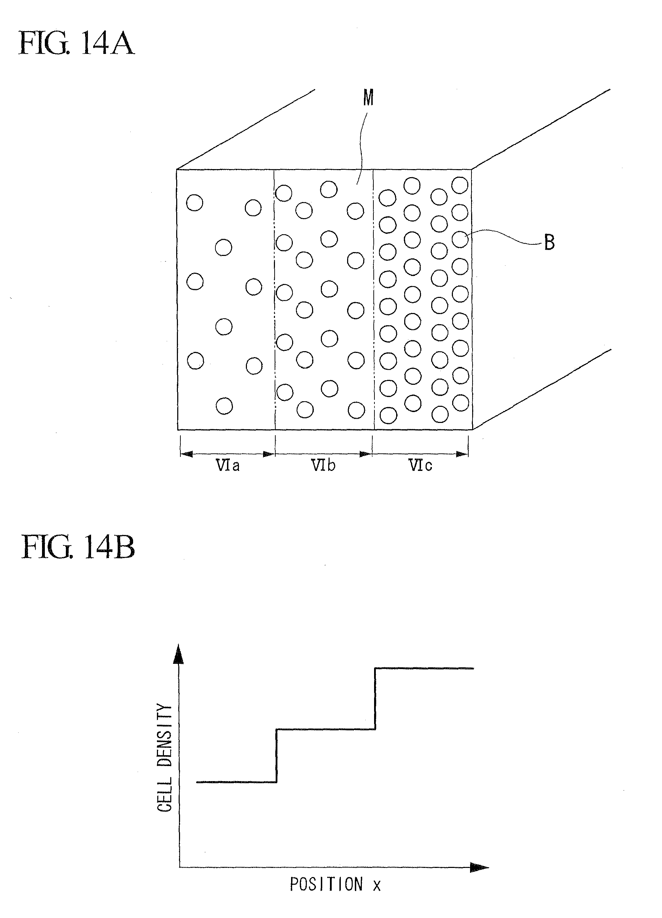

In addition, Fig. 13A shows a gradient foam where cell diameter is varying discontinuously (stepwise). Moreover, Fig. 14A shows a gradient foam where cell density is varying discontinuously (stepwise).

In the case of such a distribution, when the average cell diameter D2 or average cell-occupying area ratio S2 of a region where cell diameter or cell density is the largest (Vc, VIc) is compared to the average cell diameter D1 or average cell-occupying area ratio S1 of a region where cell diameter or cell density is the smallest (Va, VIa), the value of D2/D1 or S2/S1 is 1.1 or more, preferably 1.2 or more, and more preferably 1.5 or more. The average value refers to a value measured by sampling a region which is selected from those close to the center of the visually observed region.

### (Other forms of foaming)

Examples of other forms of foaming include a form where in at least one direction (x) in the foam, cell diameter (D) or cell density (N) can be described using a continuous or discontinuous distribution function D = F(x) or N = F(x) (form 5).

The foaming form of the form 5 includes a form where the form 1 or 2 and the form 3 or 4 coexist, a form which is an intermediate of the forms 3 and 4, and a form where the forms 3 and 4 coexist. In addition, the foaming form of the form 5 also includes forms where unfoamed or low-foamed, and high-foamed regions coexist completely at random.

In the examples described so far, although the direction in which cell distribution varies is not particularly limited, for example, in the case of sheet-like foams, a form where cell distribution is varied in at least one direction out of the plane direction and thickness direction of the sheet is preferable.

Note that in Figs 9 to 14, although explanation is given by assuming that the cell number and cell density each independently varies, usually the two tend to vary together and there is a tendency that when cell number increases, cell density also increases and when cell number decreases, cell density also decreases.

### <Cell distribution heterogenization method>

Desired cell distribution can be achieved by making any one or more of the following exhibit predetermined heterogeneous distribution: (a) radiation energy imparted to a compact which is formed in a preforming step, (b) thermal energy imparted to the compact in a foam forming step, (c) concentration of decomposable/foamable functional group in the compact, and (d) concentration of an acid generating agent or a base generating agent in the compact.

When foamed heterogeneously, since there is a concern that dimensions partially vary, there is a need to hold down the compacts so that they do not deform freely. Although the pressure control in the present invention is required for this reason, when heterogeneous foaming is intended, in the case where cell diameter is large, there is no need to apply high pressure and the pressure which is approximately the same as the atmospheric pressure or slightly above thereof (0.1 to 10 MPa) is appropriate.

### (Radiation energy heterogenization method)

A method to make the radiation energy imparted to a compact exhibit a predetermined heterogeneous distribution is described.

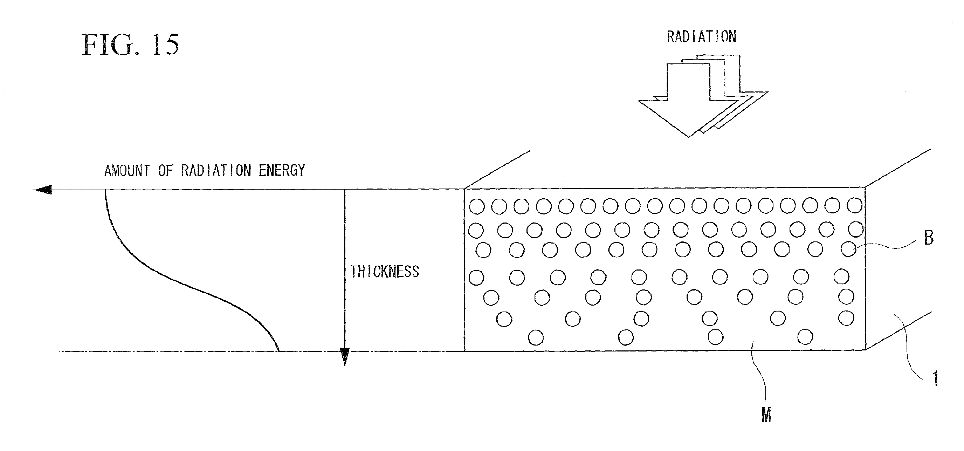

For example, as shown in Fig. 15, when radiation is irradiated onto a compact 1 along the thickness direction thereof, a gradient foam, in which cell distribution decreases along the thickness direction due to the difference in the amount of radiation energy reached owing to penetration depth, can be obtained.

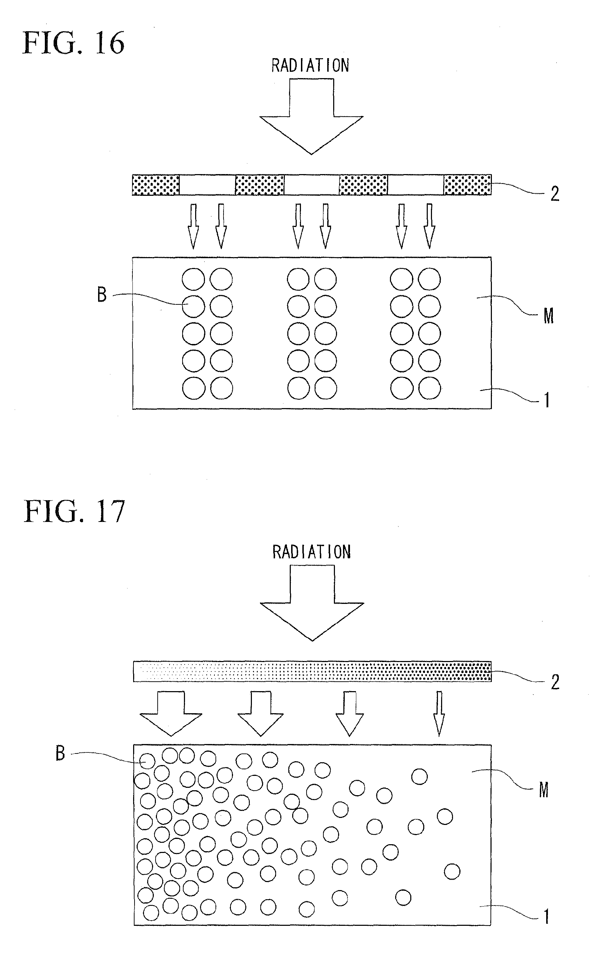

In addition, as shown in Fig. 16, it is also possible to produce partial foam by irradiating radiation only onto predetermined parts in the compact 1 using photomask 2. When photomask 2, which has drawing patterns therein, is used, partial foams in which those patterns are transferred can be obtained. Types of patterns such as delta-shape, stripe-shape, honeycomb-shape, or the like may be designed where appropriate depending on the purpose. Note that partial foams can also be obtained by direct writing due to the irradiation of an electron beam or ultraviolet radiation.

In addition, as shown in Fig. 17, it is also possible to produce gradient foams by irradiating radiation with a gradation pattern onto the compact 1 using the photomask 2 in which energy permeability expresses a gradation pattern. The gradation pattern may be continuous or stepwise (discontinuous).

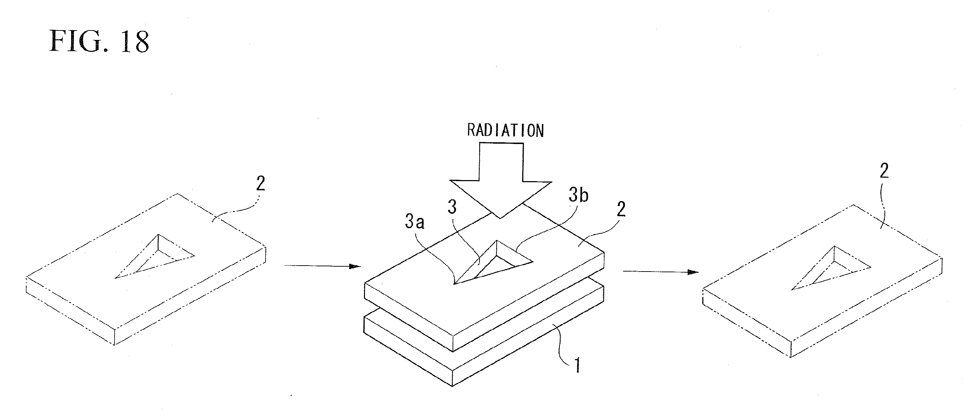

Additionally, it is also possible to vary cell distribution by changing irradiation time of radiation. For example, as shown in Fig. 18, when the photomask 2, which is provided with a triangle-shaped opening 3, slides on the compact 1 during radiation irradiation, the irradiation time will be short in the side, to which the vertex side of the triangle 3a slid, and the irradiation time will be long in the base side 3b. Moreover, it is obvious that the same effects are achieved even when the compact 1 rather than the photomask 2 is slid instead. By generating distributions in the irradiation time as described so far, it is possible to produce distributions in the radiation energy similar to the cases where the photomask with a gradation pattern is used. Note that various distributions can be achieved by changing the shape of the opening 3.

As materials for the photomask 2 used in Figs 16 and 17, chromium mask or metal mask, silver glass mask, silver film, screen mask, or the like can be used. The masks where glass has been subjected to ion etching, masks where interference fringes of a flat lens having a light condensing function are drawn using an electron beam, or the like can be used. When irradiating ultraviolet radiation having a wavelength of 300 nm or less, it is preferable to use quartz glass for the base materials of the photomask. The gradient foams or partial foams obtained in the present invention may also be used as the photomask.

As materials for the photomask 2 used in Fig. 18, those materials, in which the radiation having a wavelength which makes an acid generating agent generate an acid or a base generating agent generate a base is difficult to penetrate, are preferable and those with which an opening can easily be formed are more preferable. Examples thereof include boards, metal plates, resin sheets, and glass plates.

When irradiation is carried out using a photomask, systems such as contact irradiation and projection irradiation can be adopted. In order to transfer patterns onto a photomask with a good accuracy, the light being irradiated is preferably a uniform parallel light.

Examples of exposure systems for irradiating parallel light include an optical system using an integrator and parabolic mirror, optical system using Fresnel lens, and optical system using a honeycomb board and diffuser plate (refer to the official homepage of Kuranami Co., Ltd.: http://www.kuranami.co.jp/toku_guide01.htm).

In order to achieve high uniformity, the optical system using an integrator and parabolic mirror is generally preferable and a short arc lamp is preferable as a light source used in this optical system. Examples of the short arc lamps include metal halide lamps or extra-high pressure mercury lamps, mercury xenon lamps, sodium lamps, and Y-ray lamps. By contacting a photomask to a compact composed from a foamable composition and thereafter irradiating parallel light of ultraviolet radiation thereon followed by heating to foam, a partial foam having a line and space pattern with a width of a few micrometers is obtained. It is possible to clearly transfer edges at the time as well.

Moreover, it is also possible to adopt a method to irradiate radiation which generates interference fringes.

### (Thermal energy heterogenization method)

The distribution of thermal energy is preferably adjusted by heating temperature.

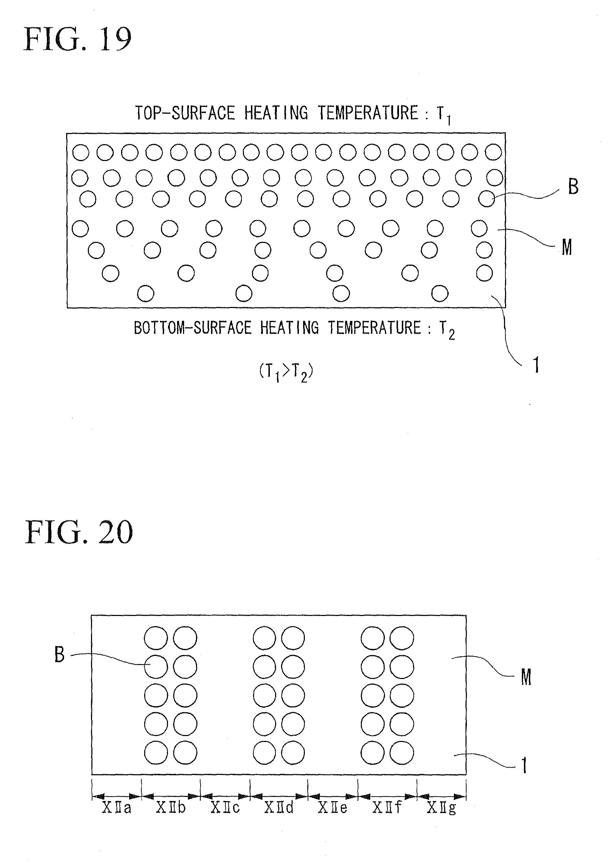

For example, as shown in Fig. 19, when heating a compact 11, to which radiation energy is already imparted, a gradient foam is obtained by differentiating the top-surface heating temperature T₁ and bottom-surface heating temperature T₂. If T₁ > T₂, the cell number and/or cell density will be larger in top-surface side than that in bottom-surface side.

Needless to say, when a heater, which is capable of changing heating temperature in the plane direction, is used, a gradient foam where cell number and/or cell density change along the plane direction is produced.

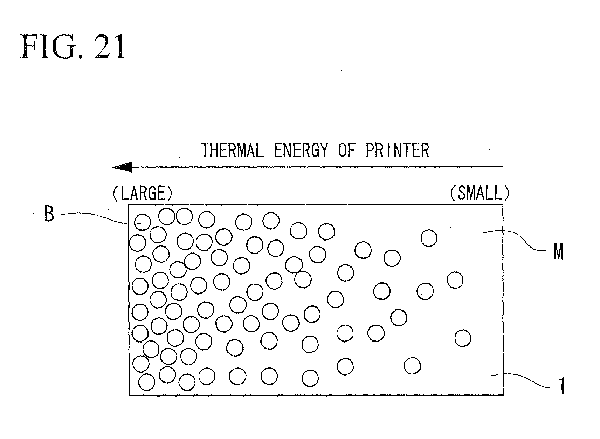

Additionally, by changing thermal energy applied onto the compact 11 using a printer for thermal recording, it is also possible to produce the partial foam shown in Fig. 20 or the gradient foam shown in Fig. 21.

Fig. 20 shows a partial foam which is obtained by applying heat onto regions XIIb, XIId, and XIIf using a printer for thermal recording.

Fig. 21 shows a gradient foam which is obtained by applying heat using a printer for thermal recording so that the imparted thermal energy increases from right to left in the figure.

### (Foamable composition heterogenization method)

It is preferable to adjust the distributions of the concentration of a decomposable/foamable functional group in the compact and/or the concentration of an acid generating agent (or a base generating agent) in the compact by using a plurality of foamable compositions having different formulations.

Specific examples thereof include the following:
1) An independent sheet where sheet-like materials having a different mixing ratio of a decomposable compound and/or an acid generating agent (or a base generating agent) are laminated.
2) A sheet layer in which coatings having a different mixing ratio of a decomposable compound and/or an acid generating agent (or a base generating agent) are coated onto a supporting body one after another to laminate.
3) A sheet layer in which coatings having a different mixing ratio of a decomposable compound and/or an acid generating agent (or a base generating agent) are coated in parallel onto a supporting body.
4) An independent sheet where sheet-like materials composed of foamable compositions and non-foamable compositions are laminated.
5) A sheet layer in which a solution of foamable composition and a coating of non-foamable composition are coated onto a supporting body one after another to laminate.
6) A sheet layer in which a solution of foamable composition and a coating of non-foamable composition are coated in parallel onto a supporting body.

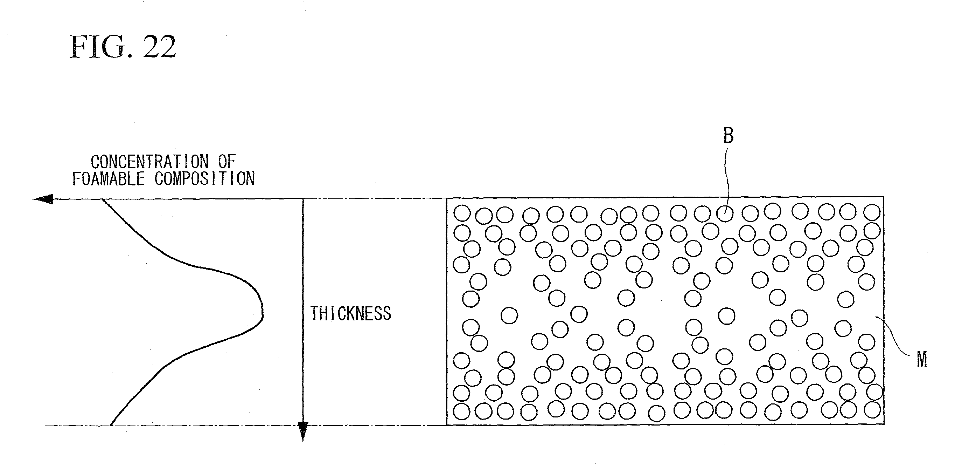

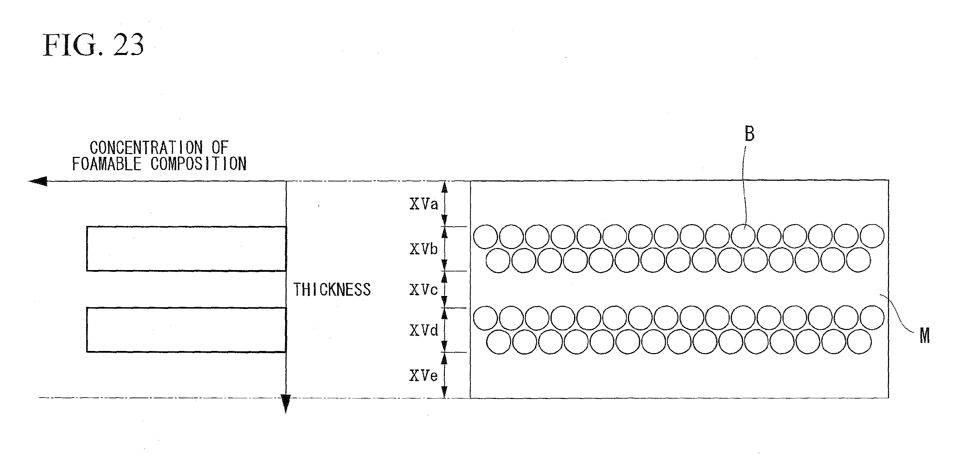

According to 1) to 3), as shown in Fig. 22, a gradient foam having cell distribution which corresponds to the concentration of foamable composition (concentration of decomposable compound and/or an acid generating agent) can be produced. In addition, according to 4) to 6), as shown in Fig. 23, a gradient foam having cell distribution which corresponds to the concentration of foamable composition (concentration of decomposable compound and/or an acid generating agent) can be produced.

### (3-dimensional cell distribution)

Each of the methods for radiation energy heterogenization, thermal energy heterogenization, and foamable composition heterogenization which are described above as the methods for achieving cell distribution heterogenization can influence cell distribution each independently from other methods. Accordingly, by combining two or more of these methods, it is possible to control the direction of cell distribution 3-dimensionally in one identical foam.

### (Cell diameter or cell density)

As described above, cell numbers and cell density tends to vary together and there is a tendency that when cell number increases, cell density also increases whereas when cell number decreases, cell density also decreases.

However, by adjusting the formulations of foamable compositions or the like, it is also possible to selectively vary either one of the two.

For example, by setting the glass transition temperature of foamable compositions somewhat high, it is also possible to mainly vary cell density while maintaining cell diameter relatively small. In addition, by using foamable compositions, which are 3-dimensionally crosslinkable, it is also possible to mainly vary cell density while maintaining cell diameter relatively small.

### <Light guiding body>

The light guiding body of the present invention at least includes a light guiding section and is formed depending on necessity, by combining a light reflecting section, a prism section, and a light diffusing section where appropriate.

In the light guiding section of the present invention, cell-occupying area ratio has a predetermined distribution pattern. The light guiding section preferably has a low-foamed region and high-foamed region where the cell-occupying area ratio are 0.5% or less and 1% or more, respectively.

The cell-occupying area ratio of the low-foamed region may be 0%. Since it is possible to increase the variation of the cell-occupying area ratio in the light guiding section as a whole when the cell-occupying area ratio in the low-foamed region is decreased, it will be easy to sufficiently control the distribution of light outputted from the light guiding section to uniformity. By such procedures, light diffusing effects are achieved and separate provision of the light diffusing section will be unnecessary.

The cell-occupying area ratio of the high-foamed region is more preferably 15% (equivalent to approximately 1.1-fold in terms of foaming magnification) or more and even more preferably 30% (equivalent to approximately 1.2-fold in terms of foaming magnification) or more. Since it is possible to increase the variation of cell-occupying area ratio in the light guiding section as a whole when the cell-occupying area ratio in the high-foamed region is increased, it will be easy to sufficiently control the distribution of light outputted from the light guiding section to uniformity. This is with a proviso that the cell-occupying area ratio of 65% (equivalent to approximately 2-fold in terms of foaming magnification) or less is preferable even in the high-foamed region. Due to such procedures, it will be easy to maintain the strength of the light guiding section.

Between the low-foamed region and high-foamed region, it is preferable to provide an intermediate-foamed region, in which the cell-occupying area ratio gradually increases from the side, which is adjacent to the low-foamed region, to the side, which is adjacent to the high-foamed region, so as to connect the former two regions. In other words, the light guiding body of the present invention is preferably configured so that the cell-occupying area ratio gradually increases from the low-foamed region to the high-foamed region.

Each of the low-foamed region and high-foamed region may be present in plurality. For example, it is also possible to arrange low-foamed regions on both sides of the high-foamed regions and configure the light guiding body so that the cell-occupying area ratio gradually increases and thereafter, gradually decreases.

Although cell distributions in each of the regions are preferably homogenous, a constitution where dot-like sections formed from a group of microcells are scattered about may be possible. When scattering dot-like sections, low-foamed regions are obtained when the scattering density is small and high-foamed regions are obtained when the scattering density is large. Note that the inside of each of the dot-like sections preferably have a high cell-occupying area ratio to the same extent as that in the light reflecting section, which will be described later.

When using the light guiding body of the present invention, the low-foamed region in the light guiding section is arranged in a place close to the light source and the high-foamed region is arranged in a place distant from the light source. In other words, the light guiding body is used in an arrangement so that the cell-occupying area ratio is minimum at a place, which is closest to the light source, and maximum at a place, which is most distant from the light source.

In the light guiding section, cells are preferably constituted of those having a cell diameter within a range of 0.1 to 20 µm and more preferably constituted of those having a cell diameter within a range of 0.1 to 10 µm. By making the cell diameter equal to or less than the wavelength of visible light, cells and dot-like sections become hard to visibly recognize. For this reason, it is possible to omit a light diffusing sheet.

Specific cell distributions in the light guiding section can be optimized by setting parameters regarding shapes and positions of the light source, the area of the light guiding body, or the like and making full use of optical simulation software, which takes Mie scattering and multiple scattering into account, ray tracing method, or the like.

The light reflecting section of the present invention has a cell-occupying area ratio of 15% or more and 30% or more thereof is preferable. Reflectance can be enhanced when the cell-occupying area ratio of the light reflecting section is increased. This is with a proviso that the cell-occupying area ratio of 65% or less is preferable even in the light reflecting section. Due to such procedures, it will be easy to maintain the strength of the light reflecting section.

Cell distributions in the light reflecting section are preferably homogeneous in order to prevent unevenness in terms of light reflection. In addition, in the light reflecting section, cells are preferably constituted of those having a cell diameter within a range of 0.1 to 10 µm and more preferably constituted of those having a cell diameter within a range of 0.2 to 1 µm.

When the cell-occupying area ratio and cell diameter are within ranges of 30 to 65% and 0.2 to 1 µm respectively, it is possible to achieve the total light reflectance of 80% or more with a thickness of 50 µm or less.

The light diffusing section of the present invention has a cell-occupying area ratio of 30% or less and 15% or less thereof is preferable. When the cell-occupying area ratio of the light diffusing section is decreased, it is possible to enhance the total light transmittance and the light utilization efficiency can be improved. This is with a proviso that the cell-occupying area ratio of 0.5% or more is preferable even in the light diffusing section. Due to such procedures, it will be possible for the light diffusing section to exert sufficient light diffusing action.

Cell distributions in the light diffusing section are preferably homogeneous in order to prevent unevenness in terms of light diffusion. In addition, in the light diffusing section, cells are preferably constituted of those having a cell diameter within the range of 0.1 to 20 µm and more preferably constituted of those having a cell diameter within the range of 0.1 to 10 µm.

The cell-occupying area ratio, cell diameter, and thickness of the light diffusing section are specifically set so that the total light reflectance of 60% or more, preferably 80% or more, is achieved.

The prism section of the present invention is configured as a layer where a V-groove is engraved in one surface thereof so as to achieve prism functions. The prism section does not require cells and it is formed from a general resin. This is with a proviso that foamable compositions can be used without carrying out foaming.

Embodiments of the light guiding body of the present invention will be described below while referring to the figures. However, the present invention is not limited to the embodiments below.

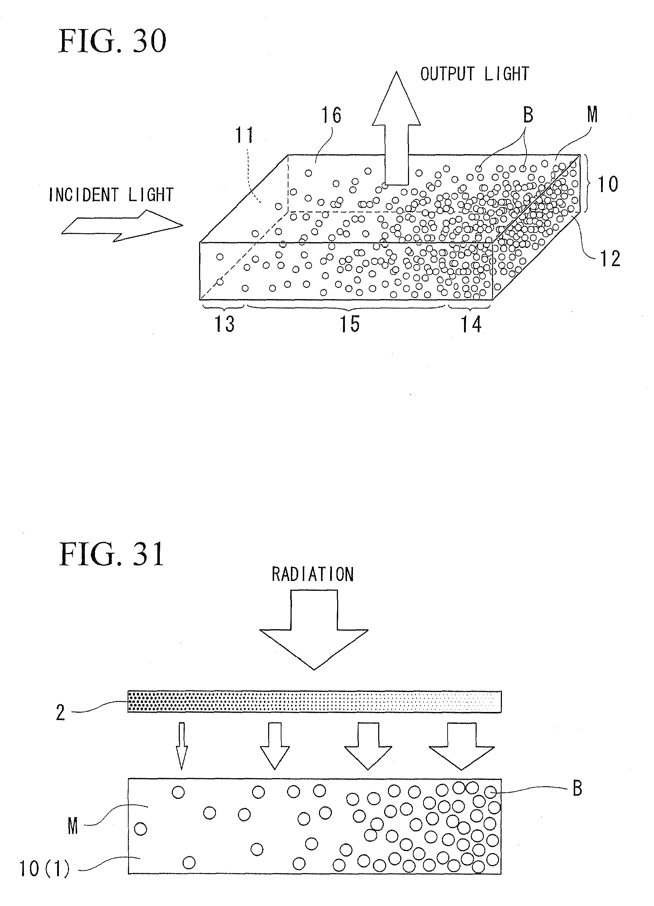

Fig. 30 is a perspective view showing the first embodiment (light guiding body) of the present invention. The light guiding body of the present embodiment is configured only from a light guiding section 10. The light guiding section 10 is composed from a foam, in which a large number of cells B are formed in a matrix M, and the cell distribution pattern therein is one where the cell-occupying area ratio gradually increases from an end face 11, which is in the side where incident light enters, to an end face 12, which is in the opposite side. In other words, it is configured so that a low-foamed region 13 is present in the vicinity of the end face 11, a high-foamed region 14 is present in the vicinity of the end face 12, and an intermediate-foamed region 15 is present between the low-foamed region 13 and the high-foamed region 14. Note that the cell diameter may also gradually increase together with the cell-occupying area ratio from the end face 11 to the end face 12.

By having such a cell distribution pattern, the light guiding body of the present embodiment is configured so as to output almost uniform light from the entire output surface 16.

Fig. 31 is one example of a production method of the light guiding body in Fig. 30. As shown in Fig. 31, by irradiating radiation with a gradation pattern onto a compact 1, which is molded from a foamable composition in advance, using a photomask 2 in which energy transmittance expresses a gradation pattern, it is possible to obtain the light guiding section 10 having cells B with an inclined distribution in the matrix M.

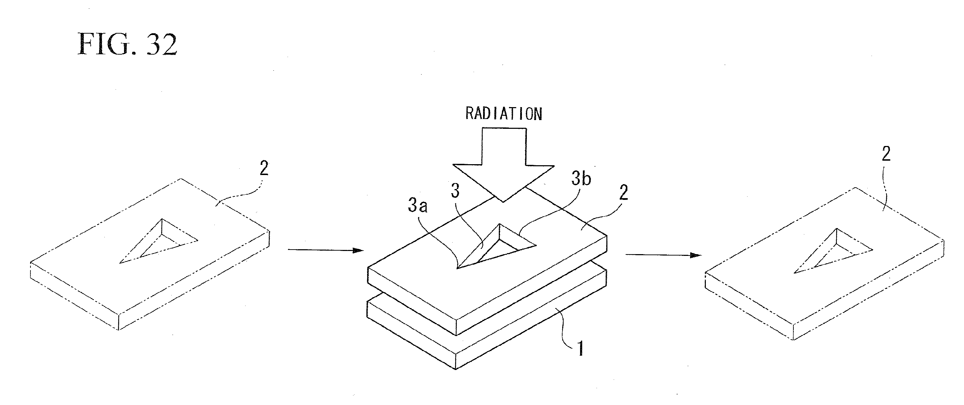

Fig. 32 is another example of the production method of the light guiding body in Fig. 1. As shown in Fig. 32, when the photomask 2, which is provided with a triangle-shaped opening 3, slides on the compact 1 during radiation irradiation, the irradiation time will be short in the side, to which the vertex side of the triangle 3a slid, and the irradiation time will be long in the base side 3b.

Moreover, it is obvious that the same effects are achieved even when the compact 1 rather than the photomask 2 is slid instead. By generating distributions in the irradiation time as described so far, it is possible to produce distributions in the radiation energy similar to the cases where the photomask with a gradation pattern is used, and thus, the light guiding section 10 having cells B with an inclined distribution can be obtained.

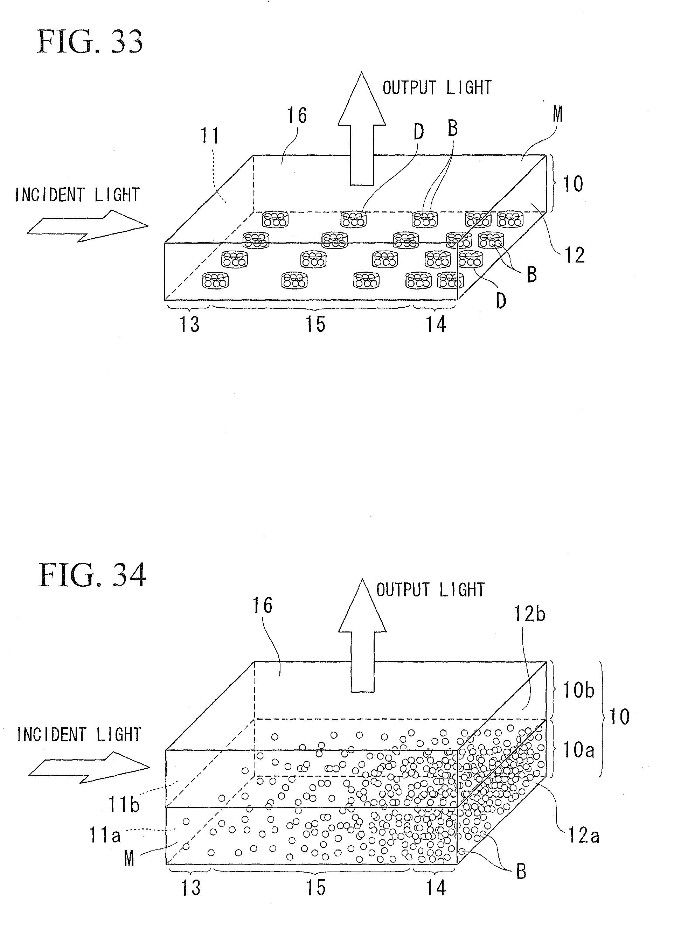

Fig. 33 is a perspective view showing the second embodiment (light guiding body) of the present invention. The light guiding body of the present embodiment is also configured only from the light guiding section 10. The light guiding section 10 is composed from a foam, in which a large number of dot-like sections D are formed in a matrix M, and it is configured so that the distribution of dot-like sections D gradually increases from the end face 11, which is in the side where incident light enters, to the end face 12, which is in the opposite side. Since each of the dot-like sections D is an aggregate of numerous cells B, when viewing in terms of the cell distribution of the light guiding body as a whole, the cell distribution pattern is such that the cell-occupying area ratio gradually increases from the end face 11, which is in the side where incident light enters, to the end face 12, which is on the opposite side. In other words, it is configured so that a low-foamed region 13 is present in the vicinity of the end face 11, a high-foamed region 14 is present in the vicinity of the end face 12, and an intermediate-foamed region 15 is present between the low-foamed region 13 and high-foamed region 14.

By having such a cell distribution pattern, the light guiding body of the present embodiment is configured so as to output almost uniform light from the entire output surface 16. Note that a light diffusing section may be laminated thereon where necessary in order to further suppress the visibility of each dot-like section D.

Fig. 34 is a perspective view showing the third embodiment (light guiding body) of the present invention. Although the light guiding body of the present embodiment is also configured only from the light guiding section 10, the light guiding section 10 is configured as a laminated body of a foam 10a and transparent resin 10b.

The foam 10a is almost equivalent to the light guiding section 10 of the first embodiment. In other words, it is composed of a foam, in which a large number of cells B are formed in a matrix M, and the cell distribution pattern therein is one where the cell-occupying area ratio gradually increases from the end face 11a, which is on the side where incident light enters, to the end face 12a, which is on the opposite side.

On the other hand, the transparent resin 10b does not have cells. As materials for the transparent resin 10b, acrylic resins and methacrylic resins such as polymethylmethacrylate, cyclic olefin resins such as norbornene, polycarbonate resins, celluloses such as cellulose triacetate, styrene-based resins, and mixed resins where two or more kinds of these materials are blended, are preferable.

In the present embodiment, it is configured so that a low-foamed region 13 is present in the vicinity of the end faces 11a and 11b, a high-foamed region 14 is present in the vicinity of the end faces 12a and 12b, and an intermediate-foamed region 15 is present between the low-foamed region 13 and high-foamed region 14. Note that similar to the light guiding section 10 of the first embodiment, the cell diameter may also gradually increase together with the cell-occupying area ratio from the end face 11a to the end face 12a.

By having such a cell distribution pattern, the light guiding body of the present embodiment is configured so as to output almost uniform light from the entire output surface 16 (top surface of the transparent resin 10b).

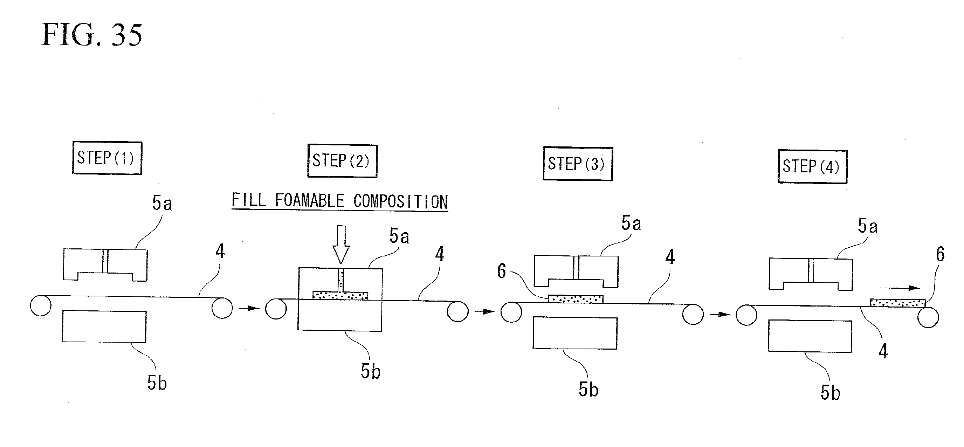

The light guiding body in Fig. 34 can be produced by laminating the foam 10a obtained in the same manner as that of the light guiding body of the first embodiment and transparent resin 10b together. In addition, as shown in Fig. 35, it can be produced using the in-mold injection molding method.

As shown in Fig. 35, in the in-mold injection molding method, firstly, a roll sheet 4 made of a transparent resin is placed in between dies for injection molding 5a and 5b (step (1)). Secondly, the sheet 4 made of a transparent resin is sandwiched between the dies 5a and 5b and a foamable composition 6 is injection-filled inside the dies 5a and 5b to integrate the sheet 4 made of a transparent resin and foamable resin composition (step (2)). Thirdly, the filled foamable composition 6 is solidified and thereafter, dies 5a and 5b are removed (step (3)). Fourthly, the sheet 4 made of a transparent resin is retrieved (step(4)). By repeating the steps (1) to (4), numerous laminated bodies where the sheet 4 made of a transparent resin and foamble resin composition are integrated can be obtained.

By imparting radiation energy and thermal energy to this laminated body and foaming it with a predetermined pattern, the light guiding body in Fig. 34 can be obtained. Note that it is necessary to cut the laminated bodies, which are linked in the form of a roll, individually before or after the foaming step.

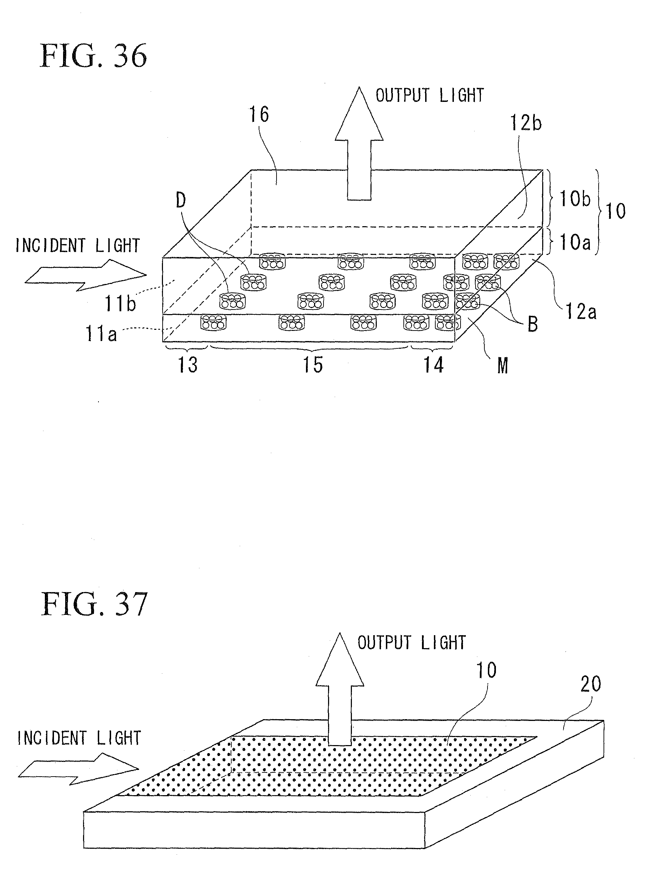

Fig. 36 is a perspective view showing the fourth embodiment (light guiding body) of the present invention. Although the light guiding body of the present embodiment is also configured only from the light guiding section 10, the light guiding section 10 is configured as a laminated body of a foam 10a and transparent resin 10b.

The foam 10a is almost equivalent to the light guiding section 10 of the second embodiment. In other words, the foam 10a is composed of a foam, in which a large number of dot-like sections D are formed in a matrix M, and it is configured so that the distribution of dot-like sections D gradually increases from the end face 11a, which is on the side where incident light enters, to the end face 12a, which is on the opposite side. Each of the dot-like sections D is an aggregate of numerous cells B.

On the other hand, the transparent resin 10b does not have cells. As materials for the transparent resin 10b, materials equivalent to those used for the transparent resin 10b in the third embodiment can be used.

When viewed in terms of the cell distribution of the light guiding section 10 as a whole, the cell distribution pattern is such that the cell-occupying area ratio gradually increases from the end faces 11a and 11b, which are in the side where incident light enters, to the end faces 12a and 12b, which are on the opposite side.

Also in the present embodiment, it is configured so that a low-foamed region 13 is present in the vicinity of the end faces 11a and 11b, a high-foamed region 14 is present in the vicinity of the end faces 12a and 12b, and an intermediate-foamed region 15 is present between the low-foamed region 13 and high-foamed region 14. Note that similar to the light guiding section 10 of the first embodiment, the cell diameter may also gradually increase together with the cell-occupying area ratio from the end face 11a to the end face 12a.

By having such a cell distribution pattern, the light guiding body of the present embodiment is configured so as to output almost uniform light from the entire output surface 16 (top surface of the transparent resin 10b).

The light guiding body in Fig. 36 can be produced by laminating the foam 10a obtained in the same manner as that of the light guiding body of the second embodiment and transparent resin 10b together. In addition, similar to the third embodiment, it can be produced using the in-mold injection molding method.

Fig. 37 is a perspective view showing the fifth embodiment (light guiding body) of the present invention. The light guiding body of the present embodiment is configured from the light guiding section 10 and a light reflecting section 20, which is provided so as to contact three end faces of the light guiding section. As the light guiding section 10 in this embodiment, the light guiding sections 10 in the first to fourth embodiments can be adopted where appropriate. By providing a light reflecting section 20 in the periphery of the end faces of the light guiding section 10, light utilization efficiency can be improved.

Examples of the production methods of the light guiding body of the present embodiment include a method to irradiate radiation onto a plate-like molded material formed of a foamable composition by putting a photomask (gradient pattern or the like) only over the region where the light guiding section 10 is intended to form, and thereafter heating the molded material to foam. In other words, the amount of radiation is controlled in the parts irradiated via the presence of the photomask and they become the light guiding section 10 having cell distribution patterns. On the other hand, by being irradiated uniformly and also sufficiently in terms of the amount of radiation, the peripheral parts which are protruded from the photomask become the light reflecting section 20 where numerous groups of microcells are internally present uniformly and in high density.

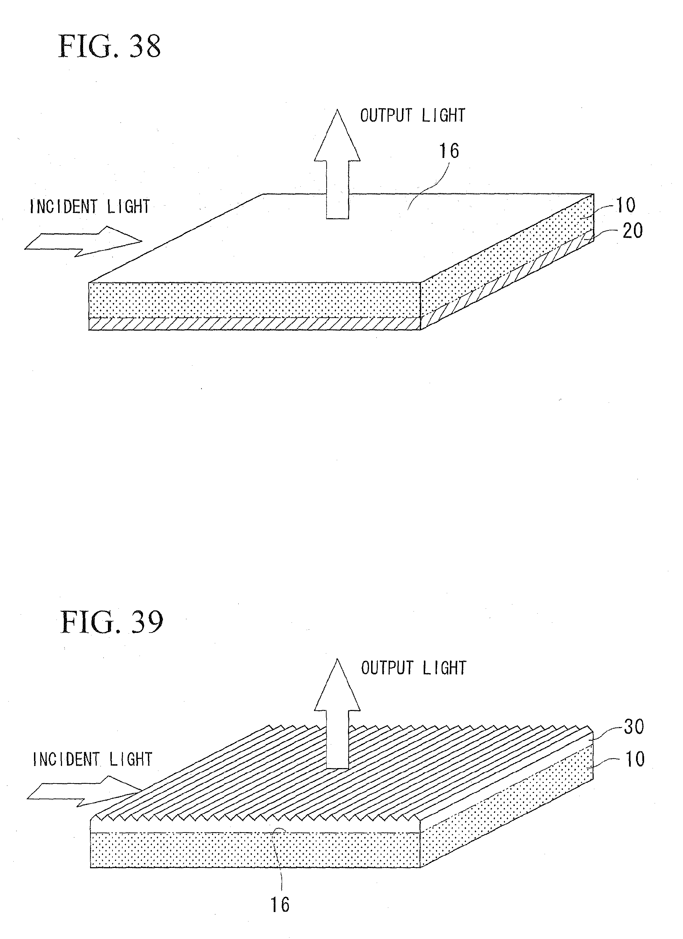

Fig. 38 is a perspective view showing the sixth embodiment (light guiding body) of the present invention. The light guiding body of the present embodiment is configured from the light guiding section 10 and a light reflecting section 20, which is provided so as to contact a surface, which is opposed to the output surface 16 of the light guiding section 10. As the light guiding section 10 in this embodiment, the light guiding sections 10 in the first to fourth embodiments can be adopted where appropriate. By providing a light reflecting section 20, light utilization efficiency can be improved.

Examples of the production methods of the light guiding body of the present embodiment include a method to prepare two plate-like molded materials formed of a foamable composition, irradiate radiation onto one of the plate-like molded material via the presence of a photomask (gradient pattern or the like) and irradiate radiation onto the other uniformly on the entire surface thereof, laminate the two thereafter, and while integrating the two, heat the lamination so as to foam. In other words, the amount of radiation is controlled in the parts irradiated via the presence of the photomask and they become the light guiding section 10 having cell distribution patterns. On the other hand, by being irradiated uniformly and also sufficiently in terms of the amount of radiation, the parts, which are uniformly irradiated without using the photomask, become the light reflecting section 20 where numerous groups of microcells are internally present uniformly and in high density.

Alternatively, as another method, it is also possible to produce the light guiding body of the present embodiment by irradiating radiation onto a plate-like molded material formed of a foamable composition via the presence of the photomask (gradient pattern) and by further irradiating radiation onto the surface layer of the back surface of the material with a shallow irradiation depth to heat and foam. In other words, the parts irradiated via the presence of the photomask become the light guiding section 10 having cell distribution patterns and the back-surface side thereof become the light reflecting section 20 where groups of microcells are internally present uniformly and in a high density in the surface layer thereof since irradiation is carried out locally.

Fig. 39 is a perspective view showing the seventh embodiment (light guiding body) of the present invention. The light guiding body of the present embodiment is configured from the light guiding section 10 and a prism section 30, which is provided so as to contact an output surface 16 of the light guiding section 10. As the light guiding section 10 in this embodiment, the light guiding sections 10 in the first to fourth embodiments can be adopted where appropriate.

Examples of the production methods of the light guiding body of the present embodiment include a method in which a translucent resin is molded in a die where a V-groove, which is to form a prism, is engraved in advance and thereafter, without taking out the resultant resin from the die, a plate-like molded material formed of a foamable composition, which has been light-irradiated via the presence of a photomask (gradient pattern) is put therein, and heat and pressure are applied to laminate and foam at the same time. By taking the resulting body from the die after foaming, a light guiding body, in which a light guiding section having cell distribution patterns and a prism layer with a V-groove on the surface thereof are integrated, is obtained.

In addition, the in-mold injection molding method described in the third embodiment can be used. In this case, a prism sheet may be used instead of the sheet 4 made of a transparent resin in Fig. 35.

The light guiding body of the present invention may be one which combines the abovementioned fifth to seventh embodiments where appropriate. For example, it may also be configured so as to have a light reflecting section 20 contacting three end faces of the light guiding section 10 and the surface opposed to the output surface 16 of the light guiding section 10. Moreover, a prism section 30 may further be added to this configuration.

### <Surface light-emitting apparatus>

The surface light-emitting apparatus of the present invention is equipped with the abovementioned light guiding body of the present invention and a light source which is arranged close to or in contact with the incident-plane side of the light guiding body. As a light source, linear light sources such as cold-cathode tubes or point light sources such as light-emitting diodes (LED) can be adopted where appropriate. The surface light-emitting apparatus of the present invention can be used in various display devices in a similar manner to the conventional surface light-emitting apparatus. For example, it can be used as a back light or front light in a liquid crystal display apparatus used in displays of TV, mobile phones, personal computers, automobiles, or the like. In addition, it can also be used as illuminations of an internal illumination system in display devices used for information signs, signboards, traffic control signs, or the like in stations and in public facilities. Moreover, it can also be used for general lighting used in offices and households.

An embodiment of the surface light-emitting apparatus of the present invention is described below while referring to figures. However, the present invention is not limited to the embodiment below.

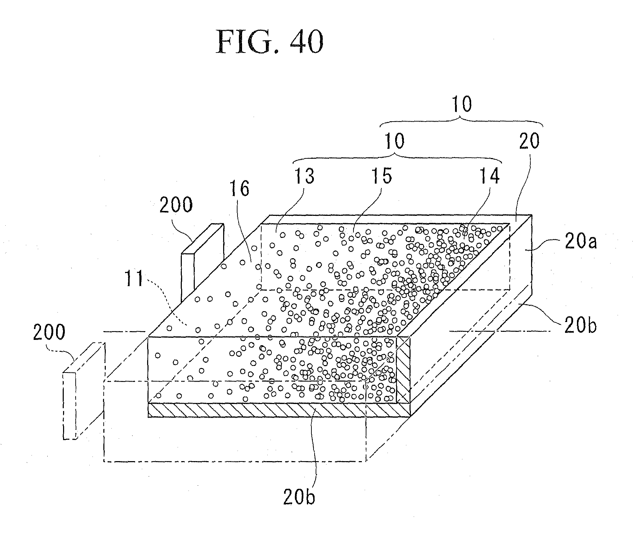

Fig. 40 is a perspective view showing the eighth embodiment (surface light-emitting apparatus) of the present invention. The surface light-emitting apparatus of the present embodiment is configured from a light guiding body 100 and light sources 200, which are provided closed to or in contact with an incident plane 11 of the light guiding body 100. In the present embodiment, a plurality (preferably 3 to 4) of white chip LEDs are used as the light source 200.

The light guiding body 100 is configured from the light guiding section 10 and reflecting section 20. Since the light guiding section 10 is the same as the light guiding section 10 of the first embodiment, identical components are given identical reference symbols and detailed explanations thereof are abbreviated. The reflecting section 20 is configured from an end-face light reflecting section 20a, which is in contact with three end faces of the light guiding section 10, and back-face light reflecting section 20b, which is in contact with the surface opposite to the output surface 16.

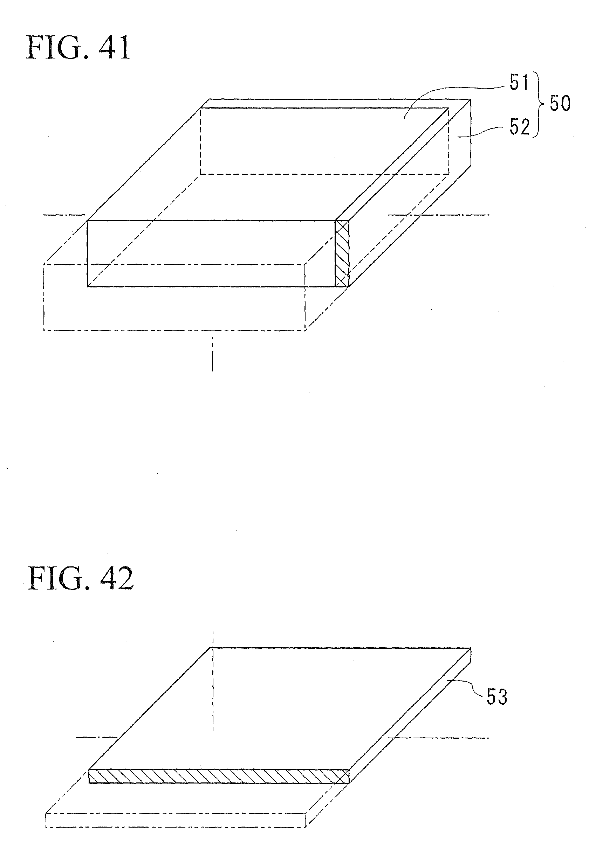

The surface light-emitting apparatus in the present embodiment can be produced by the procedures below, for example. Firstly, as shown in Fig. 41, a foamable composition is formed so as to become plate-shape and a plate 50 is prepared by irradiating radiation thereto where appropriate so that an internal section 51 thereof becomes the light guiding section 10 and three side faces 52 thereof become the end-face light reflecting section 20a. In the meantime, as shown in Fig. 42, a plate 53 is prepared by irradiating radiation thereto so as to become the back-face light reflecting section 20b.

Next, the light guiding body 100 is produced by superposing the plate 50 in Fig. 41 and the plate 53 in Fig. 42, pressing them while heating, and foaming while integrating the two plates.

Thereafter, the surface light-emitting apparatus of the present embodiment is obtained by fixing the light sources 200 with a constant interval so as to oppose the incident plane 11 of the light guiding section 10.

Note that gaps where light leaks out may be covered with a white seal or the like when fixing the light sources 200. In addition, it is also possible to arrange cold-cathode tubes in parallel instead of white chip LEDs as the light sources 200. However, white chip LEDs are much easier to downsize.

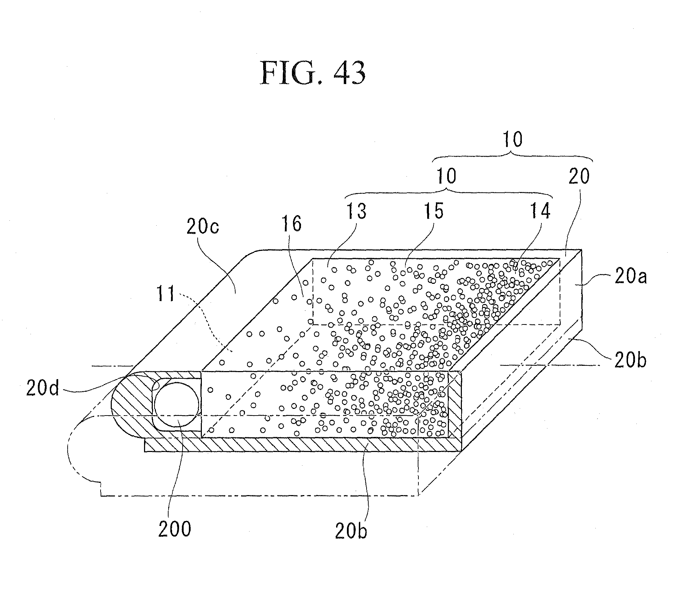

Fig. 43 is a perspective view showing the ninth embodiment (surface light-emitting apparatus) of the present invention. The surface light-emitting apparatus of the present embodiment is configured from a light guiding body 100 and a light source 200, which is provided closed to or in contact with an incident plane 11 of the light guiding body 100. In the present embodiment, a cold-cathode tube is used as the light source 200.

The light guiding body 100 is configured from the light guiding section 10 and reflecting section 20. Since the light guiding section 10 is the same as the light guiding section 10 of the first embodiment, identical components are given identical reference symbols and detailed explanations thereof are abbreviated. The reflecting section 20 is configured from an end-face light reflecting section 20a, which is in contact with three end faces of the light guiding section 10, a back-face light reflecting section 20b, which is in contact with the surface opposite to the output surface 16, and a light-source reflecting section 20c, which is provided on the side of the incident plane 11 of the light guiding section 10 so as to cover the light source 200. A penetration groove 20d of a U-groove shape, in which the side of the incident plane 11 thereof is opened, is provided in this light-source reflecting section 20c and the light source 200 is inserted therein.

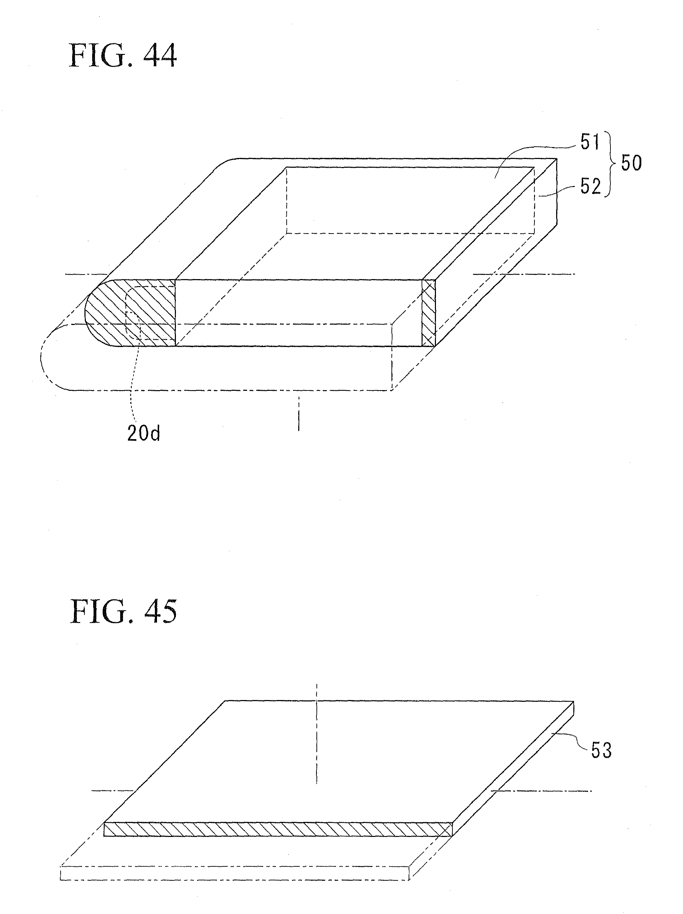

The surface light-emitting apparatus in the present embodiment can be produced by the procedures below, for example. Firstly, as shown in Fig. 44, a foamable composition is molded so as to become a plate-shape and a plate 50 is prepared by irradiating radiation thereto where appropriate so that an internal section 51 thereof becomes the light guiding section 10 and four side faces 52 thereof become the end-face light reflecting section 20a and light-source reflecting section 20c. In the meantime, as shown in Fig. 45, a plate 53 is prepared by irradiating radiation thereto so as to become the back-face light reflecting section 20b.

Next, the light guiding body 100 is produced by superposing the plate 50 in Fig. 44 and the plate 53 in Fig. 45, pressing them while heating, foaming while integrating the two plates, and subsequently providing the penetration groove 20d by drilling.

Thereafter, the surface light-emitting apparatus of the present embodiment is obtained by inserting the light source 200 into the penetration groove 20d.

Since the light source 200 is housed in the penetration groove 20d inside the light-source reflecting section 20c in the present embodiment, light leakage from the cold-cathode tube can be prevented almost completely. Note that white chip LEDs may also be used as the light source 200 instead of the cold-cathode tube.

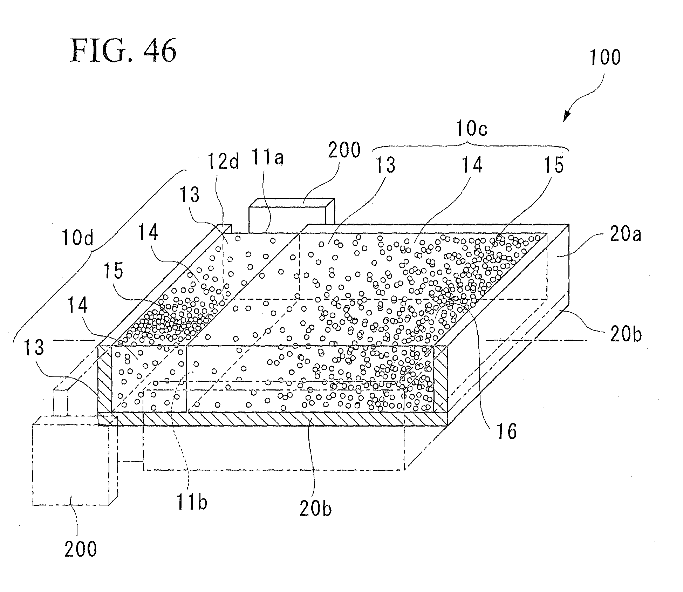

Fig. 46 is a perspective view showing the tenth embodiment (surface light-emitting apparatus) of the present invention. The surface light-emitting apparatus of the present embodiment is configured from a light guiding body 100 and light sources 200, which are provided closed to or in contact with an incident plane 11a of the light guiding body 100. In the present embodiment, a pair of white chip LEDs is used as the light source 200. The light guiding body 100 is configured from the light guiding section 10 and reflecting section 20.

The light guiding body 10 is configured from an output section 10c and an introducing section 10d, which is provided so as to contact an incident plane 11b of the output section 10c. Since the configuration of the output section 10c is the same as that of the light guiding section 10 of the first embodiment, identical components are given identical reference symbols and detailed explanations thereof are abbreviated.

The introducing section 10d has a cell distribution pattern where the cell-occupying area ratio gradually increases and thereafter gradually decreases from the incident plane 11a to the incident plane 11 a, which is in the opposite side (not illustrated), along the incident plane 11b. In other words, it is configured so that low-foamed regions 13 are present in the vicinity of the incident planes 11a on both sides, a high-foamed region 15 is present in the central section, and intermediate-foamed regions 14 are present between the low-foamed regions 13 and the high-foamed region 15 (that is, both sides of the high-foamed region 15). Note that the cell diameter may also increase/decrease together with the increase/decrease in the cell-occupying area ratio. By having such a cell distribution pattern, the introducing section 10d is configured so as to output almost uniform light towards the incident plane 11b. As a result, it is configured so as to output almost uniform light from the entire output surface 16 of the output section 10c.

The reflecting section 20 is configured from an end-face light reflecting section 20a, which is in contact with three end faces of the output section 10c, the introduction reflecting section 20d, which is in contact with the end face in the opposite side of the incident plane 11b of the introducing section 10d, and the back-face light reflecting section 20b, which is in contact with the surface opposite to the output surface 16.

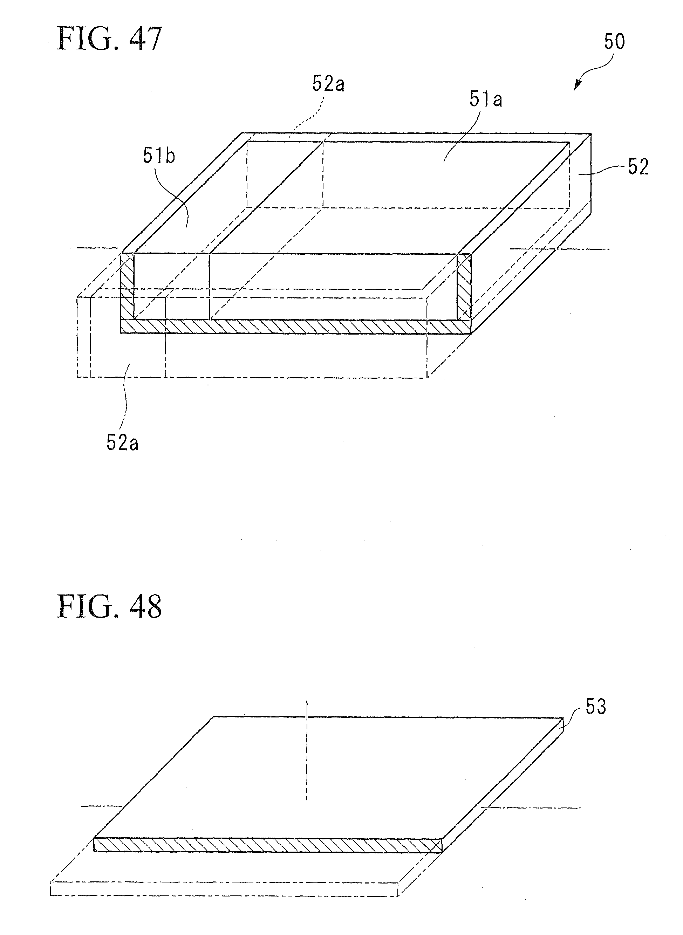

The surface light-emitting apparatus in the present embodiment can be produced by the procedures below, for example. Firstly, as shown in Fig. 47, a foamable composition is molded so as to become a plate-shape, and a plate 50 is prepared by irradiating radiation thereto where appropriate so that an internal section 51 thereof becomes the light guiding section 10 and four side faces 52 thereof become the end-face light reflecting section 20a and the introduction reflecting section 20d. In the meantime, as shown in Fig. 48, a plate 53 is prepared by irradiating radiation thereto so as to become the back-face light reflecting section 20b.

Next, the light guiding body 100 is produced by superposing the plate 50 in Fig. 47 and the plate 53 in Fig. 48, pressing them while heating, foaming while integrating the two plates, and subsequently removing 52a, which is a part contacting the pair of incident planes 11a in the side faces 52.

Thereafter, the surface light-emitting apparatus of the present embodiment is obtained by fixing the light sources 200 so as to oppose each incident plane 11a.

Note that gaps where light leaks out may be covered with a white seal or the like when fixing the light sources 200. In addition, it is also possible to provide a light reflecting section (may be a light reflecting section composed from a foam or a conventionally-known reflecting sheet) on the introducing section 10d also.

### Examples

Although the present invention will be described in detail using Examples below, the present invention is not limited to these Examples. In addition, the terms "parts" and "%" in Examples refer to "mass parts" and "mass%" respectively, unless stated otherwise.

### <Example 1>

### (1) Foamable composition

A foamable composition A where 100 parts of a copolymer (as a decomposable compound) which was composed of tert-butylacrylate (20%), tert-butylmethacrylate (40%), and methyl methacrylate (40%) were mixed with 3 parts of bis(4-tert-butylphenyl)iodonium perfluorobutanesulfonate (trade name: BBI-109 manufactured by Midori Kagaku Co., Ltd.) as an iodonium salt-based acid generating agent, was used.

### (2) Preforming step

A diluted solution of MEK/ethyl acetate with a ratio of 65/35 (mass ratio) was used to prepare a 25% solution of the foamable composition having the aforementioned mixed ratio and this resulting solution was used as a coating liquid. This coating liquid was coated onto the silicone-treated surface of a supporting body, which is formed from silicone PET with a thickness of 75 µm (trade name: MR-75 manufactured by Mitsubishi Polyester Film Inc.), using an applicator having a clearance of 300 µm and the coated supporting body was left in a constant-temperature dryer which was set to a temperature of 110°C for 10 minutes to evaporate and to remove the diluted solution. After collecting the sample from the constant-temperature dryer, the coated layer was peeled off from the silicone PET to obtain a film with a thickness of 45 µm. 10 pieces of 5 cm × 6 cm-sized squares were cut out from this film and were laminated and the resulting lamination was sandwiched by an SUS plate having a dimension of 10 cm × 10 cm and thickness of 1 mm and was subjected to press molding at 150°C for 3 minutes so that a pressure of 6 MPa is applied to the laminated sample by using a hand press machine (trade name: Mini TEST PRESS-10 manufactured by Toyo Seiki Co., Ltd.). After releasing the press, the sample was collected from the press machine in a state where the sample was still being sandwiched by the SUS plate, subjected to natural air cooling, and the resultant plate-like molded product of a foamable composition was detached from the SUS plate.

### (3) Ultraviolet ray irradiation

The plate-like molded product of a foamable composition obtained in the aforementioned step (2) was subjected to ultraviolet-ray irradiation at an exposure of 2000 mJ/cm² from both the top and bottom surfaces thereof using a metal halide lamp (trade name: multi metal lamp for ultraviolet radiation curing M03-L31 manufactured by Eye Graphics Co., Ltd.) as the light source.

### (4) Foaming step

The plate-like molded product of a foamable composition, which was irradiated with ultraviolet radiation, obtained in the aforementioned step (3) was sandwiched by a SUS plate having the dimensions of 10 cm × 10 cm and a thickness of 1 mm, and was foamed while being pressed at 130°C for 2 minutes so that a pressure of 4 MPa was applied to the laminated sample by using the hand press machine (trade name: Mini TEST PRESS-10 manufactured by Toyo Seiki Co., Ltd.). After releasing the press, the sample was collected from the press machine in a state where the sample was still being sandwiched by the SUS plate, subjected to natural air cooling, and the resultant plate-like foam was detached from the SUS plate.

### (5) Evaluation of foam structure

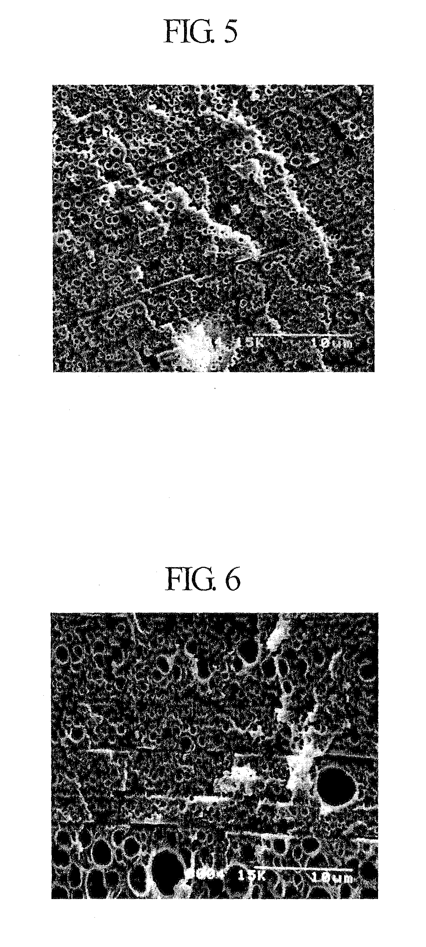

In order to verify the foam structure, cross sections of the obtained foam were observed. The sample was freeze-fractured in liquid nitrogen and gold deposition treatment was performed on the cross section of the foam and by using a scanning electron microscope (trade name: S-510 manufactured by Hitachi, Ltd.), the sectional structure of this gold-deposited section was observed. The obtained cross sectional picture is shown in Fig. 5. The average cell diameter was obtained by randomly selecting 100 cells from the observed image (magnification: 3000-fold) of the cross section of a foam resin layer and averaging diameters thereof. Foaming magnification was determined by measuring the foam density (A) according to Archimedes' method at room temperature and the density at the time when the foam was dissolved in a solvent and film-formed into an unfoamed state again (B), and calculating the value of B/A. The thickness of the foam was measured using a micrometer (trade name: MCD-25M manufactured by Mitutoyo Corporation). The obtained foam was a plate-like foam having an average cell diameter of 0.3 µm, foaming magnification of 1.3 fold, and thickness of 500 µm.

### <Example 2>

Foams were produced according to the same method as that of Example 1 except that the pressure applied to the laminated sample in the foaming step was 2 MPa. The obtained cross sectional picture is shown in Fig. 6.

The same foam structure evaluation as that carried out in Example 1 showed that the obtained foam was a plate-like foam having an average cell diameter of 1.0 µm, a foaming magnification of 1.8 fold, and a thickness of 700 µm.

### <Example 3>

### (1) Foamable composition

The same one used in Example 1 was used.

### (2) Preforming step

A supporting body with a coated layer where the coated layer composed of a foamable composition having a thickness of 45 µm was present on a silicone PET was produced in the same manner as that in Example 1.

### (3) Ultraviolet ray irradiation

The supporting body with a coated layer obtained in the aforementioned step (2) was subjected to ultraviolet-ray irradiation at an exposure of 2000 mJ/cm² from the side to which the coated layer was attached using a metal halide lamp (trade name: multi metal lamp for ultraviolet radiation curing M03-L31 manufactured by Eye Graphics Co., Ltd.) as the light source. A film formed of a foamable composition, which is already irradiated with ultraviolet radiation, was obtained by peeling the coated layer off from the silicone PET after irradiating ultraviolet radiation.

### (4) Foam forming step

10 pieces of 5 cm × 6 cm-sized films were cut from the film obtained in the aforementioned step (3) and were laminated and the resulting laminated sample was subjected to press molding to foam at 130°C for 2 minutes so that a pressure of 4 MPa is applied to the laminated sample by using a hand press machine (trade name: Mini TEST PRESS-10 manufactured by Toyo Seiki Co., Ltd.), in which a die for molding rectangular parallelepipeds having a bottom face with a dimension of 5 cm × 6 cm was set as shown in Fig. 2. After releasing the press, the die was removed from the hand press machine and was subjected to natural air cooling, and the resultant foam molded product was detached from the die for molding rectangular parallelepipeds at a point where the die temperature reached approximately 40°C.

### (5) Evaluation of foam structure

The same foam structure evaluation as that carried out in Example 1 showed that the obtained foam was a plate-like foam having an average cell diameter of 0.2 µm, a foaming magnification of 1.2 fold, and a thickness of 450 µm.

### <Example 4>

### (1) Foamable composition

A foamable composition B where 100 parts of a copolymer (as a decomposable compound) which was composed of tert-butylacrylate (60%), methyl methacrylate (30%), and methacrylic acid (10%) were mixed with 3 parts of bis(4-tert-butylphenyl)iodonium perfluorobutanesulfonate (trade name: BBI-109 manufactured by Midori Kagaku Co., Ltd.) as an iodonium salt-based acid generating agent, was used.

### (2) Preforming step

25% solution of the foamable composition having the aforementioned mixed ratio was prepared using ethyl acetate and this resulting solution was used as a coating liquid. This coating liquid was coated onto the silicone-treated surface of a supporting body, which was formed from silicone PET having a thickness of 75 µm (trade name: MR-75 manufactured by Mitsubishi Polyester Film Inc.), using an applicator having a clearance of 300 µm and the coated supporting body was left in a constant-temperature dryer, which was set to a temperature of 110°C, for 10 minutes to evaporate and to remove the diluted solution. As a result, a supporting body with a coated layer where the coated layer composed of a foamable composition having a thickness of 45 µm was present on a silicone PET was produced.

### (3) Ultraviolet ray irradiating step

The supporting body with a coated layer obtained in the aforementioned step (2) was subjected to ultraviolet-ray irradiation at an exposure of 1000 mJ/cm² from the side to which the coated layer was attached using a metal halide lamp (trade name: multi metal lamp for ultraviolet radiation curing M03-L31 manufactured by Eye Graphics Co., Ltd.) as the light source. A film formed of a foamable composition, which was already irradiated with ultraviolet radiation, was obtained by peeling the coated layer off from the silicone PET after irradiating ultraviolet radiation.

### (4) Foam forming step

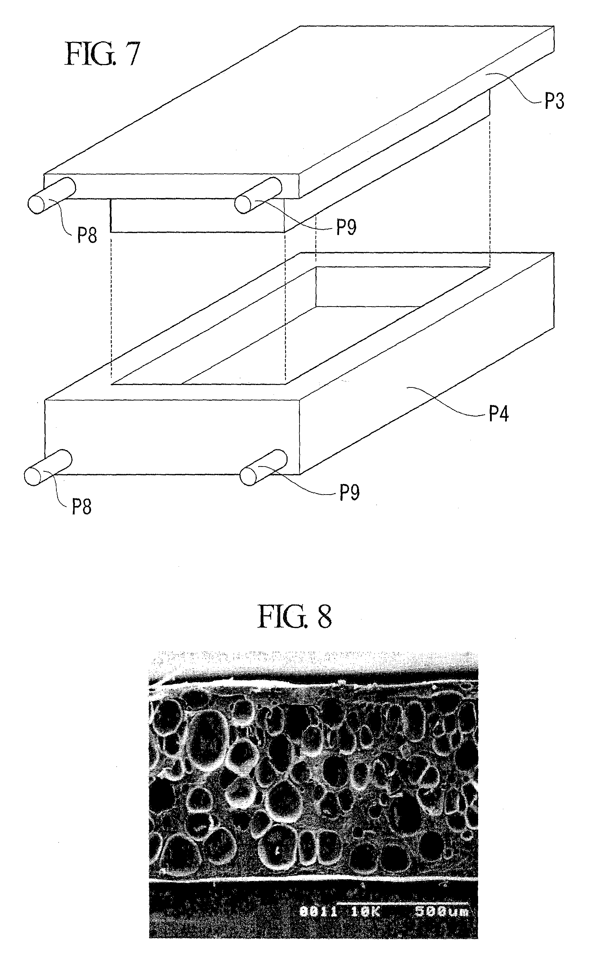

10 pieces of 5 cm × 6 cm-sized films were cut from the film obtained in the aforementioned step (3) and were laminated and the resulting laminated sample was subjected to press molding to foam at 130°C for 2 minutes so that a pressure of 4 MPa was applied to the laminated sample by using a hand press machine (trade name: Mini TEST PRESS-10 manufactured by Toyo Seiki Co., Ltd.), in which a die for molding rectangular parallelepipeds having a bottom face with a dimension of 5 cm × 6 cm was set as shown in Fig. 7. Thereafter, while maintaining the state where 4 MPa of pressure was applied, cooling water was introduced from the cooling water introducing section of the die for molding rectangular parallelepipeds. The die was removed from the hand press machine when the die temperature reached 50°C and while the cooling water remained introduced, the resultant foam molded product was detached from the die for molding rectangular parallelepipeds at a point where the die temperature reached approximately 40°C.

### (5) Evaluation of foam structure

The same foam structure evaluation as that carried out in Example 1 showed that the obtained foam was a plate-like foam having an average cell diameter of 0.1 µm, foaming magnification of 1.1 fold, and thickness of 450 µm.

### <Example 5>

### (1) Foamable composition

A foamable composition C where 20 parts of tert-butylacrylate monomer, 40 parts of tert-butylmethacrylate monomer, and 40 parts of methyl methacrylate monomer (30%) were mixed as decomposable compounds with 3 parts of bis(4-tert-butylphenyl)iodonium perfluorobutanesulfonate (trade name: BBI-109 manufactured by Midori Kagaku Co., Ltd.) as an iodonium salt-based acid generating agent, was used.

### (2) Preforming step (ultraviolet ray irradiating step)

The mixture of monomers and the acid generating agent described in the step (1) was casted into the bottom force of the die for molding rectangular parallelepipeds shown in Fig. 2 and was subjected to ultraviolet-ray irradiation at an exposure of 3000 mJ/cm² from the top surface thereof using a metal halide lamp (trade name: multi metal lamp for ultraviolet radiation curing M03-L31 manufactured by Eye Graphics Co., Ltd.) as the light source.

### (3) Foam forming step

A top force was mounted onto a cast die containing the cured resin obtained in the aforementioned step (2) and they were set onto a hand press machine (trade name: Mini TEST PRESS-10 manufactured by Toyo Seiki Co., Ltd.). The resin was subjected to press molding to foam at 130°C for 2 minutes so that a pressure of 4 MPa was applied thereto. Thereafter, while maintaining the state where 4 MPa of pressure was applied, cooling water was introduced from the cooling water introducing section of the die. The die was removed from the hand press machine when the die temperature reached approximately 40°C and the resultant foam molded product was collected from the die for molding rectangular parallelepipeds.

### (4) Evaluation of foam structure

The same foam structure evaluation as that carried out in Example 1 showed that the obtained foam was a plate-like foam having an average cell diameter of 0.3 µm, foaming magnification of 1.3 fold, and thickness of 500 µm.

### <Example 6>

### (1) Foamable composition

The same one used in Example 1 was used.

### (2) Preforming step and ultraviolet ray irradiating step

A film formed of a foamable composition, which was already irradiated with ultraviolet radiation, was obtained in the same manner as that in Example 3.

### (3) Foam forming step

Several pieces of 5 cm × 6 cm-sized films were cut from the foamable composition film, which was already irradiated with ultraviolet radiation and which was obtained in the aforementioned step (2), were laminated with several pieces of polycarbonate sheet having a thickness of 1 mm (trade name: Panlite sheet PC-1151 manufactured by Teijin Ltd.) which were cut out into a dimension of 5 cm × 6 cm and the resulting lamination was subjected to press molding to foam in the same manner as that in Example 1.

### (4) Evaluation of foam structure

The same foam structure evaluation as that carried out in Example 1 showed that the obtained foam was a foam in which a foamed layer having an average cell diameter of 0.3 µm, foaming magnification of 1.3 fold, and thickness of 45 µm was formed on the polycarbonate sheet.

### <Comparative Example 1>

Foams were produced according to the same method as that of Example 1 except that the plate-like foamable composition was not particularly pressurized in the foaming step and was foamed at 130°C for 2 minutes by being hanged in a constant-temperature heater (constant-temperature dryer) at normal pressure. Cross sectional picture of the obtained foam is shown in Fig. 8. The obtained foam contained a large number of enormous cells, which had cell diameters exceeding 100 µm. Additionally, in terms of appearance, a neat, plate-like foam was not obtained but instead a distorted amorphous foam. The amorphous foam was also a defective foam having uneven surfaces.

### <Comparative Example 2>

### (1) Foamable composition

The same one used in Example 1 was used.

### (2) Preforming step

As in Example 1, a film with a thickness of 45 µm was obtained by peeling off the coated layer formed of the foamable composition from the silicone PET. Several pieces of 5 cm × 6 cm-sized films were cut therefrom, laminated with the same polycarbonate sheet as that in Example 6, and the resulting lamination was sandwiched by an SUS plate having a dimension of 10 cm × 10 cm and a thickness of 1 mm and was subjected to press molding at 150°C for 3 minutes so that a pressure of 6 MPa was applied to the laminated sample by using a hand press machine (trade name: Mini TEST PRESS-10 manufactured by Toyo Seiki Co., Ltd.). After releasing the press, the sample was collected from the press machine in a state where the sample was still being sandwiched by the SUS plate, subjected to natural air cooling, and the resultant molded product, in which a foamable composition layer having a thickness of 45 µm was laminated onto the polycarbonate sheet, was detached from the SUS plate.

### (3) Ultraviolet ray irradiating step

The molded product obtained in the aforementioned step (2) was subjected to ultraviolet-ray irradiation at an exposure of 2000 mJ/cm² from the side of the foamable composition layer formed on the polycarbonate sheet using a metal halide lamp (trade name: multi metal lamp for ultraviolet radiation curing M03-L31 manufactured by Eye Graphics Co., Ltd.) as the light source.

### (4) Foam forming step

The molded product irradiated with ultraviolet radiation was not particularly pressurized and was foamed at 130°C for 2 minutes by being hanged in a constant-temperature heater (constant-temperature dryer) at normal pressure. The molded product was then collected from the constant-temperature heater (constant-temperature dryer) and was subjected to natural air cooling.

### (5) Foam appearance

The obtained foam had numerous parts where foamed layer was peeled from the supporting body formed of a polycarbonate sheet; that is, the foam had hemispherical-shaped irregularities having diameters of a few millimeters on the supporting body. In addition, it was not possible to produce uniform microfoams which were neatly film-formed and laminated onto the supporting body resulting in defective foams.

### <Reference Example>

The foamable composition used in Example 4 was foamed by being subjected to the preforming step and ultraviolet ray irradiating step of Example 4 and the foaming step of Example 3. In other words, the resulting foam was cooled by releasing the pressure in advance and thereafter subjected to the same cooling step as that in Example 4. The obtained foam contained a large number of enormous cells having cell diameters of a few millimeters which were even observable by eye and in terms of appearance, a neat, plate-like foam was not obtained but instead a distorted amorphous foam and was also a defective foam having uneven surfaces.

The above results are summarized in Tables 1 and 2.

**[Table 1]**

| | Ex.1 | Ex.2 | Ex.3 | Ex.4 | Ex. 5 | Ex.6 |
|---|---|---|---|---|---|---|
| Foamable composition | A | A | A | B | C | A |
| Preforming condition | Coating method + plate press | Coating method + plate press | Coating method | Coating method | Casting method | Coating method |
| UV irradiating condition | 2000 mJ/cm² | 2000 mJ/cm² | 2000 mJ/cm² | 1000 mJ/cm² | 3000 mJ/cm² | 2000 mJ/cm² |
| | Irradiated surface: both top and bottom surfaces | Irradiated surface: both top and bottom surfaces | Irradiated surface: coated layer surface | Irradiated surface: coated layer surface | Irradiated surface: cast die top surface | Irradiated surface: coated layer surface |
| Foaming condition | Plate press | Plate press | Die | Die | Die | Plate press |
| | 4MPa | 2MPa | 4 MPa | 4 MPa | 4MPa | 4 MPa |
| | 130°C | 130°C | 130°C | 130°C | 130°C | 130°C |
| | 2 minutes | 2 minutes | 2 minutes | 2 minutes | 2 minutes | 2 minutes |
| Cooling condition | Pressure release | Pressure release | Pressure release | Pressure application | Pressure release | Pressure release |
| | | | | water cooling | | |
| Foam appearance | Favorable | Favorable | Favorable | Favorable | Favorable | Favorable |
| | | | | | | (PC laminated) |
| Cell diameter (µm) | 0.3 | 1 | 0.2 | 0.1 | 0.3 | 0.3 |
| Foaming magnification | 1.3 | 1.8 | 1.2 | 1.1 | 1.3 | 1.3 |
| Thickness (µm) | 500 | 800 | 450 | 450 | 500 | 45 |

**[Table 2]**

| | Comp. Ex. 1 | Comp. Ex. 2 | Ref Ex. |
|---|---|---|---|
| Foamable composition | A | A | B |
| Preforming condition | Coating method + plate press | Coating method + plate press | Coating method |
| UV irradiating condition | 2000 mJ/cm² | 2000 mJ/cm² | 1000 mJ/cm² |
| | Irradiated surface: both top and bottom surfaces | Irradiated surface: foamable composition layer surface | Irradiated surface : coated layer surface |
| Foaming condition | Normal pressure | Normal pressure | Die 4 MPa |
| | 130°C 2 minutes | 130°C 2 minutes | 130°C 2 minutes |
| Cooling condition | Normal pressure | Normal pressure | Pressure release |
| | (Pressure release) | (Pressure release) | |
| Foam appearance | Defective | Defective | Defective |
| | | (PC laminated) | |
| Cell diameter (µm) | 10 µm or more | A few millimeters | A few millimeters |
| | Internally present | Internally present | Internally present |

### <Example 7-1>

### <Foam sheet production>

### (1) Formation of coated layer

3 parts of bis(4-tert-butylphenyl)iodonium perfluorobutanesulfonate (trade name: BBI-109 manufactured by Midori Kagaku Co., Ltd.) as an iodonium salt-based acid generating agent were mixed with 100 parts of a copolymer of tert-butylacrylate (60 weight%), methyl methacrylate (30 weight%), and methacrylic acid (10 weight%), as a decomposing compound. The resulting mixture was dissolved in ethyl acetate to prepare a solution having a solid content of 25% which was used as a coating liquid.

This coating liquid was coated onto one surface of a supporting body composed of transparent polyethylene terephthalate (trade name; Lumirror 75-T60, manufactured by Panac Co., Ltd.) having a thickness of 75 µm using an applicator bar for application having a gap width of 300 µm. Immediately thereafter, the solvent was removed by evaporation by allowing the supporting body to stand for 5 minutes in a constant temperature dryer at a temperature of 110°C. A thin film-like, colorless and transparent coated layer was formed on the polyethylene terephthalate supporting body. The thickness of the coated layer was adjusted within a range of 40 to 50 µm.

### (2) Ultraviolet ray irradiation

Ultraviolet ray irradiation was carried out from the photomask side by adhering a chromium mask (made of quartz glass) having a line and space pattern onto the coated layer formed in the aforementioned step (1). For the line and space pattern, one in which lines transmitting ultraviolet radiation (width 100 µm) and lines completely screening ultraviolet radiation (gap; width 100 µm) are arranged alternately. Ultraviolet radiation was irradiated so that an exposure of 2000 mJ/cm² was achieved using a metal halide lamp as the light source. The coated layer obtained by removing the chromium mask after irradiation was not different from that obtained after the step (1) and remained colorless and transparent.

### (3) Foaming due to heat treatment

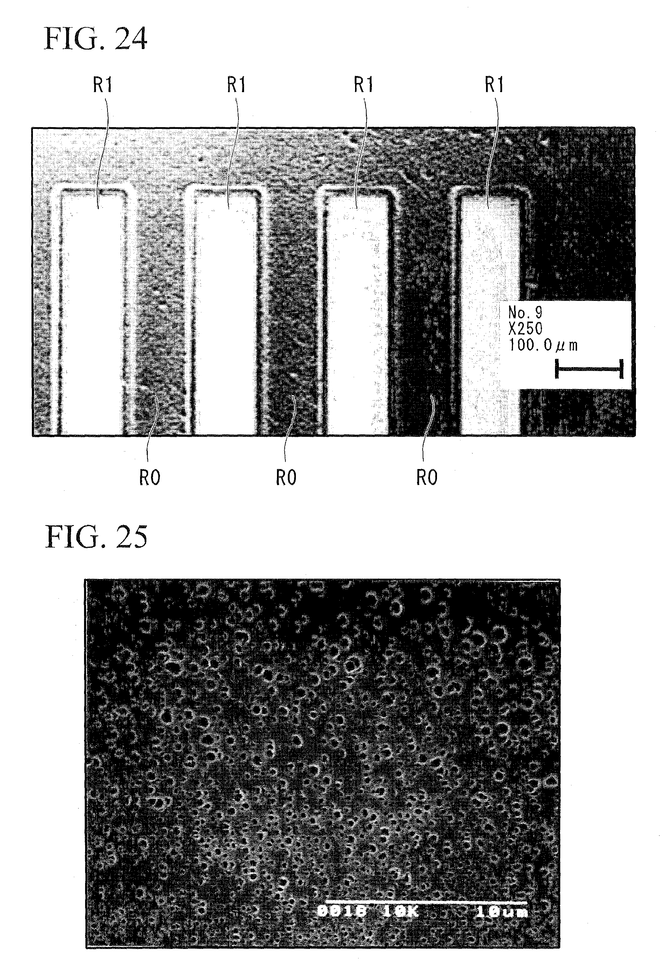

The coated layer obtained by the aforementioned step (2) was peeled from the supporting body and its single film was heat treated for 5 minutes in an incubator maintained at a temperature of 110°C. When the film was observed using a microscope (trade name: KH-2700 manufactured by HiRox Co., Ltd.) after the heat treatment, as shown in Fig. 24, it was verified that the ultraviolet-ray irradiated section 10 foamed and appeared white in a line shape with a line width of 100 µm whereas the unirradiated section 20 remained an unfoamed section, which was colorless and transparent.

### (4) Evaluation of foam structure

The foam structure in the ultraviolet-ray irradiated section 10 of the film obtained in the aforementioned step (3) was verified by the observation using an scanning electron microscope (trade name: S-510 manufactured by Hitachi, Ltd.). The film was then immersed in liquid nitrogen and freeze-fractured and the obtained cross section was subjected to a metal deposition treatment and thereafter, the cross sectional observation was carried out using the scanning electron microscope (trade name: S-510 manufactured by Hitachi, Ltd.). The result is shown in Fig. 25.

Evaluation of foam structure was carried out using cell diameter and cell density calculated from the observed images. Specifically, blocks, where a group of cells of a total number of approximately 150 cells was internally present, were selected randomly from the observed images (magnification 5000-fold) and after these cell groups and the matrices other than those cell groups were binary processed, cell diameter and cell density were evaluated using an image analyzer (trade name: Image Analyzer V10 manufactured by Toyobo Co., Ltd.). When this evaluation was made, the average of cell diameters (µm) was determined as the cell diameter and cell-occupying area ratio (%) was determined as the cell density.

As a result, it was verified that the ultraviolet-ray irradiated section R1, which was whitely foamed in a line shape with a line width of 100 µm, had a cell diameter of 0.25 µm and cell-occupying area ratio of 28%. On the other hand, no cells were observed in the unirradiated section R0, which was colorless and transparent. As described so far, it was possible to obtain a partial foam having a foamed region where the cell diameter was 1 µm or less.

### <Example 7-2>

A foam having a cell distribution was prepared in a similar manner to that of Example 7-1. This is with a proviso that in the step (2) in Example 7-1, a chromium mask having dot-like patterns, in which the dot diameter was 3 µm, instead of the line and space pattern was used and ultraviolet radiation was irradiated at an exposure of 1 J/cm² using the uniform parallel light from a Y-ray lamp (peak wavelength 214 nm).

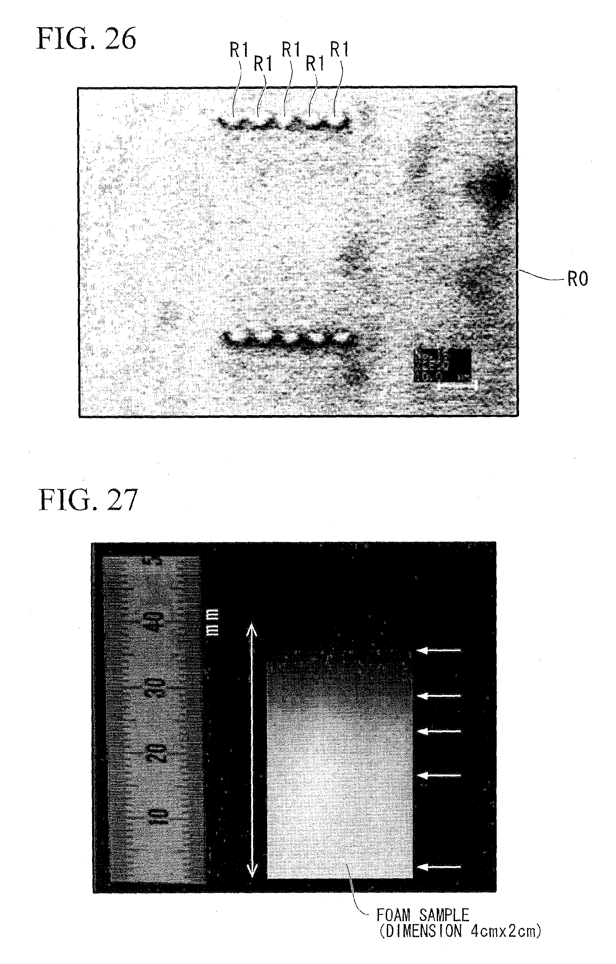

As shown in Fig. 26, the obtained foam had the ultraviolet-ray irradiated section R1 having a diameter of 3 µm which was whitely foamed in a dot-like pattern. Additionally, its foam structure was the same as that of Example 7-1. On the other hand, the unirradiated section R0 was colorless and transparent and no cells were observed therein. As described so far, it was possible to obtain the partial foam having a foamed part at a few micrometer-level by use of uniform parallel light.

### <Example 7-3>

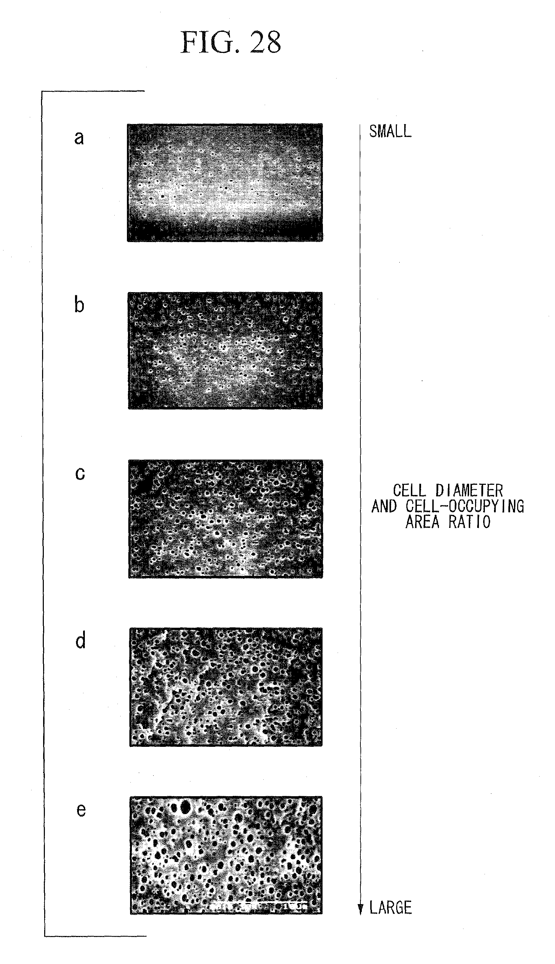

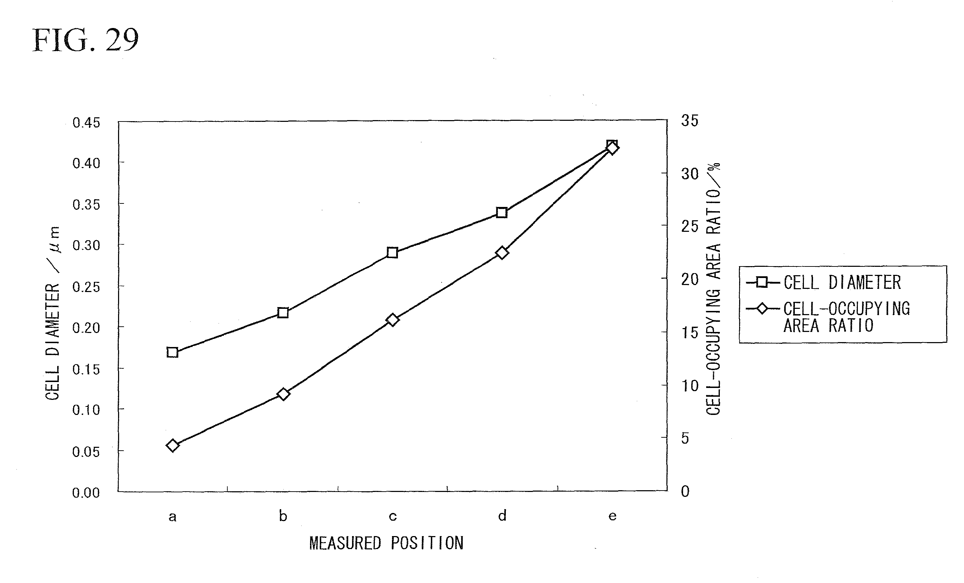

A foam having a cell distribution was prepared in a similar manner to that of Example 7-1. This is with a proviso that in the step (2) in Example 7-1, a photomask having a continuous gradation pattern instead of the line and space pattern was used. As shown in Fig. 27, the obtained foam was foamed so that it gradually became whiter from the side where mask transmittance was high to the side where mask transmittance was low. As shown in Fig. 28, when the foam structure thereof was evaluated at 5 representative points (a to e) as it turns white, it was verified that cell diameter and cell-occupying area ratio were gradually increasing in the same film. Specifically, the foam structures at the points a to e were as follows, respectively: (a) cell diameter 0.17 µm, cell-occupying area ratio 4%, (b) cell diameter 0.22 µm, cell-occupying area ratio 9%, (c) cell diameter 0.29 µm, cell-occupying area ratio 16%, (d) cell diameter 0.34 µm, cell-occupying area ratio 22%, and (e) cell diameter 0.42 µm, cell-occupying area ratio 32% (refer to Fig. 29). As described so far, it was possible to obtain the gradient foam where the cell distribution thereof had a continuous gradient.

### <Example 7-4>

A foam sheet was obtained as follows. In the step (1) of Example 7-1, the coating liquid was coated to laminate so that the thickness of the coated layer will be 400 µm. Ultraviolet radiation was irradiated onto this laminated sheet with an exposure of 1000 mJ/cm². A metal halide lamp having an output of 120 w/cm was used as an ultraviolet lamp. After the irradiation, the laminated sheet was foamed due to a heat treatment by being passed between two metal rollers having different temperatures. When this treatment was carried out, the temperature of one metal roller was adjusted to 100°C whereas the temperature of the other metal roller was adjusted to 130°C.

As a result, it was possible to obtain a gradient foam, in which cell diameter and cell-occupying area ratio had gradients of 0.1 to 1 µm and 4 to 30% respectively, from the surface of laminated sheet which contacted the roller with a higher temperature to the other surface (the surface of laminated sheet which contacted the roller with a lower temperature).

### <Example 7-5>

A laminated sheet was produced by a coating process using 3 types of decomposable compounds having different copolymerization ratio between tert-butylacrylate and methylmethacrylate (tert-butylacrylate/methylmethacylate = 80/20, 60/40, and 40/60) which were laminated in the aforementioned order. When the laminated sheet was produced, 3 parts of BBI-109 were mixed in each of the layers relative to 100 parts of the decomposable compounds. The thickness of each layer was adjusted so as to become 50 µm. Ultraviolet radiation was irradiated onto this laminated sheet with an exposure of 1000 mJ/cm². A metal halide lamp having an output of 120 w/cm was used as an ultraviolet lamp. After the irradiation, the laminated sheet was foamed by heating at 110°C for 2 minutes.

As a result, it was possible to obtain a gradient foam, in which cell diameter and cell-occupying area ratio increases from the layer where the copolymerization ratio of tert-butylacrylate is low to the layer where the copolymerization ratio of tert-butylacrylate is high, and in which the cell distribution thereof varies stepwise in the thickness direction.

### <Example 8-1>

### Production of thin light guiding plate

### (1) Sheet formation using foamable composition

3 parts of bis(4-tert-butylphenyl)iodonium perfluorobutanesulfonate (trade name: BBI-109 manufactured by Midori Kagaku Co., Ltd.) as an iodonium salt-based acid generating agent were mixed with 100 parts of a copolymer of tert-butylacrylate (60 weight%), methyl methacrylate (40 weight%), and methyl methacrylate (10 weight%), as a decomposing compound and an ethyl acetate solution, in which the mixture was dissolved, was prepared (solid content: 25%). This solution was coated onto the silicone-treated surface of a silicone PET sheet (trade name: Lumirror SP-PET-01-75BU manufactured by Panac Co., Ltd.) using an applicator bar having a coating thickness of 300 µm (trade name: Doctor Blade TD-type manufactured by Yoshimitsu Seiki). A coated layer, which was colorless and transparent, was obtained by putting the sheet thereafter in a constant-temperature dryer which was set to a temperature of 110°C to evaporate and to remove the solvent. A foamable film having a thickness of 50 µm was obtained by peeling this coated layer from the silicone PET sheet.

### (2) Flat-sheet molding

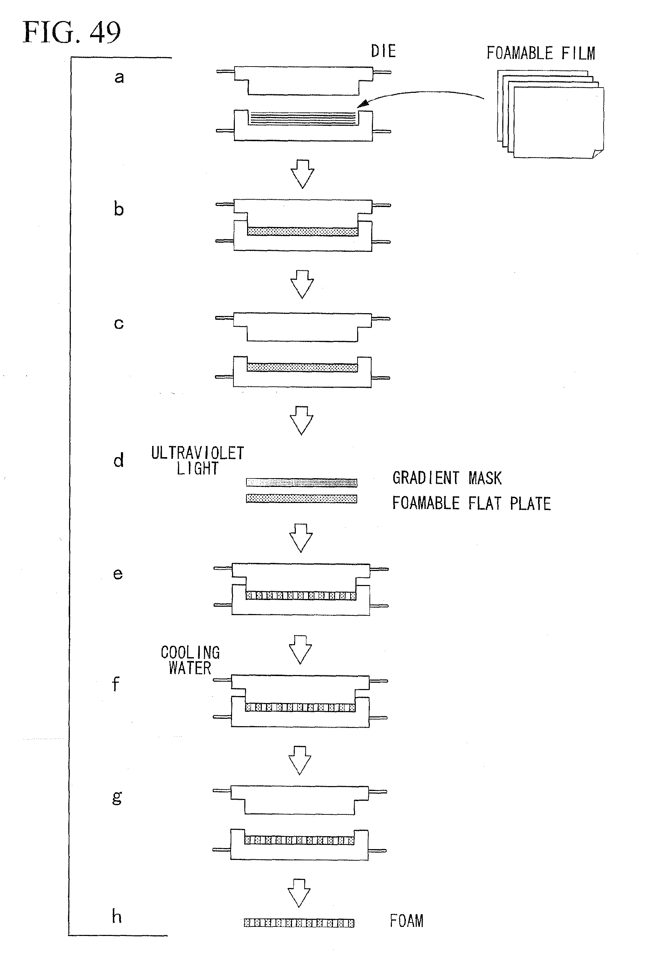

Pieces of the foamable film obtained in the aforementioned step (1) having a dimension of 50 mm × 35 mm were cut and 12 pieces thereof were laminated and the resulting lamination was sandwiched by a flash mold having a smooth surface (dimension; 50 mm × 35 mm) as shown in Fig. 49 (a) and (b) and was subjected to hot-press by using a hand press machine (trade name: Mini TEST PRESS-10 manufactured by Toyo Seiki Co., Ltd.) (press pressure; 6MPa, press temperature; 150°C for 3 minutes). Thereafter, as shown in Fig. 49 (c), when returned to normal pressure and was being air cooled until a temperature of 40°C was achieved, the mold was removed to obtain a foamable flat sheet, which was colorless and transparent.

### (3) Ultraviolet ray irradiation

A photomask made of quartz glass (dimension; 50 mm × 35 mm) was put on the top surface of the foamable flat sheet, which was obtained in the aforementioned step (2), so as to cover the entire surface and ultraviolet radiation was irradiated thereon. The photomask having a gradient pattern where transmittance thereof continuously changes from 0 to 40% (measured wavelength 254 nm) in longitudinal direction was used. Ultraviolet radiation was irradiated using a metal halide lamp (trade name: multi metal lamp for ultraviolet radiation curing M03-L31 manufactured by Eye Graphics Co., Ltd.) as the light source so as to achieve an exposure of 2200 mJ/cm². The photomask was removed after the irradiation to obtain a colorless and transparent foamable flat sheet similar to that obtained in the step (1).

### (4) Foaming by heating

The foamable flat sheet obtained in the aforementioned step (3) was foamed while being subjected to hot-press process using the hand press machine by sandwiching in the flash mold in a similar manner to that in the aforementioned step (2) as shown in Fig. 49 (e) (press pressure; 4MPa, press temperature; 130°C for 2 minutes). Thereafter, as shown in Fig. 49 (f), the sheet was quenched to 50°C by immediately circulating cooling water inside the mold while pressure was still being applied thereto. Subsequently, as shown in Fig. 49 (g), when returned to normal pressure and while being air cooled until a temperature of 40°C was achieved, the mold was removed to obtain a light guiding section formed from the foam as shown in Fig. 49 (h).

The obtained light guiding section was flat-sheet shaped having a uniform thickness from the incident plane side (the light source side when used as a surface light-emitting apparatus) to the side of opposite surface thereof (the opposite side to the incident plane) and the thickness of the obtained light guiding section was 600 µm. A micrometer (trade name: MCD-25M manufactured by Mitutoyo Corporation) was used for thickness measurements. Additionally, transparency of this light guiding section changed continuously (becoming more translucent as the transmittance of the photomask increased).

### (5) Evaluation of foam structure

Cell diameter (average of cell diameters) and cell-occupying area ratio (in the cross section of 100 µm² when the maximum cell diameter was less than 1 µm, in the cross section of 2500 µm² when the maximum cell diameter was 1 µm or more and less than 5 µm, and in the cross section of 10000 µm² when the maximum cell diameter was 5 µm or more) of the light guiding section obtained in the aforementioned step (4) were calculated from the observed images of cross sections obtained by a scanning electron microscope.

The observed images of cross sections were obtained by freeze-fracturing the light guiding section immersed in liquid nitrogen in parallel from the incident plane to the opposing surface and after subjecting the fractured surface to a metal deposition treatment, observing the fractured surface using an scanning electron microscope (trade name: S-510 manufactured by Hitachi, Ltd., magnification 5000-fold).

Cell diameter and cell-occupying area ratio were calculated using an image analyzer (trade name: Image Analyzer V10 manufactured by Toyobo Co., Ltd.) after cells and matrices in the observed images were binary processed.

The obtained light guiding section had a gradient distribution where cell diameter and cell-occupying area ratio were gradually increasing from the incident plane to the opposing surface thereof. The maximum cell diameter was 0.3 µm. Additionally, cell-occupying area ratio varied from 0 to 16%.

### (6) Surface light-emitting apparatus and evaluation of light emission

4 white chip LEDs (manufactured by Nichia Corporation, outside dimension; 1.2 mm × 1.8 mm × 0.6 mm) were uniformly arranged in the side surface of a light guiding body formed from the light guiding section obtained in the aforementioned step (4). The incident direction at this time was adjusted so as to be in line with the direction where the light guiding section was becoming translucent. Additionally, a prism sheet having triangle pole-shaped irregularities formed on the surface thereof and a light reflecting sheet (reflectance of 90% or more) were arranged on one surface (output surface) and the opposite surface of the light guiding section respectively, and a surface light-emitting apparatus was obtained by incorporating all these optical members into a white enclosure.

When uniformity of light emission of the obtained surface light-emitting apparatus was evaluated by visual observation, uniform light emission was observed even without the superposition of a light diffusing sheet and no cell distribution pattern was visually recognized. In other words, a thin light guiding body having a thickness of 0.6 mm and also emits light uniformly without causing brightness nonuniformity even without the presence of a light diffusing sheet which was difficult to achieve with the conventional techniques could readily be obtained.

### <Example 8-2>

A foamable flat-sheet (A) was obtained by a process, which was almost the same as that in the steps (1) to (3) of Example 8-1. This was with a proviso that a photomask (dimension; 48 mm × 31 mm) smaller than that used in the step (3) of Example 8-1 was used. The foamable flat-sheet was covered with this photomask by aligning one side of the photomask in the longitudinal direction to the center of one side of the foamable flat-sheet in the longitudinal direction so that gaps were made between the photomask and other 3 sides of the foamable flat-sheet (each gap was 2 mm) and ultraviolet radiation was irradiated thereon.

This foamable flat-sheet (A) was laminated with three pieces of the foamable film (B) which was obtained in the step (1) of Example 8-1 and whose entire surface was irradiated with ultraviolet radiation (exposure of 2200 mJ/cm²) and the resulting lamination was subjected to hot-press process as in the step (4) of Example 8-1. As a result, an integrated light guiding body including light reflecting sections, which were foamed in high density, at the end face and bottom surface of the light guiding section could be obtained. The thickness of the light guiding section of the obtained light guiding body was equivalent to that of the light guiding section of Example 8-1.

When cell diameter and cell-occupying area ratio of the obtained light guiding body were determined as in Example 8-1, those in the light guiding section were equivalent to those of Example 8-1. On the other hand, the cell diameter in the light reflecting section was 0.4 µm and was uniform as a whole. Additionally, the cell-occupying area ratio in the light reflecting section was 52% and was uniform as a whole. This light reflecting section had high light reflectance of 90% or more which was different from that of translucent light guiding section.

Although uniformity of light emission was evaluated in a manner which was almost the same as that in the step (6) of Example 8-1, the light reflecting sheet arranged on the surface opposite to the output surface was not used. This integrated light guiding body not only emitted light uniformly similar to that in Example 8-1 but also light leakage from the gaps between the body and the white enclosure was absent due to the light reflecting section on the end face thereof.

### <Example 8-3>

After filling a die (dimension; 50 mm × 35 mm) where triangle pole-shaped irregularities were arranged regularly with an epoxy acrylate-based, ultraviolet radiation-curable resin (manufactured by JSR Corporation), the resin was cured by irradiating ultraviolet radiation. The foamable flat-sheet obtained in the step (3) of Example 8-1 was superposed on the cured surface and was foamed by the hot-press process. As a result, an integrated light guiding body having a prism section on the top surface of the light guiding section was obtained. The thickness of the light guiding section of the obtained light guiding body was equivalent to that of the light guiding section in Example 8-1.

When cell diameter and cell-occupying area ratio of the obtained light guiding body were determined as in Example 8-1, those in the light guiding section were equivalent to those of Example 8-1. On the other hand, no foam structure was observed in the prism section.

Although uniformity of light emission was evaluated in a manner which was almost the same as that in the step (6) of Example 8-1, the prism sheet arranged on the surface opposite to the output surface was not used. This integrated light guiding body not only emitted light uniformly similar to that in Example 8-1 but also resulted in a favorable surface light-emitting apparatus without the use of a separate prism sheet.

### <Example 8-4>

After filling a die (dimension; 50 mm × 35 mm) where triangle pole-shaped irregularities were arranged regularly with an epoxy acrylate-based, ultraviolet radiation-curable resin (manufactured by JSR Corporation), the resin was cured by irradiating ultraviolet radiation. The foamable flat-sheet (A) and foamable film (B) of Example 8-2 were laminated on the cured surface in this order and simultaneously subjected to the hot-press process. As a result, an integrated light guiding body having a light guiding section, light reflecting section, and prism section was obtained. The thickness of the light guiding section of the obtained light guiding body was equivalent to that of the light guiding section in Example 8-1.

When cell diameter and cell-occupying area ratio of the obtained light guiding body were determined as in Example 8-1, those in the light guiding section and light reflecting section were equivalent to those of Example 8-1. On the other hand, no foam structure was observed in the prism section.

Although uniformity of light emission was evaluated in a manner which was almost the same as that in the step (6) of Example 8-1, the prism sheet and light reflecting sheet were not used. In addition, since there were no independent members present, the white enclosure for housing the members could also be omitted.

This integrated light guiding body not only emitted light uniformly similar to that in Example 8-1 but also resulted in a favorable surface light-emitting apparatus without the use of a separate prism sheet, light reflecting sheet, or white enclosure.

### <Example 8-5>

Ultraviolet radiation was irradiated onto a piece of the foamable film obtained in the step (1) of Example 8-1 via a mask with a gradient pattern as in the step (3) of Example 8-1. Thereafter, the foamable film was subjected to the hot-press process together with a polycarbonate resin sheet (PC sheet; thickness of 550 µm), which was a transparent resin, as in the step (4) of Example 8-1. The thickness of the overall light guiding section of the obtained light guiding body was equivalent to that of the light guiding section in Example 8-1 and was 600 µm. This was with a proviso that the thickness of the parts formed from foam was 50 µm among the overall thickness.

When cell diameter and cell-occupying area ratio of the obtained light guiding body were determined as in Example 8-1, those in the parts formed from foam were equivalent to those of Example 8-1. On the other hand, no foam structure was observed in the resin sheet. The cell-occupying area ratio of the light guiding section as a whole varied from 0% to 1.3%.

When uniformity of light emission was evaluated in a manner which was almost the same as that in the step (6) of Example 8-1, it was verified that the same uniform light emission as that in Example 8-1 was achieved.

### <Example 8-6>

Ultraviolet radiation (exposure of 330 mJ/cm²) was irradiated onto a piece of the foamable film obtained in the step (1) of Example 8-1 via a mask with a dot pattern. The dot pattern used was such that diameter and density of the dots gradually increased therein. Thereafter, the foamable film was subjected to the hot-press process together with a polycarbonate resin sheet (thickness of 550 µm), which was transparent resin, as in the step (4) of Example 8-1. The thickness of the overall light guiding section of the obtained light guiding body was equivalent to that of the light guiding section in Example 8-1 and was 600 µm. This was with a proviso that the thickness of the parts formed from foam was 50 µm among the overall thickness.

When cell diameter and cell-occupying area ratio of the obtained light guiding body were determined as in Example 8-1, inclined distribution was observed where dot-like sections gradually increased from the incident plane to the opposite surface thereof in the parts formed from foam. The maximum cell diameter was 0.1 µm and the cell-occupying area ratio was 4.5% in dot-like sections and they were almost uniform in dots. On the other hand, no foam structure was observed in the resin sheet. The cell-occupying area ratio of the light guiding section as a whole varied from 0% to 0.38%.

In addition, when uniformity of light emission was evaluated in a manner which was almost the same as that in the step (6) of Example 8-1, uniform light emission was observed even without the superposition of a light diffusing sheet and the pattern of dot-like sections was not visually recognized. In other words, a thin light guiding body having a thickness of 0.6 mm and also emits light uniformly without causing brightness nonuniformity even without the presence of a light diffusing sheet which was difficult to achieve with the conventional techniques could readily be obtained.

Note that in the light guiding body of the present Example, incident light is refracted by dot-like materials having different refractive indices and outputted according to Snell's law.

The results of Examples 8-1 to 8-6 described so far are summarized in Table 3.

**[Table 3]**

| | | Ex. 8-1 | Ex. 8-2 | Ex. 8-3 | Ex. 8-4 | Ex. 8-5 | Ex. 8-6 |
|---|---|---|---|---|---|---|---|
| Light scattering particles for guiding light | | Cell (foamed) | Cell (foamed) | Cell (foamed) | Cell (foamed) | Cell (foamed) | Cell (foamed) |
| Thickness of light guiding body | Incident plane-side | 0.6 mm | 0.6 mm | 0.6 mm | 0.6 mm | 0.6 mm | 0.6 mm |
| | Opposite surface-side | 0.6mm | 0.6mm | 0.6mm | 0.6 mm | 0.6mm | 0.6mm |
| External shape of light guiding section | | Flat sheet-like | Flat sheet-like | Flat sheet-like | Flat sheet-like | Flat sheet-like | Flat sheet-like |
| Optical functional part integrated with light guiding section | | None | Light reflecting section | Prism section | Prism section and light reflecting section | None | None |
| Cell diameter (µm) and cell-occupying area ratio (%) | Light guiding layer | Maximum 0.3 µm | Maximum 0.3 µm | Maximum 0.3 µm | Maximum 0.3 µm | Maximum 0.3 µm | Maximum 0.1 µm in dot sections |
| (Cell distribution state from vicinity of light source to distant direction | | Varies from 0 to 16% (inclined distribution) | Varies from 0 to 16% (inclined distribution) | Varies from 0 to 16% (inclined distribution) | Varies from 0 to 16% (inclined distribution) | Varies from 0 to 16% (inclined distribution) | 4.5% in dot sections |
| | Light reflecting layer | - | 0.4 µm | - | 0.4 µm | - | - |
| | | | 52% (uniform distribution) | | 52% (uniform distribution) | | |
| | Prism layer | - | - | No cells | No cells | - | - |
| Light emission uniformity (without using light diffusing sheet) | | Favorable | Favorable | Favorable | Favorable | Favorable | Favorable |

### Industrial Applicability

According to the present invention, in the microcellular foams having a cell diameter of 10 µm or less and even in those having a cell diameter of 1 µm or less, control of foam structure and shape in microcellular foams, which have a desired thickness, shape, and foam structure, can be readily and stably achieved. In addition, according to the highly-functional microcellular foams, which are obtained due to the present invention and are not conventionally available, materials can readily be produced in which, in addition to effects to suppress reductions in mechanical strength of foams, effects to reduce sink/warp of fabricated products by injection molding or the like, and effects to improve dimensional stability, characteristics of foams such as light reflection/scattering characteristics, dielectric characteristics, and insulating characteristics are flexibly controlled. Thus, great contributions are made in various fields such as packaging materials or construction materials, medical materials, materials for electrical apparatus, electronic information materials, and automobile materials. Moreover, in accordance with cell distribution, in each of the above usage, it is possible to provide highly-functional foams in which various foaming characteristics are distributed. Furthermore, light guiding bodies used in liquid-crystal display apparatuses or the like can be produced in a simple producing step.

## Claims

1. A foam production method comprising:
an irradiating step in which an active energy beam is irradiated onto a foamable composition containing an acid generating agent, which generates an acid, or a base generating agent, which generates a base, due to action of an active energy beam, and containing a compound which has a decomposable/foamable functional group, which decomposes and eliminates one or more kinds of volatile substances with a low boiling point by reacting with the acid or base; and
a subsequent foaming step in which the foamable composition is foamed under controlled pressure in a temperature region where the volatile substances with low boiling point are decomposed and being eliminated.

2. The foam production method according to Claim 1 further comprising a forming step, in which the foamable composition is formed, at the same time as the foaming step or therebefore at an arbitrary time point.

3. The foam production method according to Claim 2, wherein the forming step is carried out before the irradiating step.

4. The foam production method according to Claim 2, wherein the forming step is carried out between the irradiating step and foaming step.

5. The foam production method according to Claim 2, wherein the foaming step and forming step are carried out at the same time.

6. A foam production method comprising:
a foaming step in which an active energy beam is irradiated onto a foamable composition containing an acid generating agent, which generates an acid, or a base generating agent, which generates a base, due to action of an active energy beam, and containing a compound which has a decomposable/foamable functional group, which decomposes and eliminates one or more kinds of volatile substances with a low boiling point by reacting with the acid or base in a temperature region where the volatile substances with a low boiling point are decomposed and being eliminated and in which the foamable composition is foamed under controlled pressure at the same time.

7. The foam production method according to any one of Claims 1 to 6 further comprising a cooling step while controlling the pressure after the foaming step.

8. A heterogeneous foam production method comprising the steps defined in Claim 3, wherein any one or more of the constituents below exhibit predetermined heterogeneous distribution;
(a) radiation energy imparted to a compact which is formed in a preforming step,
(b) thermal energy imparted to the compact in a foam forming step,
(c) concentration of decomposable/foamable functional group in the compact, and
(d) concentration of an acid generating agent or a base generating agent in the compact.

9. A light guiding body using a heterogeneous foam defined in Claim 8.
